(19) Europäisches Patentamt
European Patent Office
Office européen des brevets

(11) **EP 4 659 561 A2**

(12) **EUROPEAN PATENT APPLICATION**

(43) Date of publication:
**10.12.2025 Bulletin 2025/50**

(21) Application number: **25199486.9**

(22) Date of filing: **18.06.2020**

(51) International Patent Classification (IPC):
***A01D 34/81*** (2006.01)

(52) Cooperative Patent Classification (CPC):
**A01D 34/008; A01D 34/63; A01D 34/81;
A01D 75/20**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.06.2019 CN 201910523837
04.11.2019 CN 201921884636 U
17.04.2020 CN 202010307394**

(62) Document number(s) of the earlier application(s) in
accordance with Art. 76 EPC:
**20826655.1 / 3 987 914**

(71) Applicant: **Positec Power Tools (Suzhou) Co., Ltd.
Suzhou, Jiangsu 215123 (CN)**

(72) Inventors:
• **ZHAO, Fengli
Suzhou, 215123 (CN)**
• **DU, Jiang
Suzhou, 215123 (CN)**

• **ZHA, Xiahong
Suzhou, 215123 (CN)**
• **WANG, Biao
Suzhou, 215123 (CN)**
• **ZHOU, Xiaoqing
Suzhou, 215123 (CN)**
• **LIU, Bin
Suzhou, 215123 (CN)**

(74) Representative: **Kilburn & Strode LLP
Lacon London
84 Theobalds Road
Holborn
London WC1X 8NL (GB)**

Remarks:
•This application was filed on 01-09-2025 as a
divisional application to the application mentioned
under INID code 62.
•Claims filed after the date of filing of the application
(Rule 68(4) EPC).

(54) **AUTOMATIC LAWN MOWER**

(57)    An autonomous lawn mower includes: a housing, provided with a bottom shell, a movement module, a cutting mechanism with a cutting element, and a control module. The autonomous lawn mower further includes a protecting assembly provided with a protecting wall. In a horizontal direction, the protecting wall is disposed on an outer side of the cutting mechanism. The protecting assembly at least includes a movable protecting member. The protecting wall at least includes a movable protecting wall that is disposed at the movable protecting member and is located on the outer side of the cutting mechanism in the horizontal direction. When the cutting mechanism is at any cutting height and the movable protecting member is in a free state under no external force, a ground clearance of a lower end of the movable protecting wall is an initial distance. The initial distance remains less than M. 38 mm $\leq$ M $\leq$ 40 mm. The movable protecting member is movable in a vertical direction relative to the bottom shell under the action of an external force, to change the ground clearance of the lower end of the movable protecting wall.

FIG. 1

# Description

This application claims priority to Chinese patent applications with the following application dates and numbers: Application No. 201910523837.7 filed on June 18, 2019, Application No. 202010307394.0 filed on April 17, 2020, and Application No. 201921884636.1 filed on November 4, 2019. The entire content of each of these applications is incorporated herein by reference.

## TECHNICAL FIELD

The present invention relates to an autonomous lawn mower.

## BACKGROUND

With the continuous progress of computer technologies and artificial intelligence technologies, autonomous lawn mowers similar to intelligent robots have slowly begun to enter people's lives. An autonomous lawn mower can automatically mow and charge on a user's lawn without intervention of the user. Such an automatic working system requires no more effort in management after a single setup, freeing users from tedious and time-consuming chores such as cleaning and lawn maintenance.

An autonomous lawn mower automatically walks and cuts grass on a lawn, and includes a cutting element for cutting. A protecting member needs to be mounted outside the cutting element to block a person's finger, arm or the like to prevent the cutting element of the autonomous lawn mower from accidentally injuring the person's finger or arm. However, to meet the passability of the autonomous lawn mower, the protecting member of the autonomous lawn mower cannot be disposed excessively low. When the protecting member is disposed excessively close to the ground, the passability of the autonomous lawn mower is very poor. To meet the passability, the protecting member may fail to prevent a child's finger or arm from reaching into the autonomous lawn mower, and as a result children are very likely to be accidentally injured by the autonomous lawn mower.

Therefore, it is necessary to design an autonomous lawn mower with a new protecting assembly, to solve the foregoing problems.

## SUMMARY

To overcome the above disadvantages, the present invention adopts the technical scheme as follows: An autonomous lawn mower includes:

> a housing, provided with a bottom shell;
> a movement module, disposed below the housing, and configured to drive the autonomous lawn mower to move;
> a cutting mechanism, disposed at the housing to perform a cutting task at a predetermined cutting height, and including a cutting element configured to perform cutting; and
> a control module, configured to: autonomously control the movement module to drive the autonomous lawn mower to move, and autonomously control the cutting mechanism to perform a cutting task, where the autonomous lawn mower further includes a protecting assembly provided with a protecting wall, in a horizontal direction, the protecting wall is disposed on an outer side of the cutting mechanism, the protecting assembly at least includes a movable protecting member, the protecting wall at least includes a movable protecting wall that is disposed at the movable protecting member and is located on the outer side of the cutting mechanism in the horizontal direction, when the cutting mechanism is at any cutting height and the movable protecting member is in a free state under no external force, a ground clearance of a lower end of the movable protecting wall is an initial distance, the initial distance remains less than M, 38 mm ≤ M ≤ 40 mm, and the movable protecting member is movable in a vertical direction relative to the bottom shell under the action of an external force, to change the ground clearance of the lower end of the movable protecting wall.

Further, when the cutting mechanism is at any cutting height, a range of the initial distance is 15 mm to 35 mm.

Further, when the cutting mechanism is at any cutting height and the movable protecting member is subjected to the action of an external force, the movable protecting member is movable upward relative to the bottom shell, to increase a ground clearance of the movable protecting wall, and when the external force is removed, the movable protecting member is movable downward relative to the bottom shell, to make the ground clearance of the lower end of the movable protecting wall return to the initial distance.

Further, during adjustment of a height of the cutting mechanism from the lowest level to the highest level, the cutting mechanism is movable in the vertical direction relative to the movable protecting member.

Further, during adjustment of the height of the cutting mechanism, a distance between the lower end of the movable protecting wall and the ground remains unchanged.

Further, during upward movement of the movable protecting wall under the action of a force, a resistance for the movable protecting wall to move upward when the distance between the lower end of the movable protecting wall and the ground is greater than a preset grass safe lift height is greater than a resistance for the movable protecting wall to move upward when the distance between the lower end of the movable protecting wall and the ground is less than the preset grass safe lift height.

Further, the movable protecting wall includes at least one of a front movable protecting wall disposed in front of the cutting mechanism, a rear movable protecting wall disposed behind the cutting mechanism or lateral movable protecting walls disposed on two sides of the cutting mechanism.

Further, in the horizontal direction, a range of a minimum distance X between an outermost edge of the movable protecting wall and the cutting element is $X \geq 58$ mm.

Further, the movable protecting wall includes a main movable portion, the main movable portion includes an obstacle passage region located at an outermost edge of the main movable portion, and the obstacle passage region includes an inclined surface inclining from outside to inside and extending downward.

Further, the movable protecting wall further includes a locking portion formed by the main movable portion extending downward, the locking portion includes a safe locking region located at an outermost edge of the locking portion, a ground clearance of a lower end of the safe locking region is less than M, and the safe locking region is located on an outer side of an extension line of the obstacle passage region in the same radial direction as the safe locking region.

Further, the movable protecting wall includes a plurality of blocking protrusions that are disposed at the bottom of the movable protecting wall and are disposed at intervals in a circumferential direction, and when the movable protecting member is in a free state under no external force, a ground clearance of a lower end of each blocking protrusion is greater than or equal to M/2.

Further, the movable protecting wall further includes an upper blocking portion connected above the blocking protrusion, an outermost edge of the blocking protrusion and an outer edge of the upper blocking portion do not completely overlap, and a part of the blocking protrusion that does not overlap the outermost edge of the upper blocking portion is located on an inner side of a corresponding part of the outermost edge of the upper blocking portion.

Further, the blocking protrusion includes a safe locking region located at an outermost edge of the blocking protrusion, the safe locking region includes an inclined surface and/or a vertical surface, and when the safe locking region is an inclined surface inclining from outside to inside and extending downward, an angle by which the safe locking region inclines inward from a vertical plane in which an outermost end of the safe locking region is located is less than 15 degrees.

Further, a range of a height h of the blocking protrusion is $0 \text{ mm} < h \leq 80 \text{ mm}$ or $3 \text{ mm} \leq h \leq 20 \text{ mm}$; a range of a width M of the blocking protrusion is $0 \text{ mm} < m \leq 40 \text{ mm}$ or $0 \text{ mm} < m \leq 20 \text{ mm}$; and a range of a distance S between two adjacent blocking protrusions is $0 \text{ mm} < S \leq 40 \text{ mm}$ or $3 \text{ mm} \leq S \leq 25 \text{ mm}$.

Further, the movable protecting wall further includes a connecting protrusion that extends in the vertical direction and connects two adjacent blocking protrusions, the connecting protrusion partially concaves inward to make the connecting protrusion and the two adjacent blocking protrusions connected by the connecting protrusion together define a structure that has an interval on an outer side and is closed on an inner side.

Further, when the cutting mechanism is at any cutting height, a range of the initial distance remains less than or equal to M/2.

Further, during upward movement of the movable protecting wall under an external force to the highest point of a movable range of the movable protecting wall, a lower end of the blocking wall remains lower than the lowest point of the cutting element.

Further, the protecting assembly further includes a mechanism protecting member fixed relative to the cutting mechanism in the vertical direction, the mechanism protecting member includes a mechanism protecting wall located between the movable protecting wall and the cutting mechanism in the horizontal direction, the blocking wall further includes the mechanism protecting wall, and a lower end of the mechanism protecting wall remains lower than the lowest point of the cutting element.

Further, the housing includes a high position housing located outside the cutting mechanism in the horizontal direction, in a direction from outside to inside and within a range of M extending in a direction perpendicular to the direction from outside to inside, a distance between the high position housing and the ground remains greater than M, and in the horizontal direction, at least a part of the mechanism protecting wall is located between the high position housing and the cutting mechanism.

Further, the mechanism protecting wall includes a front mechanism protecting wall located in front of the cutting mechanism, lateral mechanism protecting walls located on two sides of the cutting mechanism, and a rear mechanism protecting wall located behind the cutting mechanism, and the front mechanism protecting wall, the rear mechanism protecting wall, and the lateral mechanism protecting walls together define the mechanism protecting wall that is circumferentially closed.

Further, bottommost portions in the 360-degree circumferential direction of the mechanism protecting wall are all lower than the lowest point of the cutting element.

Further, a range of a minimum distance between the movable protecting wall and the mechanism protecting wall in the horizontal direction is 2 mm to 30 mm or 2 mm to 8 mm.

Further, when the cutting mechanism is at any cutting height and the movable protecting wall moves upward under an external force to the highest point of the movable range of the movable protecting wall, the lower end of the movable protecting wall is lower than the lowest point of the cutting element.

Further, on at least one level of cutting height, during movement of the movable protecting member in the vertical direction under an external force, the lower end of the movable protecting wall is movable relative to the cutting mechanism in the vertical direction.

Further, the autonomous lawn mower further includes a limiting structure configured to limit a degree to which the movable protecting member and the cutting mechanism move relatively in the vertical direction.

Further, the limiting mechanism includes a cutting limiting portion and a protecting member limiting portion capable of abutting against and limiting each other, the cutting limiting portion and the cutting mechanism are relatively fixed in the vertical direction, the protecting member limiting portion and the movable protecting member are relatively fixed in the vertical direction, and when the cutting limiting portion and the protecting member abut against and limit each other, the cutting limiting portion is located above the protecting member limiting portion.

Further, in a non-height adjustment state, when the cutting mechanism is subjected to the action of an external force, the cutting mechanism is movable relative to the ground in the vertical direction, and on at least one level of cutting height, during upward movement of the movable protecting member under the external force, the movable protecting member first moves upward separately until the movable protecting member and the cutting mechanism limit each other, and then moves upward together with the cutting mechanism.

Further, the protecting assembly further includes a cutting protecting member fixed relative to the cutting mechanism in the vertical direction, in the horizontal direction, the cutting protecting member is disposed in the movable protecting member, a lower end of the cutting protecting member is lower than the lowest point of the cutting element, and in a non-height adjustment state, the cutting protecting member is movable relative to the bottom shell in the vertical direction together with the cutting mechanism under the action of an external force.

Further, the cutting mechanism includes a cutting deck configured to fix the cutting element, the cutting protecting member includes a cutting deck protecting member that is disposed below the cutting deck and is disposed around a central cavity, and a lower end of the cutting deck protecting member is lower than the lowest point of the cutting element.

Further, the autonomous lawn mower further includes a bendable flexible blocking member disposed at a bottom side of the housing, where in an advancing direction of the self-moving device, the blocking member is located on a front side and/or a rear side of the movement module, the blocking member includes a housing end fixed on the bottom side of the housing and a free end movable relative to the housing end under the action of an external force, the housing end and the movement module are disposed at intervals, and the free end is capable of abutting against and contacting the movement module under the action of an external force.

Further, the autonomous lawn mower further includes a cutting deck configured to mount the cutting element, and the cutting element is disposed above the cutting deck.

Further, during move of the autonomous lawn mower, when the movable protecting wall is subjected to the action of a force from outside to inside, a distance between the lower end of the movable protecting wall and the ground may be greater than or equal to M, where 38 mm $\leq$ M $\leq$ 40 mm.

Further, a distance range of movement of the lower end of the movable protecting wall in the vertical direction is 15 mm to 80 mm or 20 mm to 40 mm.

Further, the movable protecting wall includes a grass grinding end surface that is located at the lower end of the movable protecting wall and continuously extends in a circumferential direction.

Further, the movable protecting wall includes a vertical protecting wall extending in the vertical direction and a horizontal protecting wall that is located below the vertical protecting wall and extends in the horizontal direction, and at least one side of the horizontal protecting wall in a horizontal inside-outside direction protrudes from a corresponding side of the vertical protecting wall.

Further, the autonomous lawn mower further includes a protecting member upward guide mechanism configured to connect the movable protecting member and the housing, and when the movable protecting member is subjected to the action of a force from outside to inside, the protecting member upward guide mechanism allows the movable protecting wall to move upward.

Further, the upward guide mechanism includes at least one of a four-bar linkage, a two-bar linkage, a single-bar linkage or a chute.

Further, the autonomous lawn mower further includes a cutting upward guide mechanism configured to connect the cutting mechanism and the housing.

Further, the movable protecting member includes an upper protecting member and a lower protecting member, and when the lower protecting member is subjected to the action of an external force, the lower protecting member is movable relative to the upper protecting member in the vertical direction.

Further, the movable protecting member is disposed on an outer side of the housing and/or disposed between the cutting mechanism and the housing and/or is connected to a local portion of the housing.

Further, the movable protecting wall includes a front movable protecting wall disposed in front of the cutting mechanism, the protecting assembly further includes a rear movable protecting member provided with a rear movable protecting wall, the rear movable protecting wall is disposed behind the cutting mechanism, and when the rear movable protecting member is subjected to the action of an external force, a lower end of the rear movable protecting wall is relatively displaceable relative to the ground in the vertical direction.

Further, under the action of an external force, the movable protecting member and the rear movable protecting member are relatively independently movable.

Further, the rear movable protecting member includes a baffle with an end fixed to the housing, the baffle includes a fixed end fixed to the housing and a movable end rotatable around the fixed end under an external force.

Further, when the front movable protecting member is subjected to a vertically upward force, the front movable protecting member is movable in the vertical direction; and when the rear movable protecting member is subjected to a vertically upward force, the rear movable protecting member is not movable in the vertical direction.

Further, the movable protecting wall further includes lateral movable protecting walls disposed on two sides of the autonomous lawn mower, and the front movable protecting wall and the lateral movable protecting walls are connected to each other, so that the lateral movable protecting walls and the front movable protecting wall are synchronously movable in the vertical direction under the action of an external force.

Beneficial effects of the solutions are as follows: The protecting assembly provided with the protecting wall is disposed, so that while a child's finger, arm or the like is prevented from being accidentally injured, and the passability of the autonomous lawn mower is ensured.

**BRIEF** DESCRIPTION OF THE DRAWINGS

FIG. 1 is a three-dimensional diagram of an autonomous lawn mower according to an embodiment of the present invention.

FIG. 2 is a diagram of the autonomous lawn mower shown in FIG. 1 from another angle.

FIG. 3 is a diagram of the autonomous lawn mower shown in FIG. 1 from another angle.

FIG. 4 is a schematic state diagram of a protecting assembly of an autonomous lawn mower according to an embodiment of the present invention.

FIG. 5 is a schematic state diagram of a protecting assembly of an autonomous lawn mower according to an embodiment of the present invention.

FIG. 6 is a schematic state diagram of a protecting assembly of an autonomous lawn mower according to an embodiment of the present invention.

FIG. 7 is a schematic state diagram of a protecting assembly of an autonomous lawn mower according to an embodiment of the present invention.

FIG. 8 is a schematic state diagram of a protecting assembly of an autonomous lawn mower according to an embodiment of the present invention.

FIG. 9 is a schematic state diagram of a protecting assembly of an autonomous lawn mower according to an embodiment of the present invention.

FIG. 10 is a schematic diagram of a cutting mechanism and a protecting assembly of an autonomous lawn mower being located on the same side according to an embodiment of the present invention.

FIG. 11 is a schematic diagram of a cutting mechanism and a movable protecting member of an autonomous lawn mower according to an embodiment of the present invention.

FIG. 12 is a schematic state diagram of a protecting assembly of an autonomous lawn mower according to an embodiment of the present invention.

FIG. 13 is a schematic state diagram of a protecting assembly of an autonomous lawn mower according to an embodiment of the present invention.

FIG. 14 is a schematic state diagram of a protecting assembly of an autonomous lawn mower according to an embodiment of the present invention.

FIG. 15 is a schematic state diagram of a protecting assembly of an autonomous lawn mower according to an embodiment of the present invention.

FIG. 16 is a schematic diagram of a protecting assembly of an autonomous lawn mower according to an embodiment of the present invention.

FIG. 17 is a schematic diagram of a protecting assembly of an autonomous lawn mower according to an embodiment of the present invention.

FIG. 18 is a schematic diagram of a protecting assembly of an autonomous lawn mower according to an embodiment of the present invention.

FIG. 19 is a schematic diagram of a protecting assembly of an autonomous lawn mower according to an embodiment of the present invention.

FIG. 20 is a schematic diagram of a protecting assembly of an autonomous lawn mower according to an embodiment of the present invention.

FIG. 21 is a schematic state diagram of a protecting assembly of an autonomous lawn mower according to an embodiment of the present invention.

FIG. 22 is another schematic state diagram of the autonomous lawn mower shown in FIG. 21.

FIG. 23 is another schematic state diagram of the autonomous lawn mower shown in FIG. 21.

FIG. 24 is a schematic state diagram of a protecting assembly of an autonomous lawn mower according to an embodiment of the present invention.

FIG. 25 is a diagram of FIG. 24 from another angle.

FIG. 26 is a schematic diagram of a movable protecting member outermost edge according to an embodiment of the present invention.

FIG. 27 is a schematic diagram of an autonomous lawn mower according to an embodiment of the present invention.

FIG. 28 is another schematic state diagram of the autonomous lawn mower shown in FIG. 27.

FIG. 29 is another schematic state diagram of the autonomous lawn mower shown in FIG. 27.

FIG. 30 is a schematic diagram of an autonomous lawn mower according to an embodiment of the present invention.

FIG. 31 is another schematic state diagram of the autonomous lawn mower shown in FIG. 30.

FIG. 32 is another schematic state diagram of the autonomous lawn mower shown in FIG. 30.

FIG. 33 is a schematic diagram of an autonomous lawn mower according to an embodiment of the present invention.

FIG. 34 is a schematic elevated view of the autonomous lawn mower shown in FIG. 33. FIG. 34 is a schematic elevated view of the autonomous lawn mower shown in FIG. 33.

FIG. 35 is a schematic diagram of a movable protecting member according to an embodiment of the present invention.

FIG. 36 is a schematic diagram of an autonomous lawn mower according to an embodiment of the present invention.

FIG. 37 is a schematic state diagram of the movable protecting member shown in FIG. 36.

FIG. 38 is a schematic bottom view of the autonomous lawn mower shown in FIG. 36.

FIG. 39 is a schematic structural diagram of the movable protecting member shown in FIG. 36.

FIG. 40 is another schematic structural diagram of the movable protecting member shown in FIG. 36.

FIG. 41 is a schematic diagram of another arrangement manner of the movable protecting member in the autonomous lawn mower shown in FIG. 36.

FIG. 42 is a schematic diagram of still another arrangement manner of the movable protecting member in the autonomous lawn mower shown in FIG. 36.

FIG. 43 is a schematic diagram of a movable protecting member and a mechanism protecting member according to an embodiment of the present invention.

FIG. 44 is a schematic force diagram of the movable protecting member shown in FIG. 43 under a non-normal external force.

FIG. 45 is a schematic force diagram of the movable protecting member shown in FIG. 43 under a non-normal external force.

FIG. 46 is a schematic diagram of a movable protecting member with blocking protrusions and a mechanism protecting member according to an embodiment of the present invention.

FIG. 47 is a schematic force diagram of the movable protecting member shown in FIG. 46 under a non-normal external force.

FIG. 48 is a schematic force diagram of the movable protecting member shown in FIG. 46 under a non-normal external force.

FIG. 49 is a schematic force diagram of the movable protecting member shown in FIG. 46 under a non-normal external force when a distance between the movable protecting member and the ground is less than or equal to M/2.

FIG. 50 is a schematic force diagram of the movable protecting member shown in FIG. 46 under a non-normal external force when a distance between the movable protecting member and the ground is less than or equal to M/2.

FIG. 51 is a schematic diagram of a movable protecting member with connecting protrusions and a mechanism protecting member according to an embodiment of the present invention.

FIG. 52 to FIG. 54 are schematic diagrams of a state of grass when the movable protecting member shown in FIG. 51 encounters grass.

FIG. 55 is a partially enlarged view of FIG. 51.

FIG. 56 is a schematic diagram of a movable protecting member with connecting protrusions and a mechanism protecting member according to another embodiment of the present invention.

FIG. 57 is a schematic diagram of a single wheel of an autonomous lawn mower running over a child's arm according to an embodiment of the present invention.

FIG. 58 is a schematic diagram of an autonomous lawn mower having a blocking member according to an embodiment of the present invention.

FIG. 59 is a schematic diagram of an autonomous lawn mower having a cutting deck protecting member below a cutting deck according to an embodiment of the present invention.

FIG. 60 is a schematic diagram of an autonomous lawn mower according to an embodiment of the present invention.

FIG. 61 is a top view of the autonomous lawn mower shown in FIG. 60.

## DETAILED DESCRIPTION

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

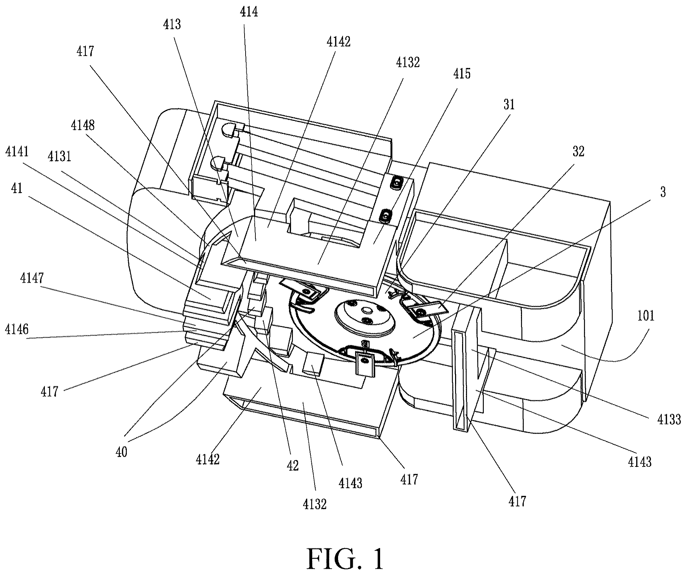

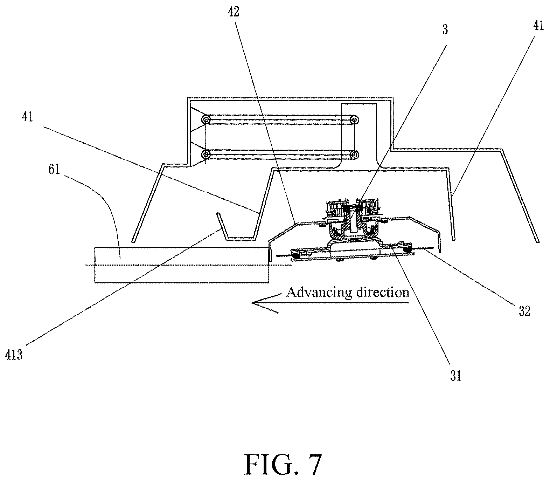

As shown in FIG. 1 to FIG. 34, the present invention provides an automatic working system, including: an autonomous lawn mower 1 that moves and works autonomously and a charging station configured to charge the autonomous lawn mower 1. The autonomous lawn mower 1 includes: a housing 10, provided with a bottom shell 101; a movement module 20, disposed below the housing 10, and configured to drive the autonomous lawn mower 1 to move; a cutting mechanism 3, configured to perform a cutting task at a predetermined cutting height; a power module, configured to supply power; a control module, configured to: automatically control the movement module to drive the autonomous lawn mower 1 to move, and autonomously control the cutting mechanism to perform a cutting task; and an energy module 5, configured to supply energy.

The cutting mechanism 3 is rotatably fixed below the housing 10. The cutting mechanism 3 includes a cutting deck 31 rotatably fixed below the housing 10, a plurality of cutting elements 32 fixed on the cutting deck 31, and a fastening member 33 configured to fix the cutting elements 32 on the cutting deck 31. In this embodiment, the cutting mechanism 3 further includes a rotating portion 36 rotatably fixed below the housing 10. The cutting deck 31 is fixed on the rotating portion 36, and is rotatable along with the rotating portion 36. The cutting elements 32 are cutting blades. The cutting blades are uniformly fixed at a circumference of the cutting deck 31 to rotate along with the cutting deck 31. In an embodiment, the cutting mechanism 3 includes three cutting blades. In another embodiment, a quantity of the cutting blades may be determined according to an actual case. For example, there are two or more than three cutting elements.

A height of the cutting mechanism 3 relative to the ground is adjustable, so that the autonomous lawn mower 1 can complete cutting at different heights during mowing. Specifically, there are a plurality of manners of adjusting the height of the cutting mechanism 3. In an embodiment, the autonomous lawn mower 1 further includes a height adjustment structure 6 configured to adjust the height of the cutting mechanism (height adjustment). When the autonomous lawn mower 1 needs to adjust a cutting height, the height adjustment mechanism 6 is operated. Driven by the height adjustment structure 6, the cutting mechanism 3 is vertically movable to implement adjustment of the height of the cutting mechanism 3, thereby implementing the adjustment of a grass cutting height. During adjustment of the cutting height from the lowest level to the highest level, the cutting mechanism 3 may be relatively movable in the vertical direction relative to a movable protecting member. For example, the cutting mechanism 3 is movable in the vertical direction relative to the housing 10. The cutting mechanism 3 moves relative to the ground in the vertical direction. The movable protecting member 41 does not move relative to the ground in the vertical direction. That is, an initial distance between a lower end of a movable protecting wall and the ground remains unchanged. A lowest state 411 of the movable protecting member 41 remains unchanged, to prevent the height adjustment from affecting the safety protection effect of the autonomous lawn mower 1. In this embodiment, during adjustment of the cutting height from the lowest level to the highest level, the initial distance between the lower end of the movable protecting wall and the ground remains unchanged. In another embodiment, during adjustment between some levels, the initial distance between the lower end of the movable protecting wall and the ground may remain unchanged. During adjustment between some levels, the initial distance between the lower end of the movable protecting wall and the ground changes. In another embodiment, the autonomous lawn mower 1 may adjust a distance between each cutting element 32 and the ground by vertically inverting the cutting deck 31 or replacing the cutting deck 31 with a new one to adjust the cutting height. In this embodiment, during adjustment of the cutting height, the movable protecting member 41 is not changed. That is, a position relationship between the movable protecting member 41 and the housing 10 is not changed. Instead, the cutting deck 31 is directly replaced. Certainly, in some embodiments, a height of the cutting mechanism 3 relative to the ground may remain fixed, and is unadjustable.

In a non-height adjustment state, the cutting mechanism 3 may be fixedly disposed relative to the housing or may be movably disposed relative to the housing. For example, the cutting mechanism 3 is movable relative to the housing in the vertical direction. When an external force is applied below the cutting mechanism 3, for example, when the cutting mechanism 3 encounters an upward external force applied to the cutting mechanism by an obstacle below, the cutting mechanism 3 is movable upward relative to the housing, to avoid the obstacle, thereby preventing the obstacle from hitting the blades and improving the passability.

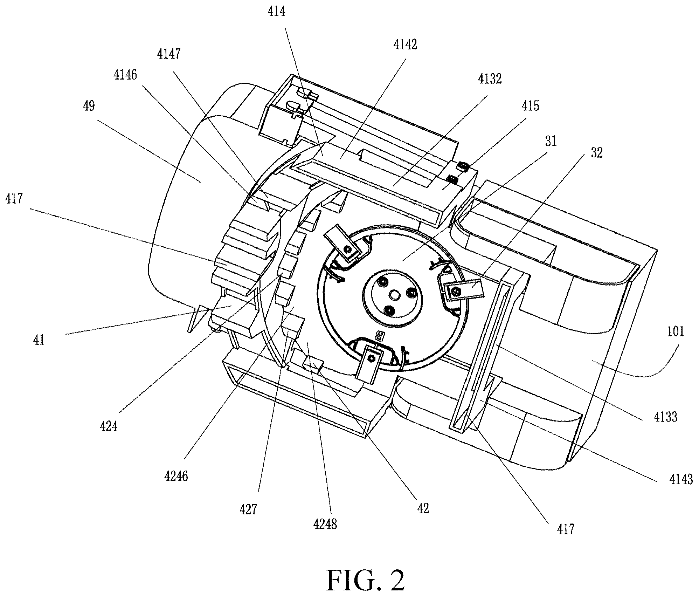

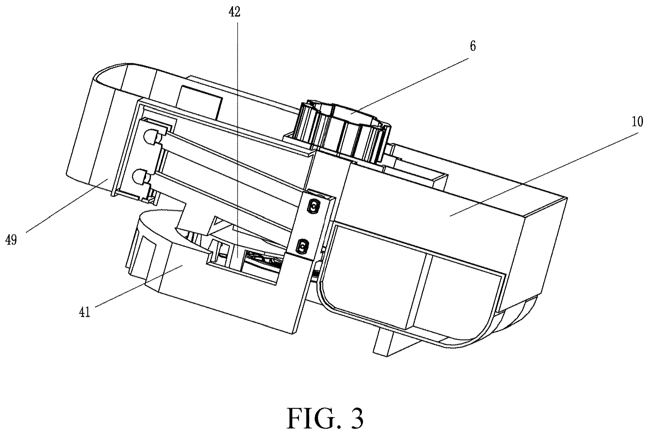

As shown in FIG. 2 and FIG. 3, the autonomous lawn mower 1 further includes a protecting assembly 4 provided with a protecting wall 40 for safety protection. In a horizontal direction, the protecting wall is disposed on an outer side of the cutting mechanism 3, to prevent a person from mistouching the cutting mechanism 3 from outside to inside, thereby protecting the person from accidental injury. The protecting assembly 4 at least includes the movable protecting member 41 provided with a movable protecting wall 414 for safety protection. The protecting wall at least includes the movable protecting wall 414 that is disposed at the movable protecting member 41 and is located on the outer side of the cutting mechanism 3 in the horizontal direction. During movement of the autonomous lawn mower 1, when the movable protecting wall 414 is subjected to the action of an appropriate external force, a distance between the lower end of the movable protecting wall 414 and the ground in the vertical direction is changeable, so that when the autonomous lawn mower 1 encounters an obstacle 62, the movable protecting wall 414 is subjected to the action of a sufficient external force, a distance between a movable protecting wall lower end 417 of the movable protecting member 41 and the ground can increase to quickly pass the obstacle, thereby improving the passability of the autonomous lawn mower 1. The foregoing lower end of the movable protecting wall 414 may also be referred to as the movable protecting wall lower end 417.

A maximum value M of the diameter of a child's arm is set. Regardless of a cutting height of the cutting mechanism 3, in other words, when the cutting mechanism 3 is at any cutting height and the protecting assembly 4 is in a free state under no external force, a distance between a lower end of the protecting assembly 4 and the ground is an initial distance, and the initial distance remains less than M, to prevent a child's arm from passing through the bottom of the movable protecting member 4 to enter near the cutting mechanism 3 of the autonomous lawn mower 1, thereby eliminating the risk of accidental injury by the cutting mechanism 3. Generally, a range of the maximum value M of a child's arm is 38 mm to 40 mm (including 38 mm and 40 mm). That is, 38 mm $\leq$ M $\leq$ 40 mm. A distance between the lower end of the protecting assembly 4 and the ground may be correspondingly set to 15 mm, 19 m, 25 mm, 35 mm, 37 mm, 39 mm or the like. Certainly, in another embodiment, the range of M may be adjusted according to an actual case. For example, to protect a thinner arm, M is set smaller. Alternatively, to protect a thicker arm, M is set larger. For example, M = 38 mm. That is, a distance between the lower end of the protecting assembly 4 and the ground remains less than 38 mm. The foregoing free state of the protecting assembly 4 refers to the state of the protecting assembly 4 when the autonomous lawn mower 1 is subjected to the action of no external force regardless of the cutting height of the cutting mechanism 3. When the protecting assembly 4 is in a free state, in a case that an arm with a diameter greater than M attempts to enter the autonomous lawn mower 1 from below the movable protecting member 4, the arm is blocked by the lower end of the protecting assembly 4, so that the arm is prevented from entering the movable protecting member 4. In an embodiment, a distance between the lower end of the protecting assembly 4 and the ground is within a range of 15 mm to 35 mm, so that the distance between the lower end of the protecting assembly 4 and the ground can prevent the entry of a child's arm, and the normal walking of the autonomous lawn mower on a lawn is not affected because the protecting assembly 4 is excessively close to the ground.

A distance between the movable protecting wall lower end 417 of the movable protecting member 41 and the ground may change in various manners. For example, the movable protecting member 41 is movable relative to the bottom shell in the vertical direction, to change a ground clearance of a lower end of the movable protecting wall. For example, the movable protecting member 41 is generally movable relative to the bottom shell in the vertical direction, to make the movable protecting wall generally movable relative to the ground in the vertical direction. Alternatively, the movable protecting member 41 is only partially movable relative to the bottom shell in the vertical direction, to make the distance between a part of the movable protecting wall and the ground changeable. Further alternatively, a distance between an upper end of the movable protecting member 41 and the ground is unchangeable, and the distance between the movable protecting wall lower end 417 and the ground is changeable. For example, the distance between the movable protecting wall lower end 417 and the ground may be generated in a manner such as rotation or deformation.

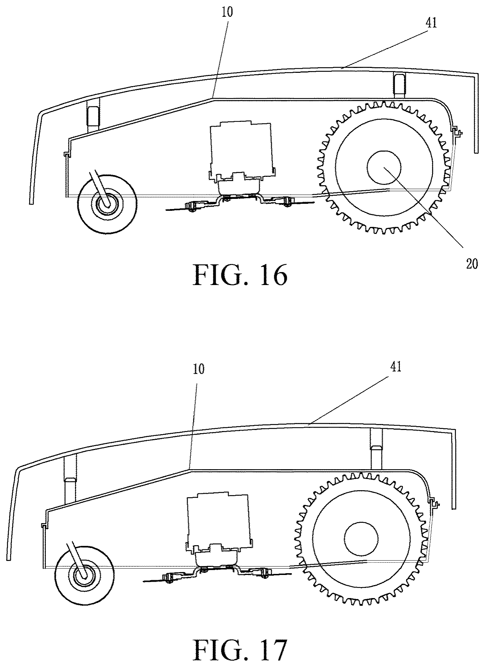

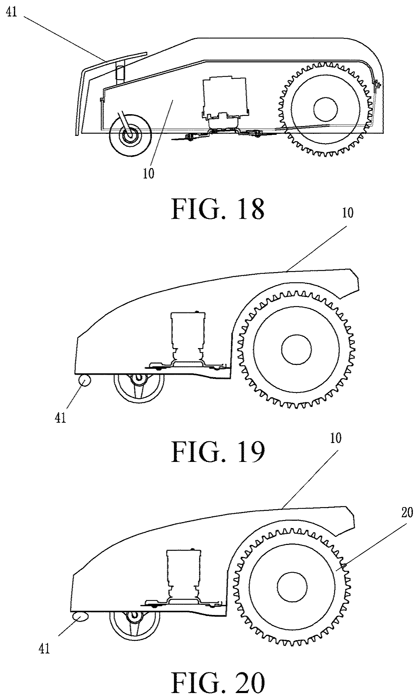

In an embodiment, as shown in FIG. 1 to FIG. 18, the bottom shell of the housing 10 is not movable relative to the ground in the vertical direction. The movable protecting member 41 is movable relative to the bottom shell of the housing 10 in the vertical direction, to make the movable protecting member movable relative to the ground in the vertical direction. Specifically, as shown in FIG. 1 to FIG. 3, the movable protecting member 41 may be disposed between the housing 10 and the cutting mechanism 3, and disposed independently of the housing 10. As shown in FIG. 16 and FIG. 17, the movable protecting member 41 is disposed outside the housing 10. The movable protecting member 41 is movable relative to the bottom shell of the housing 10 in the vertical direction. As shown in FIG. 16 and FIG. 17, the movable protecting member 41 may completely cover the housing 10, to form an upper cover of the autonomous lawn mower 1, or as shown in FIG. 18, the movable protecting member 41 may be disposed above a part of the housing 10, for example, disposed at an edge of the front, rear, side or the like of the housing 10.

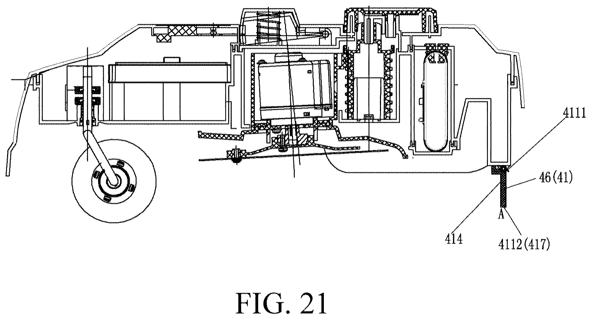

In another embodiment, the movable protecting member 41 may be fixed relative to the housing. The housing 10 is relatively changeable relative to the ground. For example, a connection form between the movement module and the housing 10 changes, to make the housing 10 change relative to the ground. In another embodiment, as shown in FIG. 19 and FIG. 20, the distance between the upper end of the movable protecting member 41 and the ground may be not changeable. The distance between the movable protecting wall lower end 417 and the ground is changed in a manner that the movable protecting member 41 deforms when touching an obstacle. In another embodiment, as shown in FIG. 21 to FIG. 23, the distance between the upper end of the movable protecting member 41 and the ground may be not changeable, and the upper end of the movable protecting member 41 is fixed relative to the housing 10. The movable protecting member 41 rotates around the upper end of the movable protecting member to implement changes of the distance between the movable protecting wall lower end 417 and the ground. In another embodiment, the movable protecting member 41 may implement a changeable distance between the movable protecting wall lower end 417 and the ground in other manners, which are not enumerated in this application.

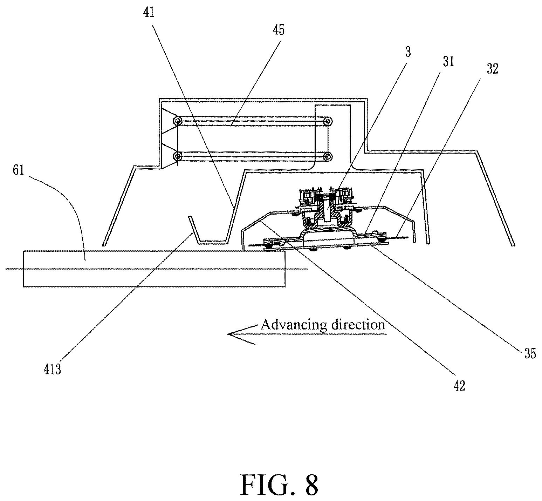

The cutting element 32 includes a cutting element lowest point 30 located at a lower position of the cutting element in the vertical direction. Regardless of a cutting height of the cutting mechanism 3, during movement, when the autonomous lawn mower 1 encounters a child's arm, for example, a test arm 61 with a diameter of M in FIG. 8, because in this case, the test arm 61 is equivalent to the obstacle 62, a force applied by the test arm to the movable protecting wall 414 is sufficient to make the movable protecting wall 414 move upward. When the movable protecting wall 414 is subjected to an external force and a movable protecting wall lower end moves upward, if the distance between the lower end of the protecting assembly 4 and the ground can be greater than or equal to M, for example, the distance between the movable protecting wall lower end 417, the ground can be greater than or equal to M, and the lower end of the protecting assembly 4 moves to be higher than the cutting element lowest point 30, when encountering a child's arm during movement, the autonomous lawn mower 1 directly runs over the arm, and the arm can directly pass through the protecting assembly 4 to enter near the cutting mechanism 3 and gets cut by the cutting element 32. In this embodiment, as shown in FIG. 8, FIG. 11, and FIG. 23, the movable protecting member 41 is in a free state. The movable protecting wall lower end 417 is lower than the cutting element lowest point. In a process that the movable protecting member 41 is subjected to a force applied from outside to inside and moves upward to the highest point of a movable range of the movable protecting member, a lower end of the blocking wall 40 of the protecting assembly 4 remains lower than the cutting element lowest point 30, so that when the autonomous lawn mower 1 encounters a child's arm (simulated by the test arm 61) during movement, even if the arm can pass through the protecting assembly 4 to enter near the cutting mechanism 3, because the lower end of the protecting wall 40 of the protecting assembly 4 remains lower than the cutting element lowest point 30, the test arm 61 can only be located below the cutting element 30 and is prevented from touching the cutting element 32, thereby avoiding cutting. Certainly, in another embodiment, it may be limited that the distance between the lower end of the blocking wall 40 of the protecting assembly 4 and the ground remains less than M. Regardless of the height of the cutting mechanism, in other words, no matter how the distance between the movable protecting wall lower end 417 and the ground changes when the cutting mechanism 3 is at any cutting height and the movable protecting member 41 is subjected to the action of an external force, specifically, it may be limited that the distance between the movable protecting wall lower end 417 and the ground remains less than M to limit an arm from entering the cutting mechanism 3 from below the protecting assembly 4 under any circumstances.

The lower end of the blocking wall 40 of the protecting assembly 4 remains lower than the cutting element lowest point 30. Therefore, the test arm 61 can only be located below the cutting element 30. FIG. 8 is a schematic diagram showing that a cutting height is greater than the diameter of a child's arm. In this case, a height between the cutting mechanism 3 and the ground is greater than the diameter of the child's arm. To further ensure safety, the cutting mechanism 3 further includes a cutting deck protecting member 35 disposed below a lower end of the cutting mechanism, a lower end of the cutting deck protecting member 35 has a smooth surface, thereby ensuring that when a child's arm enters under the cutting mechanism 3, the arm touches the smooth surface. Especially, when the autonomous lawn mower tilts, the cutting element 32 tilts accordingly, and a child's arm is blocked by the cutting deck protecting member 35 and may be prevented from touching the cutting element 32.

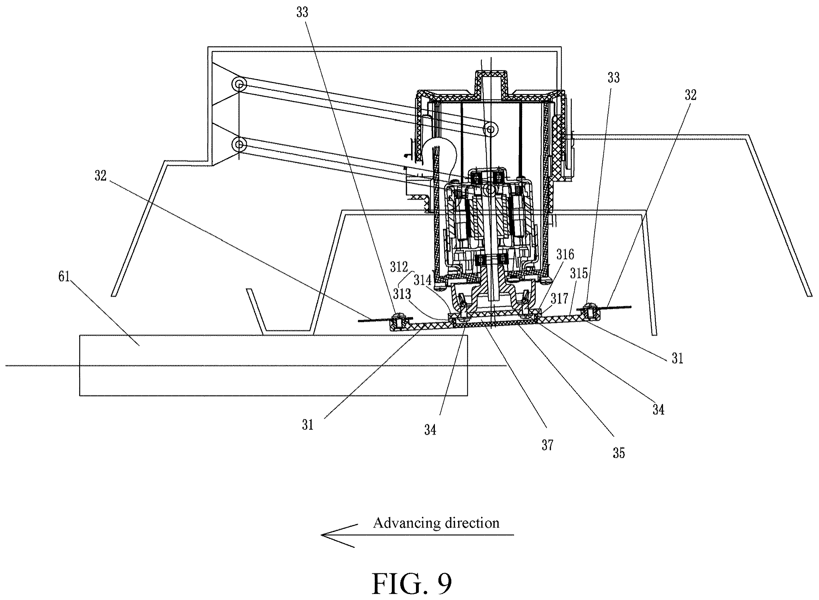

In an embodiment, as shown in FIG. 9, the cutting element 32 is disposed above the cutting deck 31. The cutting mechanism 3 further includes a fastening member 33 configured to fix the cutting elements 32 on the cutting deck 31. The fastening member 33 fixes the cutting elements 32 on the cutting deck 31 from top to bottom. The cutting mechanism 3 includes a fixing member 34 configured to fix the cutting deck 31 to the rotating portion 36 and a cutting deck protecting member 35 assembled below the cutting deck 31. A lower end of the cutting deck protecting member 35 has a smooth surface. An accommodating space 37 for accommodating the fixing member 34 is provided between the cutting deck protecting member 35 and the cutting deck 31. The fixing member 34 fixes the cutting deck 31 on the rotating portion 36 from bottom to top. The fixing member 34 is accommodated in the accommodating space 37, to prevent the fixing member 34 from being exposed below the cutting mechanism 3, to prevent the fixing member 34 made of metal from touching a child's arm along with the high-speed rotation of the rotating portion 36. As shown in FIG. 9, the cutting deck 31 includes a blade mounting portion 315 configured to be assembled with the cutting element 32, a rotating mounting portion 316 that is located in the middle of the blade mounting portion and is configured to be assembled with the rotating portion 36, and a cutting deck connecting portion 317 configured to connect the blade mounting portion 315 and the rotating mounting portion 316. A height of the rotating mounting portion 316 is greater than a height of the blade mounting portion 315. The rotating mounting portion 316, the cutting deck connecting portion 317, and the cutting deck protecting member 35 define the accommodating space 37. The cutting deck 31 and the cutting deck protecting member 35 are separately provided with fixed connection structures 312 that are fixedly connected to each other. Each fixed connection structure 312 includes a first snap structure 313 and a second snap structure 314 that are snapped to each other. The first snap structure 313 and the second snap structure 314 are respectively disposed on the cutting deck connecting portion 317 and the cutting deck protecting member 35. The lower end of the cutting deck protecting member 35 and the lower end of the cutting deck 31 may be located in the same plane, so that the cutting mechanism 3 has a complete surface, to make the bottom of the cutting mechanism 3 smoother, thereby achieving a better safety protection effect. Certainly, in another embodiment, the cutting deck protecting member 35 and the cutting deck 31 may be not located in the same plane. Instead, only the lower end of the cutting deck protecting member 35 or the cutting deck 31 is used as the lower end of the cutting mechanism 3, as long as the lower ends of the cutting deck protecting member 35 and the cutting deck 31 have smooth surfaces.

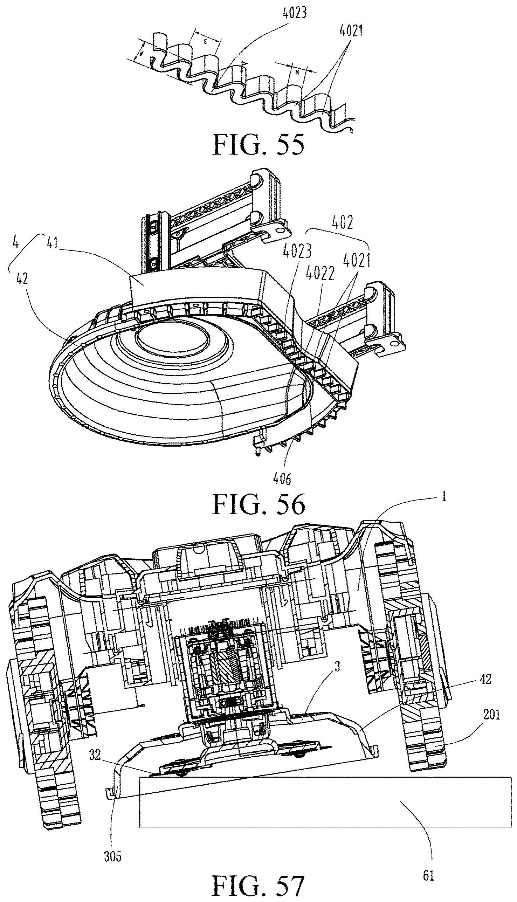

In another embodiment, a cutting protecting member 305 may be added. In an inside-outside direction of the horizontal direction of the autonomous lawn mower, the cutting protecting member 305 is disposed in the movable protecting member. A lower end of the cutting protecting member is lower than the lowest point of the cutting element. As shown in FIG. 57, the cutting protecting member 305 may be a mechanism protecting member 42 disposed in the movable protecting member, as shown in FIG. 57. Certainly, the cutting protecting member may be in another form, for example:

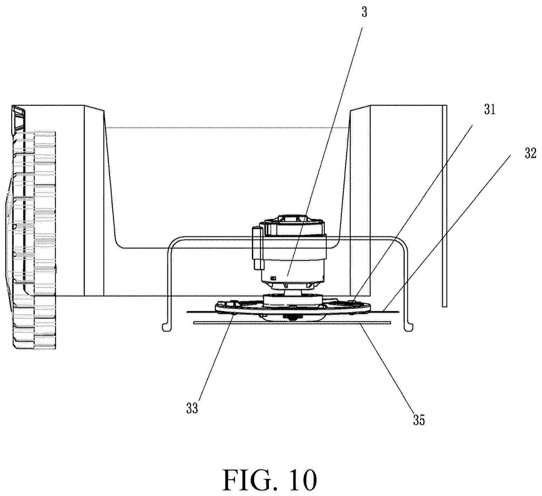

As shown in FIG. 10, in an embodiment, the cutting protecting member 305 includes a cutting deck protecting member 35 that is assembled below the cutting mechanism 3 and has a smooth bottom. An accommodating cavity 39 for accommodating the fastening member 33 is provided between the cutting deck 31 and the cutting mechanism 3. The cutting element 32 is partially accommodated in the accommodating cavity 39. In the foregoing embodiment, for example, the cutting deck protecting member 35 is assembled below the cutting mechanism 3. In another embodiment, the cutting deck protecting member 35 may be partially integrally formed with the cutting mechanism 3, for example, is directly formed by partially extending from the cutting mechanism 3.

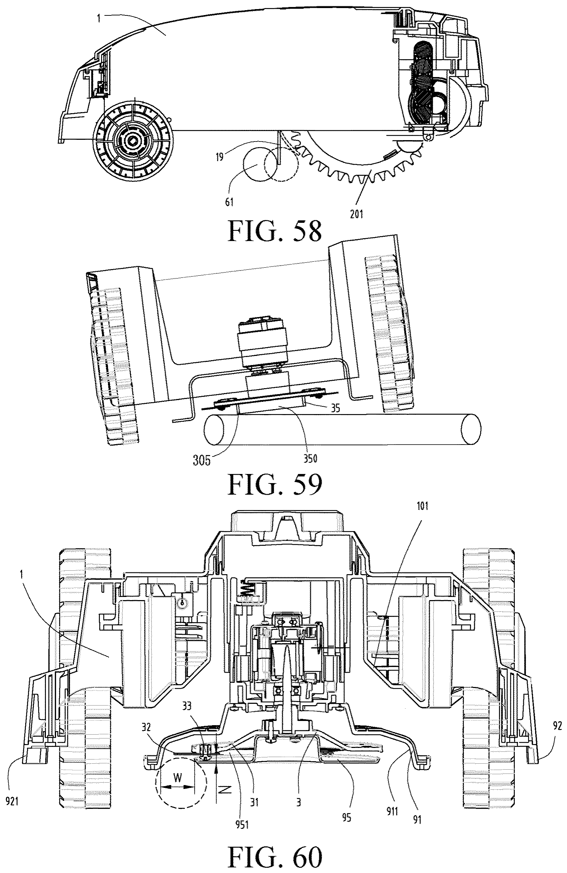

As shown in FIG. 59, in another embodiment, the cutting protecting member 305 includes a cutting deck protecting member 35 disposed at the cutting deck 31 and protruding downward from the surface of the cutting deck 31. The lower end of the cutting deck protecting member 35 is lower than the lowest point of the cutting element 32. The cutting element 32 may rotate around an axis of the cutting element to form a self-rotating area. When an angle by which a rotational axis of the cutting deck deviates from the direction of gravity does not exceed a predetermined angle, an extension line of a connecting line between the lowest point of the cutting deck protecting member 35 and the lowest point of a drive wheel at a higher position of the two drive wheels does not intersect a self-rotating area formed when the cutting element rotates to any position relative to the rotational axis. The predetermined angle falls within a range of 30 degrees to 60 degrees. When the angle by which the rotational axis of the cutting deck deviates from the direction of gravity does not exceed the predetermined angle, the extension line of the connecting line between the lowest point of the cutting deck protecting member 35 and the lowest point of a drive wheel at a higher position of the two drive wheels does not intersect the lower surface of the cutting deck. The predetermined angle falls within a range of 30 degrees to 60 degrees.

The cutting deck 31 has a lower surface facing downward. The cutting element 32 is rotatably mounted on the lower surface, and can extend from an outer edge of the cutting deck 31. The cutting deck protecting member 35 is disposed on a lower surface of the cutting deck 31 or protrudes downward from the lower surface of the cutting deck 31. The largest outer diameter of the cutting deck protecting member 35 is less than the largest outer diameter of the cutting element 32. The cutting deck protecting member 35 is disposed around a central cavity 350. The central cavity 350 forms an opening facing downward at the lower end of the cutting deck protecting member 35. As shown in FIG. 59, the cutting deck protecting member 35 may be a hollow annular structure disposed below the cutting deck 31. The hollow annular structure may be directly formed by protruding downward from the lower surface of the cutting deck 31, or may be assembled as a separate part on the lower surface of the cutting deck 31. Cut grass enters the central cavity 350. Because the central cavity 350 has an opening facing downward, grass does not deposit in a protruding portion, to ensure smooth rotation of the cutting deck. The cutting deck protecting member 35 and the cutting deck 31 are coaxially disposed. A lower end surface of the cutting deck protecting member 35 is an annular plane. Further, regardless of a side toward which the cutting deck 31 inclines, the cutting deck protecting member 35 may separate the cutting element 321 and a child's arm, thereby providing an adequate cutting prevention effect. In another embodiment, the cutting deck protecting member 35 may have another structure, for example, a plurality of structures of an arc shape, a columnar shape or another shape that are disposed at intervals surrounding the central cavity 350. A range of a height by which the cutting deck protecting member 35 exceeds downward from the cutting element is 2 mm to 30 mm.

For ease of description, the cutting deck protecting member 35 in the foregoing embodiments may also be directly referred to as the cutting protecting member 305.

In the foregoing embodiment, to further avoid that a child's arm may enter the cutting mechanism 3 when the autonomous lawn mower 1 tilts, the cutting protecting member 305 and the cutting mechanism are fixed to each other in the vertical direction, and in a non-height adjustment state, the cutting protecting member is movable relative to the bottom shell in the vertical direction together with the cutting mechanism 3 under the action of an external force, so that as shown in FIG. 59, when a child's arm enters the movable protecting member 41, the cutting protecting member 305 is subjected to a force applied by the child's arm and drives the cutting mechanism 3 to move upward together, to further prevent the child's arm from touching the cutting element.

In the foregoing embodiment, to further ensure safety, when the cutting protecting member 305 is subjected to a force and drives the cutting mechanism 3 to move upward, the cutting protecting member 305 and the cutting mechanism 3 may drop after a delay, for example, pause at the peak for a particular time before dropping to return to the original position, to avoid that due to excessively fast drop, the cutting mechanism drops before the autonomous lawn mower has moved past the child's arm and accidentally injures the child's arm. Specifically, a delay mechanism configured to control a reset speed of the cutting mechanism 3 may be disposed in the autonomous lawn mower to implement the delay. The delay mechanism may be a damping apparatus, an electromagnet or the like.

Specifically, a plurality of manners may be used to implement that the lower end of the blocking wall 40 of the protecting assembly 4 remains lower than the cutting element lowest point 30. For example, in an embodiment, during upward movement of the movable protecting member 41 under a force, the upward movement of the movable protecting member 41 is limited, so that the movable protecting wall lower end 417 remains located at the cutting element lowest point 30. In another embodiment, the movable protecting member 41 and the cutting mechanism 3 may be synchronously movable, so that the distance between the movable protecting wall lower end 417 and the cutting element lowest point 30 is unchangeable, to implement that the movable protecting wall lower end 417 remains located at the cutting element lowest point 30. In another embodiment, the mechanism protecting member 42 with a lower end that remains lower than the cutting element lowest point 30 may be added to implement that the lower end of the blocking wall 40 of the protecting assembly 4 remains lower than the cutting element lowest point 30.

An example in which the mechanism protecting member 42 with a lower end that remains lower than the cutting element lowest point 30 is added is used below for detailed description. In this embodiment, the protecting assembly 4 further includes the mechanism protecting member 42 provided with a mechanism protecting wall 424. In the horizontal direction, the mechanism protecting wall 424 of the autonomous lawn mower is disposed between the cutting mechanism 3 and the movable protecting wall. The protecting wall 40 includes the movable protecting wall and the mechanism protecting wall 424. The mechanism protecting member 42 is fixed relative to the cutting mechanism 3. The cutting mechanism 3 may move or not move relative to the housing according to a case. When the cutting structure 3 moves relative to the housing, the mechanism protecting member 42 moves accordingly. When the cutting mechanism 2 does not move relative to the housing, the mechanism protecting member 42 also does not move accordingly. In this embodiment, the mechanism protecting member 42 is completely fixed relative to the cutting mechanism 3 and cannot move in any direction. Certainly, in another embodiment, the mechanism protecting member 42 may be only fixed relative to the cutting mechanism 3 in the vertical direction, and the mechanism protecting member and the cutting mechanism are movable in directions other than the vertical direction. The mechanism protecting member 42 includes the mechanism protecting wall 424 for protection. The cutting mechanism 3 includes the cutting element lowest point 30 located at the lower position of the cutting mechanism in the vertical direction. In the vertical direction, the mechanism protecting member 42 is fixed relative to the cutting mechanism 3. That is, in the vertical direction, relative positions of the mechanism protecting member 42 and the cutting mechanism 3 are unchangeable. The lower end of the mechanism protecting wall 424 of the mechanism protecting member 42, that is, the mechanism protecting wall lower end 427, remains lower than the cutting element lowest point 30, to ensure that the lower end of the protecting wall 40 remains lower than the cutting element lowest point 30, to prevent a child's arm from being run over by the autonomous lawn mower 1.

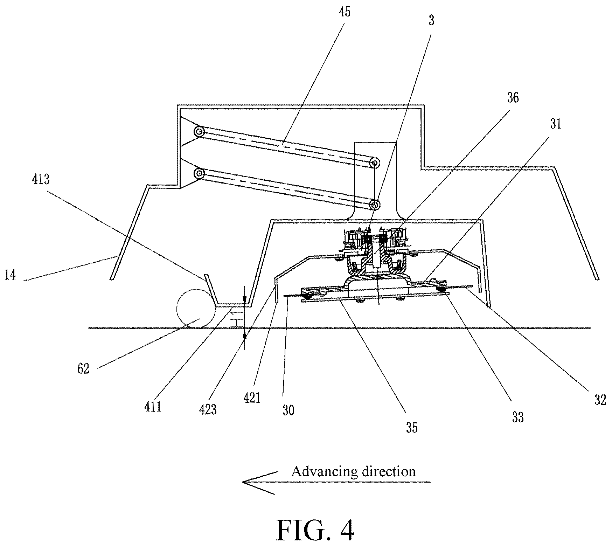

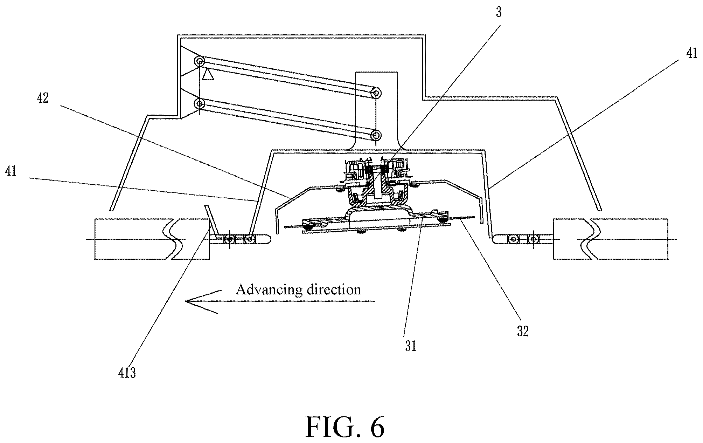

As shown in FIG. 4 and FIG. 6, in the horizontal direction, the mechanism protecting member 42 is located between the cutting mechanism 3 and the movable protecting member 41. A minimum spacing between the movable protecting member 41 and the mechanism protecting member 42 in the horizontal direction is 2 mm to 30 mm, so that during upward movement, the movable protecting member 41 does not interfere with the mechanism protecting member 42. In an embodiment, a minimum distance between the movable protecting member 41 and the mechanism protecting member 42 is 2 mm to 8 mm, while it is ensured that the movable protecting member 41 and the mechanism protecting member 42 do not interfere with each other in a movement process of the movable protecting member 41, the spacing between the movable protecting member 41 and the mechanism protecting member 42 is reduced, so that the overall structure of the autonomous lawn mower 1 is more compact.

The mechanism protecting member 42 includes the mechanism protecting wall 424 and a fixed connection wall 425 configured to connect the mechanism protecting wall 424 and the housing 10. In the vertical direction, the mechanism protecting wall 424 is fixed relative to the cutting deck 31. That is, relative positions of the mechanism protecting wall 424 and the cutting deck 31 in the vertical direction are unchangeable. The mechanism protecting wall 424 includes: a plurality of fixed protecting teeth 4246, a plurality of fixed grass inlets 4247 located between two adjacent fixed protecting teeth 4246, and a connecting portion 4248 configured to connect adjacent fixed protecting teeth 4246. A width of each fixed grass inlet 4247 is 1 to M, and a width of each fixed protecting tooth 4246 is 1 mm to 20 mm, so that while grass can enter, it is avoided that a child's arm passes through the mechanism protecting member 41 through the fixed grass inlet 4247 to touch the cutting mechanism 3. Because the fixed grass inlet 4247 is excessively wide, an effective length of the fixed protecting teeth 4246 is reduced. In an embodiment, a width of each fixed grass inlet 4247 is 10 mm to 25 mm, so that while the effective length of the fixed protecting teeth 4246 is ensured to avoid that a child's arm enters the mechanism protecting member 42 through the fixed grass inlet 4247. During movement of the autonomous lawn mower 1, an appropriate amount of grass enters the cutting mechanism 3 through the fixed grass inlet 4247, to avoid that an excessively small amount of grass enters to cause a phenomenon such as low working efficiency or grass clogging. A width of each fixed protecting tooth 4146 is 4 mm to 10 mm. While the rigidity of the fixed protecting teeth 4246 is improved, it is avoided that the width of the fixed protecting tooth 4246 is excessively large to cause grass clogging. In an embodiment, the movable protecting member 41 also includes a plurality of movable protecting teeth 4146, a plurality of grass inlets 4147 located between two adjacent movable protecting teeth 4146, and a connecting portion 4148 configured to connect adjacent movable protecting teeth 4146. In an advancing direction of the self-moving device 1, the fixed grass inlets 4247 and the movable grass inlets 4147 are correspondingly disposed longitudinally, so that grass may linearly pass through the movable grass inlets 4147 and the fixed grass inlets 4247 in sequence, to avoid jamming of grass. The fixed protecting teeth 4246 and the movable protecting teeth 4146 are separately distributed on the outer side of the cutting mechanism 3 along a circumference, to form safety protection on the outer side of the cutting mechanism 3.

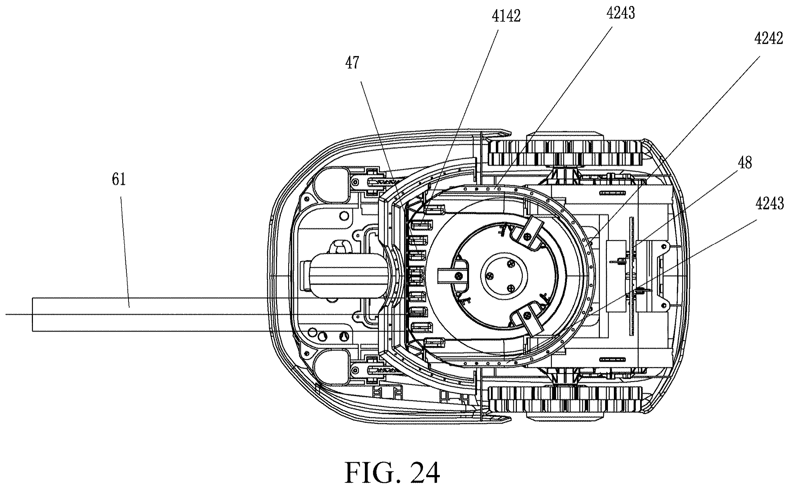

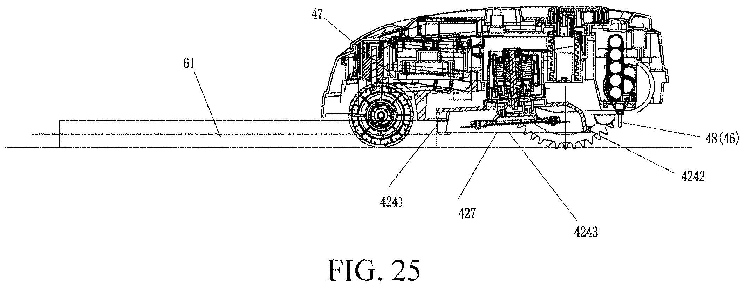

As shown in FIG. 24 and FIG. 25, in the advancing direction of the autonomous lawn mower 1, the mechanism protecting wall 424 includes a front mechanism protecting wall 4241 located in front of the cutting mechanism 3, lateral mechanism protecting walls 4243 located on two sides of the cutting mechanism, and a rear mechanism protecting wall 4242 located behind the cutting mechanism. Lower ends 427 of the front mechanism protecting wall 4241, the rear mechanism protecting wall 4242, and the lateral mechanism protecting walls 4243 are all lower than the cutting element lowest point 30.

In this embodiment, to ensure that a child's arm cannot touch the cutting element 30 when entering in any direction, the mechanism protecting wall may be disposed all around the mechanism protecting member 42. That is, as shown in FIG. 24 and FIG. 25, in the advancing direction of the autonomous lawn mower 1, the front mechanism protecting wall 4241, the rear mechanism protecting wall 4242, and the lateral mechanism protecting walls 4243 together define the mechanism protecting wall that is circumferentially closed. The lower ends of the front mechanism protecting wall 4241, the rear mechanism protecting wall 4242, and the lateral mechanism protecting walls 4243 are all lower than the cutting element lowest point 30. In this embodiment, bottommost portions in the 360-degree circumferential direction of the mechanism protecting wall are all lower than the cutting element lowest point 30. In another embodiment, the bottommost portions in the 360-degree circumferential direction of the mechanism protecting wall may be at least partially higher than the cutting element lowest point, at least partially lower than the cutting element lowest point, and lengths by which portions higher than the cutting element lowest point continuously extend toward in the circumferential direction are all less than M, to prevent the entry of a child's arm. In another embodiment, the mechanism protecting wall 424 includes at least one of the front mechanism protecting wall 4241 located in front of the cutting mechanism 3, the lateral mechanism protecting walls 4243 located on two sides of the cutting mechanism, and the rear mechanism protecting wall 4242 located behind the cutting mechanism.

In an embodiment, as shown in FIG. 1, the mechanism protecting wall 424 includes at least one of the front mechanism protecting wall 4241 located in front of the cutting mechanism 3 and the lateral mechanism protecting walls 4243 located on two sides of the cutting mechanism, to avoid that a child's arm enters near the cutting mechanism 3 from front or rear to get cut. Because a direction in which an external force is applied when a force from outside to inside from the rear of the autonomous lawn mower 1 is applied to the movable protecting wall is opposite to a direction (from inside to outside) in which the obstacle 62 moves relative to the autonomous lawn mower 1 when the autonomous lawn mower 1 moves forward, the applied force from outside to inside may be distinguished from that of the obstacle 62. For example, a resistance from outside to inside on the movable protecting wall 414 during upward movement may be limited in the rear of the autonomous lawn mower 1 to stop the movable protecting wall lower end 417 in the rear of the autonomous lawn mower 1 from moving upward or stop the movable protecting wall lower end from moving upward to exceed the cutting element lowest point 30 to protect a child's arm from injury. Because a direction in which a force from outside to inside in the front of the autonomous lawn mower 1 is applied is the same as the direction in which the obstacle 62 moves relative to the autonomous lawn mower 1, directions in which external forces from outside to inside applied on two sides of the autonomous lawn mower are not completely opposite to the direction in which the obstacle 62 moves relative to the autonomous lawn mower 1. The applied force from outside to inside cannot be distinguished from that of the obstacle 62. Therefore, in an embodiment, the front mechanism protecting wall 4241 and/or the lateral mechanism protecting walls 4243 may be added in the front and on two sides of the autonomous lawn mower 1.

As shown in FIG. 1 to FIG. 3, the housing 10 includes a high position housing 49 located outside the cutting mechanism 3 in the horizontal direction. In a direction from outside to inside (in the horizontal direction) and within a range of an extension M in a direction perpendicular to the direction from outside to inside, a distance between the high position housing 49 and the ground remains greater than M. In this case, a child's arm may reach near the cutting elements 32 from below the high position housing 49 to get cut. Therefore, in the horizontal direction, in other words, in an inside-outside direction of the autonomous lawn mower, at least a part of the mechanism protecting wall 424 is located between the high position housing 49 and the cutting mechanism 3, to avoid that a child's arm reaches near the cutting elements 32 from below the high position housing 49 to get cut.

In another embodiment, different implementations may be selected according to movement manners of the movable protecting member 41 to implement that the lower end of the protecting assembly 4 remains lower than the cutting element lowest point 30.

An example in which the movable protecting member 41 is movable in the vertical direction relative to the bottom shell of the housing 10 under the action of an external force to change the ground clearance of the movable protecting wall lower end is used below for detailed description.

As shown in FIG. 1 to FIG. 3, the movable protecting member 41 includes: a plurality of movable protecting walls 414 configured to block a user's arm or finger or another foreign object and a movable connecting wall 415 configured to connect the movable protecting walls and the housing. The movable protecting wall 414 includes at least one of a front movable protecting wall 4141 disposed in front of the cutting mechanism 3, lateral movable protecting walls 4142 disposed on two sides of the cutting mechanism 3 or a rear movable protecting wall 4143 disposed behind the cutting mechanism 3. In this embodiment, for example, the movable protecting wall 414 includes the front movable protecting wall 4141, the lateral movable protecting walls 4142, and the rear movable protecting wall 4143. The front movable protecting wall 4141, the lateral protecting movable protecting walls 4142, and the rear movable protecting wall 4143 may be completely or partially connected to each other to form a whole, and are then connected to the housing 10 by the movable connecting wall 415. The front movable protecting wall 4141, the lateral movable protecting walls 4142, and the rear movable protecting wall 4143 may be not connected to each other, and are separately connected to the housing 10 by the movable connecting wall 415. The front movable protecting wall 4141, the lateral movable protecting walls 4142, and the rear movable protecting wall 4143 may be directly formed by extending from the movable connecting wall 415, or may be separately formed, and are then assembled on the movable connecting wall 415. The movable protecting wall 414 includes a plurality of movable protecting teeth 4146 and a plurality of movable grass inlets 4147 located between two adjacent movable protecting teeth 4146. As shown in FIG. 1, in an embodiment, only the front movable protecting wall 4141 is provided with a plurality of movable protecting teeth 4146 and the movable grass inlets 4147, so that when the autonomous lawn mower 1 moves forward, grass can enter the cutting mechanism 3 through the movable grass inlets 4147 without being blocked by the movable protecting teeth 4146. In another embodiment, the rear movable protecting wall 4143 and the lateral movable protecting walls 4142 may be correspondingly provided with a plurality of movable grass inlets 4147, to avoid grass grinding. A width of the movable grass inlets 4147 is 1 to M, and a width of the movable protecting teeth 4146 is 1 mm to 20 mm, so that while grass can enter, it is avoided that a child's arm passes through the movable protecting member 41 through the movable grass inlets 4147, to touch the cutting mechanism 3. Because the movable grass inlets 4147 is excessively wide, an effective length of the movable protecting teeth 4146 is reduced. In an embodiment, a width of the movable grass inlets 4147 is 10 mm to 25 mm, so that while the effective length of the movable protecting teeth 4146 is ensured, it is avoided that a child's arm passes through the movable protecting member 41 through the movable grass inlets 4147. During movement of the autonomous lawn mower 1, an appropriate amount of grass enters the cutting mechanism 3 through the movable grass inlet 4147, to avoid that an excessively small amount of grass enters to cause a phenomenon such as low working efficiency or grass clogging. A width of the movable protecting teeth 4146 is 4 mm to 10 mm. While the rigidity of the movable protecting teeth 4146 is improved, it is avoided that the width of the movable protecting teeth 4146 is excessively large to cause grass clogging.

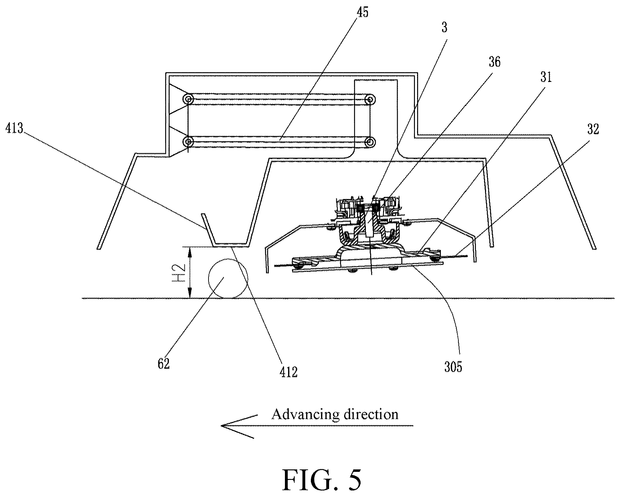

In the vertical direction, the movable protecting member 41 is movable relative to the bottom shell 101 of the housing 10, and the movable protecting wall 414 is also movable relative to the bottom shell of the housing 10, so that when the autonomous lawn mower 1 encounters an obstacle 62 within a particular range, the movable protecting wall 414 of the movable protecting member 41 can move upward to avoid the obstacle 62, thereby ensuring adequate passability of the autonomous lawn mower. In this embodiment, the movable protecting member 41 may generally move upward relative to the bottom shell 101 under the action of an external force applied by an obstacle, so that ground clearances of all points on the lower surface of the movable protecting wall are all increased, and the autonomous lawn mower can generally pass the obstacle quickly, thereby greatly improving the overall passability of the autonomous lawn mower. The movable protecting member 41 has a lowest state 411 and a highest state 412 within a movable range. The lowest state 411 means that during move of the autonomous lawn mower. The movable protecting member 41 is located at the lowest position of a space in which the movable protecting member is movable in the vertical direction. The highest state 412 means that during move of the autonomous lawn mower, the movable protecting member is at the highest position of a movable space in in the vertical direction. It should be noted that the lowest position and the highest position both define a range in which the movable protecting member 41 is movable under a naturally encountered external force or an external force in the same direction as a naturally applied external force during movement of the autonomous lawn mower. For example, the movable protecting member 41 is subjected to an external force applied by the obstacle or the buoyancy applied to the movable protecting member by grass. A case in which a downward external force is manually and forcefully applied to the movable protecting member 41 to make the movable protecting wall move downward is not included. FIG. 4 is a schematic diagram showing that the movable protecting member 41 is in the lowest state 411 in the movable range of the movable protecting member. FIG. 5 is a schematic diagram showing that the movable protecting member 41 is in the highest state 412 in the movable range of the movable protecting member. When the movable protecting member 41 is in the lowest state 411 of the movable protecting member, the distance between the movable protecting wall lower end 417 and the ground is H1. When the movable protecting member 41 is in the highest state 412 of the movable protecting member, the distance between the movable protecting wall lower end 417 and the ground is H2. When the autonomous lawn mower 1 moves on a planar lawn or the autonomous lawn mower moves on a lawn with the obstacle 62 of a height less than or equal to H1, the movable protecting member 41 is in the lowest state 411. When the height of the obstacle 62 is greater than H1 and less than H2, the movable protecting member 41 is subjected to the action of a force applied to the obstacle 62 and moves upward to quickly pass the obstacle 62.

In this embodiment, the movable protecting member 41 includes a free state. The free state refers to a state that the movable protecting member 41 is in when the autonomous lawn mower 1 is subjected to the action of no external force at a cutting height corresponding to the movable protecting member. At different cutting heights, free states of the movable protecting member 41 may be the same. That is, the adjustment of the height of the cutting mechanism 3 does not affect the free state of the movable protecting member 41. Certainly, in another embodiment, the free state of the movable protecting member 41 is susceptible to height adjustment.

However, to avoid that a child's arm enters from below the movable protecting member 41 when the autonomous lawn mower 1 is in a still state, it needs to be ensured that at any cutting height, when the movable protecting member 41 is in the free state, an initial distance H0 between the movable protecting wall lower end 417 and the ground remains less than M. In the foregoing embodiment, it is set that M is 38 mm. That is, the initial distance between the movable protecting wall lower end 417 and the ground remains less than 38 mm. Certainly, the initial distance between the movable protecting wall lower end 417 and the ground preferably remains less than 38 mm. In another embodiment, M may be between 38 mm and 40 mm (including 38 mm and 40 mm). Correspondingly, the distance between the movable protecting wall lower end 417 and the ground only needs to remain less than M. For example, when M is 40 mm, the distance between the movable protecting wall lower end 417 and the ground remains less than 40 mm. For example, in all the following embodiments, the initial distance between the movable protecting wall lower end 417 and the ground remains less than 38 mm.

In an embodiment, the initial distance between the movable protecting wall lower end 417 and the ground is within a range of 15 mm to 35 mm, so that a distance between the protecting member 41 and the ground can prevent the entry of a child's arm, and it is avoided that the normal walking of the autonomous lawn mower on a lawn is affected because the movable protecting wall 414 is excessively close to the ground. The ground clearance of the movable protecting wall lower end 417 may be further limited within a range of 19 mm to 30 mm. In one aspect, it is limited that the ground clearance is greater than 19 mm, and the ground clearance of the movable protecting wall lower end 417 is increased, to improve the passability. In another aspect, it is limited that the ground clearance is less than 30 mm to make a difference between the ground clearance and the diameter of a child's arm greater than a particular value, to keep a particular safety allowance, thereby ensuring that when the autonomous lawn mower tilts or is in another special working condition, a child's finger is prevented from entry. Certainly, the ground clearance of the movable protecting wall lower end 417 may be set to another range, for example, a range of 15 mm to 25 mm.

In another embodiment, the initial distance between the movable protecting wall lower end 417 and the ground remains less than 19 mm, that is, remains less than the radius of a child's arm, so that it is not easy for a child's finger to enter the cutting mechanism 3 from below the movable protecting wall lower end 417.

Specifically, a safe distance value may be preset. The safe distance value is less than or equal to M. For example, the safe distance value is 40 mm, 38 mm, 19 mm, 15 mm to 35 mm, 19 mm to 30 mm or 15 mm to 25 mm. Regardless of a cutting height of the cutting mechanism 3, in other words, when the cutting mechanism 3 is at any cutting height and the movable protecting member 41 is in the free state, the initial distance H0 between the movable protecting wall lower end 417 and the ground remains less than the safe distance value. In this embodiment, the cutting mechanism 3 may be movable relative to the movable protecting member 41 during adjustment of the cutting height of the cutting mechanism 3, to implement that when the movable protecting member 41 is in the free state, the initial distance H0 between the movable protecting wall lower end 417 and the ground remains less than the safe distance value.

As shown in FIG. 4, when the movable protecting member 41 is in the lowest state 411 of the movable protecting member, the distance H1 between the movable protecting wall lower end 417 and the ground is less than M, to avoid that a child's arm enters the cutting mechanism 3 from the bottom of the movable protecting member 41 and is accidentally injured by the cutting mechanism 3. As shown in FIG. 4, when the movable protecting member 41 is in the free state, that is, when the autonomous lawn mower 1 is in a state under the action of no external force, the movable protecting member 41 is in the lowest state 411 of the movable protecting member. Regardless of a cutting height of the cutting mechanism 3, when the movable protecting member 41 is in the free state, the movable protecting member 41 remains in the lowest state 411 of the movable protecting member. That is, the distance H0 between the movable protecting wall lower end 417 and the ground when the movable protecting member 41 is in a free state is the same as the distance H1 between the movable protecting wall lower end 417 and the ground when the movable protecting member 41 is in the lowest state 411 of the movable protecting member. For example, when the autonomous lawn mower 1 is in an unmovable state or moves on a lawn with no resistance, or the autonomous lawn mower moves on a lawn with the obstacle 62 of a height less than or equal to H1, the movable protecting member 41 is in the lowest state 411. In the lowest state 411, the distance H1 between the movable protecting wall lower end 417 and the ground is less than M. In a case that an arm with a diameter greater than or equal to M attempts to enter the autonomous lawn mower 1 from below the movable protecting member 41, the arm is blocked by the movable protecting wall 414, so that the arm is prevented from entering the movable protecting member 41. In an embodiment, the distance H1 between the movable protecting wall lower end 417 and the ground is within a range of 15 mm to 25 mm, so that a distance between the movable protecting member 41 and the ground can prevent the entry of a child's arm, and the normal walking of the autonomous lawn mower on a lawn is not affected because the movable protecting wall 414 is excessively close to the ground. In another embodiment, the distance between the movable protecting wall lower end 417 and the ground remains less than 19 mm, so that it is avoided that a child's arm enters the cutting mechanism 3 from below the movable protecting wall lower end 417.

A movable distance by which the movable protecting member 41 moves upward in the vertical direction under an external force is not less than 15 mm, and a specific range of the distance by which the movable protecting member can move upward may be 15 mm to 80 mm, so that the movable protecting member 41 can avoid most obstacles 62. After the lower end of the movable protecting wall moves upward, the distance between the lower end of the movable protecting wall and the ground may be greater than M, to avoid that the passability of the autonomous lawn mower is limited because a child's arm needs to be blocked. In an embodiment, as shown in FIG. 4 to FIG. 6, the autonomous lawn mower 1 includes an upward guide mechanism connecting the housing 10 and the movable protecting member 41, for example, a parallel four-bar linkage structure. When the movable protecting member 41 is subjected to the action of a force from outside to inside, the upward guide mechanism guides to allow the movable protecting member 41 to move in the vertical direction. The upward guide mechanism connecting the movable protecting member 41 may also be referred to as a protecting member upward guide mechanism 45. When the cutting mechanism 3 is at any cutting height and the movable protecting member 41 is subjected to the action of an external force, the movable protecting member moves upward relative to the bottom shell 101, to increase the ground clearance of the movable protecting wall. When the external force is removed. The movable protecting member 41 is movable downward relative to the bottom shell 101, to make the ground clearance of the lower end of the movable protecting wall return to the initial distance. Specifically, it may be implemented through gravity that the movable protecting member 41 automatically returns to a position at which the movable protecting member is in a free state, or a restoration mechanism may be added. For example, a spring makes the movable protecting member return to a position at which the movable protecting member is in a free state. Because during rotation, the protecting member upward guide mechanism 45 may drive the movable protecting member 41 to move in the vertical direction and drive the movable protecting member 41 to move in the horizontal direction. If a displacement in the horizontal direction is excessively large, the movable protecting member may interfere with the housing 10 or another part in the horizontal direction, so that the movement of the movable protecting member 41 in the horizontal direction may be reduced. In this embodiment, the distance by which the movable protecting member 41 is vertically movable is limited to 20 mm to 40 mm, so that it is for the best to select that the protecting member upward guide mechanism 45 rotates near the horizontal direction, to reduce a movement range of the protecting member in the horizontal direction. In another embodiment, the movable protecting member 41 may be connected to the housing 10 by another structure to implement the movement of the movable protecting member in the vertical direction, for example, by a structure such as a four-bar linkage, a two-bar linkage, a single bar or a chute.

In an embodiment, a grass safe lift height is preset. During upward movement of the movable protecting wall 414 under an external force, a resistance for the movable protecting wall 414 to move upward when the distance between the movable protecting wall lower end 417 and the ground is greater than the preset grass safe lift height is greater than a resistance for the movable protecting wall 414 to move upward when the distance between the movable protecting wall lower end 417 and the ground is not greater than the preset grass safe lift height. A grass lift force applied to the autonomous lawn mower 1 by grass when the autonomous lawn mower 1 is placed still on a lawn is greater than the resistance for the movable protecting wall 414 to move upward when the distance between the movable protecting wall lower end 417 and the ground is not greater than the preset grass safe lift height, and is less than the resistance for the movable protecting wall 414 to move upward when the distance between the movable protecting wall lower end 417 and the ground is greater than the preset grass safe lift height. Therefore, when the autonomous lawn mower 1 is placed still on a lawn, the grass lift force can only lift the movable protecting wall lower end 417 to a height from the ground being not greater than the preset grass safe lift height, but cannot lift the movable protecting wall lower end to a distance from the ground being greater than the grass safe lift height, to avoid that when the autonomous lawn mower 1 is placed still on a lawn, the movable protecting wall 414 is lifted by grass to the grass safe lift height and a child's arm enters the cutting mechanism 3 from below the movable protecting wall 414. In this embodiment, the preset grass lift height is less than 38 mm, to avoid entry of a child's arm. In an embodiment, the preset grass lift height is within a range of 15 mm to 25 mm, so that the distance between the protecting member 41 and the ground can prevent the entry of a child's arm, and it is avoided that the normal walking of the autonomous lawn mower on a lawn is affected because the movable protecting wall 414 is excessively close to the ground. Certainly, the preset grass lift height may be alternatively set to be less than 19mm, to avoid the entry of a child's finger.

In another embodiment, a grass lift force applied to the autonomous lawn mower 1 by grass when the autonomous lawn mower 1 moves is greater than an upward grass lift force on the movable protecting wall 414 by grass when the autonomous lawn mower 1 is in a still state. The resistance for the movable protecting wall 414 to move upward when the distance between the movable protecting wall lower end 417 and the ground is greater than the preset grass safe lift height is greater than an upward grass lift force applied to the movable protecting wall 414 by grass when the autonomous lawn mower 1 is in a still state, and is greater than a grass lift force applied to the autonomous lawn mower 1 by grass when the autonomous lawn mower 1 moves. That is, a grass lift force applied to the autonomous lawn mower 1 by grass when the autonomous lawn mower 1 moves is greater than the resistance for the movable protecting wall 414 to move upward when the distance between the movable protecting wall lower end 417 and the ground is not greater than the preset grass safe lift height is less than the resistance for the movable protecting wall 414 to move upward when the distance between the movable protecting wall lower end 417 and the ground is greater than the preset grass safe lift height. Therefore, in a movement process of the autonomous lawn mower 1 on a lawn, the grass lift force can only lift the movable protecting wall lower end 417 to a height from the ground being not greater than the preset grass safe lift height, but cannot lift the movable protecting wall lower end to a distance from the ground being greater than the grass safe lift height, to avoid that when the autonomous lawn mower 1 moves on a lawn, the movable protecting wall 414 is lifted by grass to the grass safe lift height and a child's arm enters the cutting mechanism 3 from below the movable protecting wall 414. In this embodiment, the preset grass lift height is less than M, to avoid entry of a child's arm with a diameter of M. In an embodiment, the preset grass lift height is within a range of 15 mm to 25 mm, so that the distance between the protecting member 41 and the ground can prevent the entry of a child's arm, and the normal walking of the autonomous lawn mower on a lawn is not affected because the movable protecting wall 414 is excessively close to the ground. Certainly, the preset grass lift height may be alternatively set to be less than 19 mm, to avoid the entry of a child's finger.

In the horizontal direction, a minimum distance X between an outermost edge of the movable protecting wall 414 and a part of the cutting mechanism 3 closest to the movable protecting wall is greater than 58 mm. Generally, the minimum distance X between the outermost edge of the movable protecting wall 414 and a part of the cutting mechanism 3 closest to the movable protecting wall is a minimum distance between the outermost edge of the movable protecting wall 414 and the cutting element 30 in a process that the cutting deck drives the cutting element 30 to rotate. In this embodiment, the minimum distance X is 58 mm to 200 mm. Because the diameter of a finger is relatively small, the finger may still enter from the bottom of the movable protecting member 41 in parallel to touch the cutting mechanism 3. In this embodiment, the minimum distance X between the outermost edge of the movable protecting wall 414 and a part of the cutting mechanism 3 closest to the movable protecting wall is 58 mm to 200 mm. Because lengths of fingers of most children are less than 58 mm, in this embodiment, fingers of most children can be effectively prevented from entering the cutting mechanism 3 from the bottom of the movable protecting member 41 and being accidentally injured by the cutting mechanism 3. In an embodiment, the minimum distance X between the outermost edge of the movable protecting wall 414 and a part of the cutting mechanism 3 closest to the movable protecting wall is 63 mm to 75 mm, so that while it is ensured that a child's finger cannot touch the cutting mechanism 3, a horizontal distance between the movable protecting member 41 and the cutting mechanism 3 is limited, to improve the compactness of the overall structure of the autonomous lawn mower 1, making the autonomous lawn mower 1 small and lightweight. A movable protecting wall outermost edge 413 is an outermost part of the movable protecting wall 414 that a user's arm or finger can reach. As shown in FIG. 1, the movable protecting wall outermost edge 413 includes a front outermost edge 4131 located at a front edge of the front movable protecting wall 4141, a lateral outermost edge 4132 located at an outer side edge of the lateral movable protecting walls 4142, and a rear-end outermost edge 4133 located at a rear edge of the rear movable protecting wall 4143. The movable protecting wall outermost edge 413 may be a flat surface, a curved surface, an irregular surface or the like.

As shown in FIG. 1, FIG. 4, FIG. 6, and FIG. 26, the outermost edge of the movable protecting wall 414, that is, the movable protecting wall outermost edge 413 includes an obstacle passage region 4135. The obstacle passage region 4135 includes an inclined surface inclining from outside to inside and extending downward. The obstacle passage region 4135 is high outside and low inside. When an obstacle 62 collides with the movable protecting wall outermost edge 413 from outside to inside, the obstacle 62 generates a force perpendicular to the outermost edge 4131 of the movable protecting member 41, that is, generates an upward inclining force. The upward inclining force generates an upward force component, to make the movable protecting member 41 move upward to quickly pass the obstacle 62.

The front-end outermost edge 4131 of the movable protecting wall 414 includes the foregoing obstacle passage region 4135. The obstacle passage region 4135 includes an inclined surface inclining from outside to inside (from front to rear) and extending downward. In the advancing direction of the autonomous lawn mower, the inclined front-end outermost edge 4131 is high in the front and low in the rear. When the autonomous lawn mower 1 automatically walks and encounters an obstacle 62, the movable protecting member 41 collides with the obstacle 62. The obstacle 62 generates a force perpendicular to the front-end outermost edge 4131 of the movable protecting member 41, that is, generates an upward inclining force. The upward inclining force generates an upward force component, to make the movable protecting member 41 move upward as shown in FIG. 5 to avoid an obstacle 62, to implement that while the autonomous lawn mower 1 avoids that a child's finger or arm touches the cutting mechanism 3, the passability of the autonomous lawn mower is improved. The front-end outermost edge 4131 may be an inclined flat surface, a curved surface or the like.

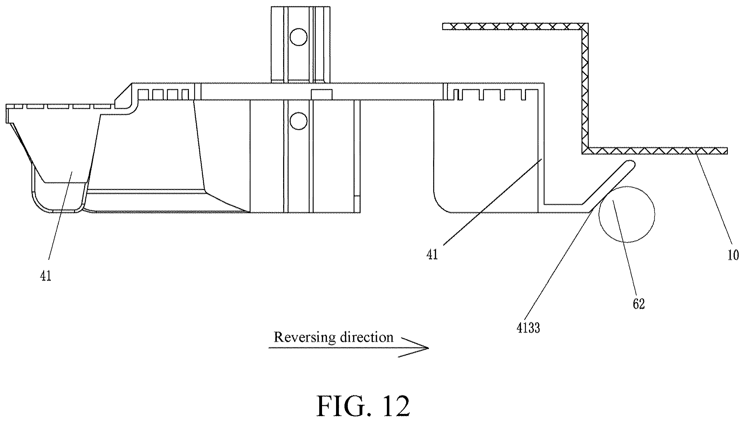

As shown in FIG. 12, in an embodiment, the rear-end outermost edge 4133 of the movable protecting wall 414 inclines from outside to inside (from rear to front) and extends downward. In the advancing direction of the autonomous lawn mower 1, the inclined rear-end outermost edge 4133 is low in the front and high in the rear. When the autonomous lawn mower 1 moves backward, if colliding with an obstacle 62, the obstacle 62 generates a force perpendicular to the rear-end outermost edge 4133 of the movable protecting member 41, that is, generates an upward inclining force. The upward inclining force generates an upward force component, to make the movable protecting member 41 move upward, to avoid an obstacle 62, to implement that while the autonomous lawn mower 1 avoids that a child's finger or arm touches the cutting mechanism 3, the passability is improved when the autonomous lawn mower moves backward. The rear-end outermost edge 4133 may be an inclined flat surface, a curved surface or the like. Similarly, the lateral outermost edge 4132 of the movable protecting wall 414 may also be disposed inclining outward and extending upward, so that when turning to either side, the autonomous lawn mower 1 quickly passes the obstacle, thereby improving the passability when the autonomous lawn mower turns.

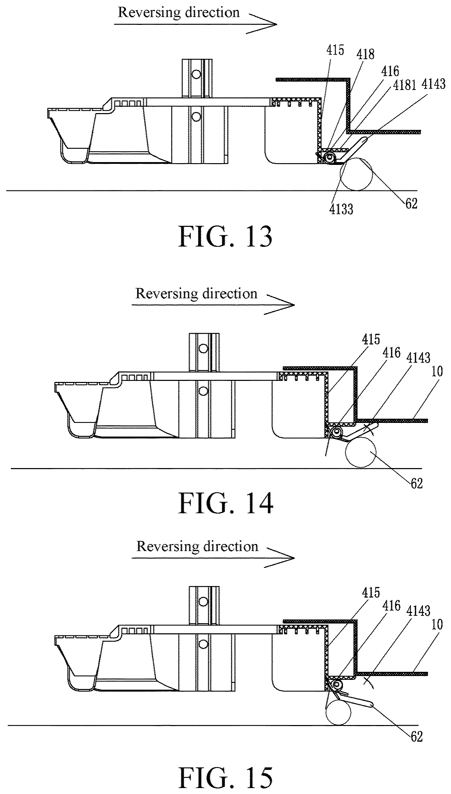

As shown in FIG. 13, the rear movable protecting wall 4143 of the movable protecting wall 414 is assembled on the movable connecting wall 415. The autonomous lawn mower 1 includes a limiting mechanism 418 and a reset structure 416. In this embodiment, the reset structure 416 is an elastic member configured to connect the movable connecting wall 415 and the rear movable protecting wall 4143, for example, a torsion spring. The limiting mechanism 418 is a limiting portion 4181. In another embodiment, the limiting mechanism 418 and the reset structure 416 may be in another form. In a case that the autonomous lawn mower 1 moves normally, the rear movable protecting wall 4143 is subjected to the action of an elastic force of the elastic member and the action of the limiting portion 4181, so that the rear movable protecting wall is kept at the position as shown in FIG. 13. As shown in FIG. 13, when the autonomous lawn mower 1 moves backward and the rear outermost edge 4133 of the rear movable protecting wall 4143 collides with an obstacle 62, the rear-end outermost edge is subjected to the action of an upward force. The movable protecting wall 4143 moves upward to the position as shown in FIG. 14. The top of the rear movable protecting wall 4143 collides with the housing 10. The rear movable protecting wall 4143 is subjected to a downward applied force, to rotate downward clockwise, as shown in FIG. 15, and pushes forward the obstacle 62 to quickly pass the obstacle 62, to continue to move backward. After rotating clockwise by a particular distance, the rear movable protecting wall 4143 is subjected to an opposite applied force of the reset structure 416, for example, is subjected to a restoring force of the torsion spring. The rear movable protecting wall 4143 returns counterclockwise to the position shown in FIG. 13. In this embodiment, the rear movable protecting wall 4143 is designed in a turnable form, and is assembled on the movable connecting wall 415. The rear movable protecting wall 4143 turns downward to avoid an obstacle 62. A distance by which the rear movable protecting wall 4143 can move upward is reduced. A larger space is reserved above the rear movable protecting wall 4143 for the housing 10, so that the overall structure of the autonomous lawn mower 1 is more compact.

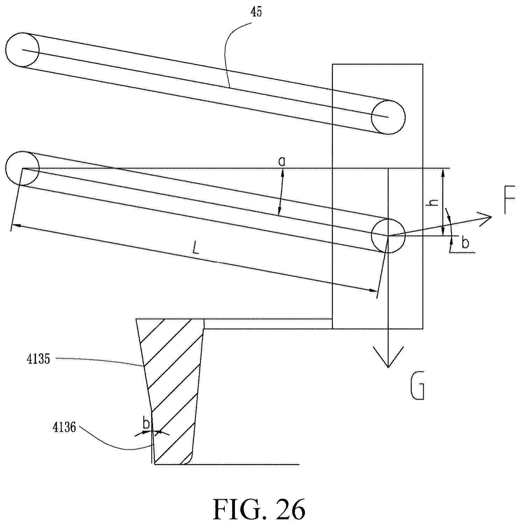

FIG. 26 shows that in an embodiment, statics analysis is performed on one link in the embodiment to obtain that:

$$F * L1 * \sin(a + b) = G * L1 * \cos(a).$$

It is obtained that: F = G * cos(a)/sin(a + b)

F is a horizontal pushing force of a child's arm, L1 is the length of the link, L2 is a distance by which the protecting member is allowed to rise, G is the gravity of the protecting member, and b an angle by which the link inclines inward from a vertical plane in which an outermost end of the link is located. In an embodiment, the distance between the movable protecting member 41 and the ground is 30 mm. The movable protecting member is allowed to move upward by 20 mm. That is, the distance between the movable protecting member lower end 417 and the ground is between 30 mm and 50 mm. In an example, the length of the four-bar linkage is selected to be 110 mm. When the movable protecting member 41 is in the highest state 412, the movement of the four-bar linkage is kept in a horizontal state. In an embodiment, F is a test force of a child's arm and is 5 N, and G = 0.93 N. That is, the weight of the movable protecting member is greater than 93 g, and the test force of the child's arm cannot lift the protecting member.

It may be found through the foregoing calculation that when b is smaller, that is, an area where the movable protecting member outermost edge 413 contacts the test arm 61 is closer to the vertical, the four-bar linkage is longer, the movable protecting member 4 is heavier, the distance by which the movable protecting wall lower end 417 moves upward is smaller, and it is more difficult to lift the movable protecting member 41.

In this embodiment, as shown in FIG. 26, the movable protecting wall outermost edge 413 further includes a safe locking region 4136 configured to prevent a child's arm from lifting the movable protecting wall 414. A safe external force value F1 is preset. The safe external force value is not less than the test force of 5 N of the child's arm. When an applied force from outside to inside is applied to the safe locking region, the movable protecting wall 414 cannot move upward. The safe locking region 4136 is disposed in the area where the movable protecting member outermost edge 413 contacts the test arm 61, to avoid that the movable protecting member lower end 417 moves upward under the action of the test force of the child's arm. A ground clearance of a lower end of the safe locking region is less than M. Even if the movable protecting member moves upward under a force, because the distance between the lower end of the safe locking region and the ground is less than M, at the highest position where a child's arm may push up the movable protecting member, there is definitely a safe locking region that abuts against the child's arm, to ensure that the child's arm cannot enter the cutting mechanism. Because the area where the movable protecting member outermost edge 413 contacts the test arm 61 is usually within a range of the distance between the movable protecting wall 414 and the ground being M (including M), the safe locking region 4136 is at least disposed within the range of the distance between the movable protecting wall 414 and the ground being M. Certainly, the foregoing safe locking region 41 may be alternatively disposed according to a case at a position where the distance between the movable protecting wall 414 and the ground is higher than M, to avoid that a child's arm tilts to contact the movable protecting wall 414. To keep a particular safety allowance, a length by which the safe locking region 4136 extends in the vertical direction is not less than 3 mm, for example, may be 3 mm to 4 mm.

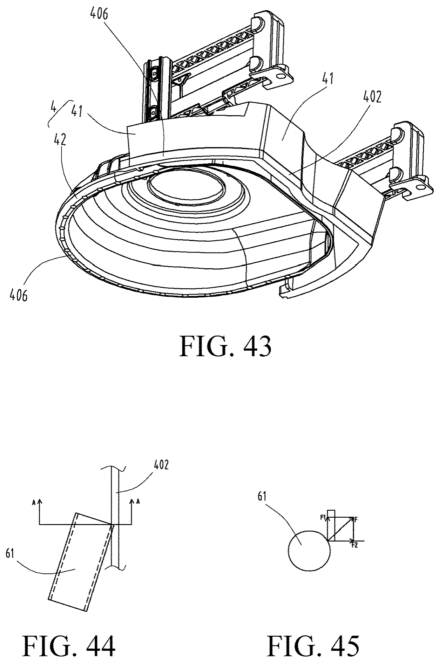

As shown in FIG. 26, the safe locking region 4136 is located on an outer side of an extension line of an obstacle passage region in the same radial direction as the safe locking region. The safe locking region 4136 includes an inclined surface and/or a vertical surface. Specifically, the safe locking region 4136 includes an inclined surface inclining from outside to inside and extending downward and/or a vertical surface and/or an inclined surface inclining from outside to inside and extending upward. The foregoing inclined surface and vertical surface may be flat surfaces, curved surfaces, irregular surfaces or the like. When the safe locking region 4136 is an inclined surface inclining from outside to inside and extending downward, an angle by which the inclined surface of the safe locking region 4136 inclines inward from a vertical plane in which an outermost end of the safe locking region is located may be less than 15 degrees, in an embodiment. The angle by which the inclined surface of the safe locking region 4136 inclines inward from the vertical plane in which the outermost end of the safe locking region is located may be less than 3 degrees. When the safe locking region 4136 is an inclined surface inclining from outside to inside and extending downward, the angle by which the inclined surface of the safe locking region 4136 inclines inward from the vertical plane in which the outermost end of the safe locking region is located is less than an angle by which the inclined surface of the obstacle passage region 4135 inclines inward from a vertical plane in which an outermost end of the obstacle passage region is located. When the angle by which the inclined surface of the safe locking region 4136 inclines inward from the vertical plane in which the outermost end of the safe locking region is located is smaller and the preset safe external force value is applied to the safe locking region 4136, it is more difficult for the movable protecting wall to move upward. In an embodiment, it may be selected that the safe locking region 4136 is a vertical surface, and only a draft angle needs to be reserved. When the angle by which the inclined surface of the obstacle passage region 4135 inclines inward from the vertical plane in which the outermost end of the obstacle passage region is located is larger, when an obstacle 62 touches the movable protecting wall 414, it is easier for the movable protecting wall 414 to be lifted, thereby facilitating obstacle avoidance. In an embodiment, as shown in FIG. 43, in the vertical direction of the autonomous lawn mower 1, the movable protecting wall 414 includes a main movable portion 401 located at an upper end of the movable protecting wall and a locking portion 402 formed by the main movable portion 401 extending downward. The obstacle passage region 4135 is disposed at the outermost edge of the main movable portion 401. A safe locking region 4136 is disposed at an outermost edge of the locking portion 402. In this embodiment, for example, the movable protecting wall has both the obstacle passage region 4135 and the safe locking region 4136. In another embodiment, the movable protecting wall may have only one of the obstacle passage region 4135 and the safe locking region 4136. To achieve adequate passability, a ground clearance of the lower end of the locking portion 402 is preferably in a range of M/2 to M. M is between 38 mm and 40 mm. For example, when the ground clearance of the locking portion 402 is 19 mm to 40 mm, in this case, the ground clearance of the lower end of the locking portion 402 is greater than the radius of the test arm 61. As shown in FIG. 43, if the outermost edge of the locking portion 402 has a continuous surface or has a relatively long continuous surface, when the test arm 61 hits the lower end of the movable protecting wall 414 shown in FIG. 43 in a non-normal direction, forces applied to the test arm are shown in FIG. 44 and FIG. 45. A transitional surface between a front-end surface of the test arm 61 and a side surface of the test arm abuts against the lower end of the continuous surface of the outermost edge of the locking portion 402. In this case, the bearing surface is the transitional surface. As shown in FIG. 45, a bearing point on the test arm 61 is located above a horizontal plane in which a central line of the test arm is located. The test arm 61 abuts against the movable protecting wall 414 to generate a force F shown in FIG. 45. The force F may be decomposed into a force component F1 in the vertical direction and a force component F2 in the horizontal direction. The force component F1 in the vertical direction pushes the movable protecting wall to move upward, to increase the ground clearance of the movable protecting wall. When the distance is greater than the diameter of the test arm 61, the test arm 61 may enter the movable protecting wall 414, to further enter the cutting mechanism to get accidentally injured.

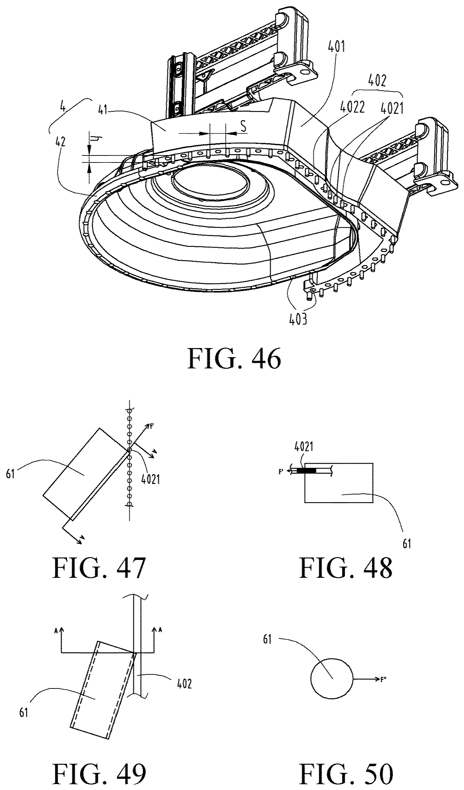

To avoid the risk caused when the test arm 61 hits the movable protecting wall 414 in a non-normal direction, in an embodiment, as shown in FIG. 46, the locking portion 402 at the lower end of the movable protecting wall 41 includes a plurality of blocking protrusions 4021 disposed at intervals in a circumferential direction at the bottom of the movable protecting wall 414 and a transitional wall 4022 configured to connect the main movable portion 401 and the blocking protrusions 4021. Outermost edges of the blocking protrusions 4021 and the transitional portion 4022 are both provided with the safe locking region 4136, to avoid that the movable protecting wall is lifted when a child's arm enters from the locking portion 402. In some embodiments, if the ground clearance of the highest point of the blocking protrusions 4021 is large enough, the transitional portion may be omitted. For example, because the diameter of a child's arm usually does not exceed M, when the ground clearance of the highest point of the blocking protrusions 4021 is not less than M, the transitional portion may be omitted. That is, the blocking protrusions 4021 are directly formed by extending downward from the bottom of the main movable portion 401. As shown in FIG. 46, the transitional portion 4022 connected above the blocking protrusion 4021 may be referred to as an upper blocking portion. When there is no transitional portion 4022 above the blocking protrusions 4021 but instead the main movable portion 401 is connected above the blocking protrusion 4021, the main movable portion 401 may also be referred to as the upper blocking portion.

As shown in FIG. 46 to FIG. 48, when the ground clearance of the lower end of the locking portion 402 is within the range of M/2 to M, that is, when the ground clearance of the lower end of the blocking protrusions 4021 is greater than M/2, for example, when the ground clearance of the blocking protrusions 4021 is 19 mm to 40 mm, in other words, when the ground clearance of the lower end of the locking portion 402 is greater than the radius of the test arm 61, when the test arm 61 hits the lower end of the movable protecting wall 414 shown in FIG. 46 in a non-normal direction, the front-end surface of the test arm 61 abuts against the blocking protrusions 4021. Forces applied to the test arm are shown in FIG. 47 and FIG. 48. The bearing surface is always the front-end surface of the test arm 61. The test arm only generates a force F' in the horizontal plane shown in FIG. 48, but does not generate an upward force, so that it can be avoided that the movable protecting wall 414 moves upward under a force applied by the test arm 61 in a non-normal direction, and the test arm 61 enters the cutting mechanism to cause danger.

To keep the bearing surface as the front-end surface of the test arm 61 when the test arm 61 hits the lower end of the movable protecting wall 414 in any normal direction to further avoid generating an upward force component, a distance S between any two adjacent blocking protrusions 4021 and a height h of the blocking protrusion 4021 must be greater than zero. However, to prevent the test arm 61 from entering through a gap between two adjacent blocking protrusions 4021 in a normal direction, the distance $S \leq$ the diameter of the test arm. Because the diameter of the test arm is less than or equal to 40 mm, in this embodiment, a range of S is defined as: 0 mm $< S \leq 40$ mm. Preferably, the range of S is: $3 \leq S \leq 25$ mm, to avoid that the gap between two adjacent blocking protrusions 4021 is excessively small and as a result the test arm enters in a non-normal direction to generate an upward force, or the gap is excessively large and as a result the test arm 61 can enter the gap. In addition, if the blocking protrusions 4021 are excessively large and as a result the passability is inadequate, the height h of each blocking protrusion 4021 is defined as: 0 mm $< h \leq 80$ mm, preferably, 3 mm $< h \leq 20$ mm.

In addition, to avoid that when the test arm 61 hits in a non-normal direction, the transitional surface of the test arm 61 abuts against an outermost edge of the blocking protrusion 4021, a width M of the blocking protrusion 4021 is defined as 0 mm $< M \leq 40$ mm, preferably, 0 mm $< M \leq 20$ mm. The outermost edge of the blocking protrusion 4021 and an outermost edge of the upper blocking portion do not overlap. That is, the outermost edge of the blocking protrusion 4021 and the outermost edge of the transitional portion 4022 do not overlap. A part of the blocking protrusion 4021 that does not overlap the outermost edge of the upper blocking portion is located on an inner side of a corresponding part of the outermost edge of the upper blocking portion. That is, as shown in FIG. 46, a part of the outermost edge of the blocking protrusion 4021 that does not overlap the outermost edge of the transitional portion 4022 is located on an inner side of a corresponding part of the outermost edge of the transitional portion 4022. For example, when the outermost edges of the upper blocking portion, that is, the transitional portion 4022 and the blocking protrusion 4021 are both curved surfaces, a curvature of the blocking protrusion 4021 is greater than a curvature of the upper blocking portion at a position corresponding to the blocking protrusion, that is, is greater than a curvature of the transitional portion 4022 at a position corresponding to the blocking protrusion. The radius R of curvature of the blocking protrusion 4021 may be set to $0 \text{ mm} < R \leq 20$ mm, preferably, $0 \text{ mm} < R \leq 10$ mm. In this embodiment, the outermost edge of the blocking protrusion 4021 is a semi-circular arc-shaped surface. In an embodiment of the blocking protrusion, the outermost edge of the blocking protrusion 4021 may be another arc-shaped surface, or a straight surface with a relatively small width.

In this embodiment, when the ground clearance of the lower end of the locking portion 402, that is, the lower end of the blocking protrusion 4021 is set within the range of M/2 to M, for example, the ground clearance of the lower end of the locking portion 402 is 19 mm to 40 mm, the passability of the autonomous lawn mower is improved, and at the same time the blocking protrusions 4021 are set to prevent a child's arm from entering the movable protecting wall in a non-normal direction, so that while the passability is improved, the safety of children is ensured.

In another embodiment, the ground clearance of the lower end of the locking portion 402 may be limited within a range of a radius of a child's arm, to avoid generating an upward force when a child's arm hits the locking portion 402 in a non-normal direction. Specifically, when the cutting mechanism is at any cutting height, the initial distance between the movable protecting wall 41 and the ground remains less than or equal to M/2. That is, an initial ground clearance of the lower end of the locking portion 402 may be limited to be less than or equal to M/2, for example, a ground clearance of the lower end of the locking portion 402 is less than or equal to 19 mm. In this case, as shown in FIG. 49, when the test arm 61 hits the lower end of the movable protecting wall 414 shown in FIG. 43 in a non-normal direction, as shown in FIG. 50, a bearing point on the test arm 61 remains in the horizontal plane in which the central line of the test arm 61 is located, in this case, only a force F" in the horizontal plane is generated, but an upward force component is not generated. Therefore, in this case, a child's arm can also be prevented from entering the movable protecting wall 414 in a non-normal direction.

When the autonomous lawn mower with the locking portion 402 shown in FIG. 46 encounters dense grass, the blocking protrusions 4021 are inserted in the glass. Because the grass is intertwined, as the autonomous lawn mower moves forward, the blocking protrusions 4021 may pull off the grass, and the intertwined grass causes a resistance for the autonomous lawn mower to move forward, and as a result the passability of the autonomous lawn mower is reduced.

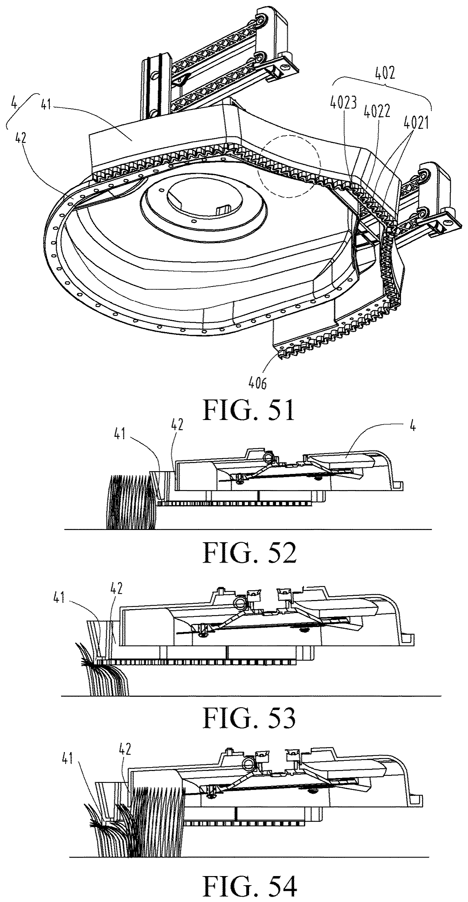

To further improve the passability in dense grass, in an embodiment, as shown in FIG. 51, the locking portion 402 at the lower end of the movable protecting wall 41 further includes a connecting protrusion 4023 that extends in the vertical direction and configured to connect at least two adjacent blocking protrusions 4021. The connecting protrusion 4023 partially concaves inward to make the connecting protrusion 4023 and the two adjacent blocking protrusions 4021 connected by the connecting protrusion together define a structure that has an interval on an outer side and is closed on an inner side. As shown in FIG. 52 to FIG. 54, when the autonomous lawn mower moves forward and encounters grass, the blocking protrusions 4021 are inserted in the glass. However, as the autonomous lawn mower moves forward, as shown in FIG. 53, grass is pressed down by the connecting protrusion 4023 as the autonomous lawn mower further moves forward. As shown in FIG. 54, the pressed grass stands up again and enters a cutting region to be cut by the cutting mechanism. In this embodiment, the connecting protrusion 4023 is disposed, so that the blocking protrusions are effectively prevented from being inserted in dense grass, thereby avoiding that a running resistance is increased or even grass is pulled off or strained. The foregoing circumferentially continuous structure jointly formed by the connecting protrusions and the blocking protrusions may also be referred to as a grass grinding end surface 406. In another embodiment, the grass grinding end surface 406 continuously extending in a circumferential direction may be directly disposed at the movable protecting wall lower end or the mechanism protecting wall lower end. As long as the grass grinding end surface 406 avoids a penetrating opening in the inside-outside direction at the movable protecting wall lower end, the grass grinding end surface may have a zigzag form shown in FIG. 51, may have a structure shown in FIG. 56 or may have a structure shown in FIG. 43. The grass grinding end surface 406 directly presses down grass, to avoid a large running resistance or even pulling off or straining grass.

As shown in FIG. 55, to achieve adequate passability while ensuring safety protection, in a direction from outside to inside, a distance d between an outermost side of the blocking protrusion 4021 and an innermost side of the connecting protrusion 4023, the height h of the blocking protrusion 4021, the distance S between two adjacent blocking protrusions 4021, and the width M of the blocking protrusion 4021 can be neither excessively large nor excessively small. If d is excessively large or h is excessively large or S is excessively large, a larger amount of grass is inserted in a gap between two blocking protrusions or a movement distance of grass in the gap is larger, the running resistance is larger, and it is more likely to strain grass. If d is excessively small or h is excessively small or S is excessively small or M is excessively large, a child's arm is more likely to enter the movable protecting wall 414 to cause a safety risk. M cannot be excessively small. If M is excessively small, the strength of the blocking protrusions 4021 is reduced. In view of the foregoing reasons, in this embodiment, it is set that 1 mm ≤ d ≤ 100 mm, preferably, 3 mm ≤ d ≤ 20 mm; 0 mm < h ≤ 80 mm, preferably, 3 mm ≤ h ≤ 20 mm; 0 mm < S ≤ 40 mm, preferably, 3 ≤ S ≤ 25 mm; preferably, 0 mm < m ≤ 20 mm, so that while it is ensured that a child's arm cannot enter the movable protecting wall, the passability of the autonomous lawn mower is improved.

As shown in FIG. 51, in this embodiment, the connecting protrusion 4023 is a V-shaped structure connecting two adjacent blocking protrusions 4021. The connecting protrusion 4023 and the blocking protrusions 4021 are connected to form a zigzag shape. While such a design can ensure a distance S between two adjacent blocking protrusions 4021 and the distance d between the outermost side of the blocking protrusion 4021 and the innermost side of the connecting protrusion 4023, the height h of the blocking protrusion 4021, and the width M of the blocking protrusion 4021, the volume of a groove that is defined by the connecting protrusion 4023 and the blocking protrusions 4021 and faces an outer side of the autonomous lawn mower is minimized, thereby reducing an amount of grass inserted in the groove, reducing running resistance, and reducing the risk of straining grass.

Certainly, in another embodiment, according to a case, the connecting protrusion 4023 may be an arc-shaped structure resembling a V shape. The connecting protrusion 4023 and the blocking protrusions 4021 are connected to form a wavy form. Alternatively, as shown in FIG. 56, the connecting protrusion 4023 may be an N-shaped structure. The connecting protrusion 4023 and the blocking protrusions 4021 are connected to form a continuous N-shaped structure. In this embodiment, to avoid that a child's arm is cut by the cutting element 32 when being accidentally run over by the autonomous lawn mower 1, it needs to be ensured that during movement of the movable protecting member 41, that is, during movement of the movable protecting wall lower end 417 in the vertical direction, the lower end of the protecting assembly 4 remains lower than the cutting element 30. To achieve the foregoing objective, the foregoing mechanism protecting member 42 may be added to implement that the lower end of the protecting assembly 4 remains lower than the cutting element lowest point 30. Alternatively, a relative position relationship between the movable protecting member 41 and the cutting mechanism 3 during the movement of the movable protecting member 41 may be limited to implement that when the movable protecting member 41 is subjected to an external force, during movement of the movable protecting wall lower end 417 in the vertical direction, the movable protecting wall lower end 417 remains lower than the cutting element lowest point 30.

For example, while the movable protecting member 41 exists, the foregoing mechanism protecting member 42 may be added to implement that the lower end of the protecting assembly 4 remains lower than the cutting element lowest point 30. The protecting assembly 4 includes the movable protecting member 41 and the mechanism protecting member 42. The mechanism protecting member 42 is fixed relative to the cutting mechanism 3. For example, when the cutting structure 3 moves relative to the housing, the mechanism protecting member 42 moves accordingly. When the cutting mechanism 2 is unmovable relative to the housing, the mechanism protecting member 42 is also unmovable accordingly. In a non-height adjustment state, the cutting mechanism 3 may be set to be movable relative to the housing, or may be set to be unmovable relative to the housing. Regardless how the cutting mechanism 2 and the movable protecting member 41 move, or how they move relatively, because the mechanism protecting member 42 remains relatively fixed to the cutting mechanism 2 and the lower end of the mechanism protecting member 42 remains lower than the cutting element lowest point 30, even if the test arm 61 moves across the movable protecting member 41, the test arm is blocked by the mechanism protecting member 42. Even if the lower end of the mechanism protecting member 42 is higher than the test arm 61, the test arm 61 can only be located below cutting element 30, and is prevented from touching the cutting element 30. Therefore, the safety of a child's arm can be ensured. In this embodiment, reference may be directly made to any other foregoing or following embodiment with the mechanism protecting member 42. In an embodiment, the structure is no longer described in detail. Below, while the movable protecting member 41 exists, for example, the relative position relationship between the movable protecting member 41 and the cutting mechanism 3 during the movement of the movable protecting member 41 is limited to implement that the lower end of the protecting assembly 4 remains lower than the cutting element 30.

For example, it may be limited that the movable protecting member 41 is in two extreme states, namely, the lowest state 411 and the highest state 412. The movable protecting member lower end remains lower than the cutting element lowest point 30, to implement that during the entire movement, the lower end of the movable protecting member 41 remains lower than the cutting element lowest point 30.

When a cutting height of the autonomous lawn mower 2 is adjusted to the lowest position, and the movable protecting member 41 is in the lowest state 411, in the vertical direction, the movable protecting wall lower end 417 of the movable protecting member 41 is lower than the cutting element lowest point 30, so that no matter how the cutting height of the autonomous lawn mower 2 is adjusted, when the movable protecting member 41 is in the lowest state, the movable protecting wall lower end 417 of the movable protecting member 41 remains lower than the cutting element lowest point 30, to prevent a child's arm from being run over by the autonomous lawn mower 1. Specifically, the distance between the movable protecting wall lower end 417 and the cutting element lowest point 30 is 2 mm to 30 mm, to ensure that a child's finger or arm is prevented from touching the cutting mechanism 3 from the entire circumference of the protecting member.

When the cutting mechanism is at any cutting height, during movement of the autonomous lawn mower 1 moves, when the movable protecting member 41 is in the highest state 412, that is, during upward movement of the movable protecting wall under an external force to the highest point of a movable range of the movable protecting wall, the movable protecting wall lower end 417 is lower than the cutting element lowest point 30, to implement that when the movable protecting member 41 is subjected to a force from outside to inside, the movable protecting wall lower end 417 of the movable protecting member 41 remains lower than the cutting element lowest point 30. To achieve the foregoing objective, the following technical solutions may be adopted.

In an embodiment, on at least one level of cutting height, during movement of the autonomous lawn mower 1, when the movable protecting member 41 moves in the vertical direction under an external force, the cutting mechanism 3 follows the movable protecting member 41 to move synchronously in the vertical direction, to ensure that the movable protecting wall lower end 417 remains lower than the lowest point of the cutting element 32. The movable protecting member 41 and the cutting mechanism 3 are connected to each other. During movement of the autonomous lawn mower 1, during upward movement of the movable protecting member 41 under a force, the cutting mechanism 3 follows to move upward together. When the movable protecting member 41 moves downward, the cutting mechanism 3 also follows to move downward together. In this embodiment, the cutting mechanism 3 and the movable protecting member 41 are connected to each other, to implement that when moving vertically, the movable protecting member 41 may drive the cutting mechanism 3 to move vertically synchronously. In a process that the cutting mechanism 3 follows the movable protecting member 41 to move vertically, in the vertical direction, the cutting mechanism 3 may be fixed relative to the movable protecting member 41, or a particular relative movement may be generated. For example, in an embodiment, during the movement of the autonomous lawn mower 1, the cutting mechanism 3 is relatively fixed to the movable protecting member 41 in the vertical direction. That is, in the vertical direction, the relative positions of the two are kept unchanged. Because the cutting mechanism 3 follows the movable protecting member 41 to move together, the relative positions of the two are kept unchanged in the vertical direction, as long as the movable protecting member 41 is in the lowest state. The movable protecting wall lower end 417 is lower than the cutting element lowest point 30, so that during entire movement of the movable protecting member 41, the movable protecting wall lower end 417 is lower than the cutting element lowest point 30. In another embodiment, in the vertical direction, while the cutting mechanism 3 follows the movable protecting member 41 to move together, the cutting mechanism 3 may further move relative to the movable protecting member 41. The autonomous lawn mower 1 further includes a movable adjustment mechanism (not shown) configured to adjust the movement of the cutting mechanism 3 relative to the movable protecting member 41. For example, the movable adjustment mechanism is an adjustment mechanism for automatically adjusting the cutting mechanism 3 to be movable upward. For example, when the movable protecting member 41 moves upward by 20 mm under an external force, and the movable adjustment mechanism controls the cutting mechanism 3 to be movable upward by 10 mm relative to the movable protecting member 41, in the entire process, the movable protecting member 41 moves upward by 20 mm relative to the housing 10, and the cutting mechanism 3 moves upward by 30 mm relative to the housing 10.

In a process of adjusting the height of the cutting mechanism 3, the cutting mechanism 3 and the movable protecting member 41 are relatively movable in the vertical direction, so that the height of the movable protecting wall lower end 417 does not increase without limit along with the height adjustment of the cutting mechanism 3, to ensure that the distance H0 between the movable protecting wall lower end 417 and the ground remains less than a preset safe distance value, for example, remains less than 38 mm. In this embodiment, a manner in which the cutting mechanism 3 and the movable protecting member 41 are relatively movable in the vertical direction is that during adjustment of the height of the cutting mechanism 3, the cutting mechanism 3 moves relative to the ground in the vertical direction, and the movable protecting member 41 does not move relative to the ground in the vertical direction. Certainly, in another embodiment, the cutting mechanism 3 and the movable protecting member 41 may both move in the vertical direction but do not move synchronously during height adjustment. For example, the distance by which the movable protecting member 41 moves is less than the distance by which the cutting mechanism 3 moves. In this embodiment, the foregoing implementation of a preset grass safe lift height may be adopted. A grass safe lift height is preset. During upward movement of the movable protecting wall 414 under an external force, a resistance for the movable protecting wall 414 to move upward when the distance between the movable protecting wall lower end 417 and the ground is greater than the preset grass safe lift height is greater than a resistance for the movable protecting wall 414 to move upward when the distance between the movable protecting wall lower end 417 and the ground is not greater than the preset grass safe lift height. To implement that when the autonomous lawn mower 1 is placed still on a lawn, the grass lift force can only lift the movable protecting wall lower end 417 to a height from the ground being not greater than the preset grass safe lift height but cannot lift the movable protecting wall lower end to a distance from the ground being greater than the grass safe lift height, to avoid that when the autonomous lawn mower 1 is placed still on a lawn, the movable protecting wall 414 is lifted by grass to the grass safe lift height and a child's arm enters the cutting mechanism 3 from below the movable protecting wall 414. Details of this embodiment are no longer described one by one.

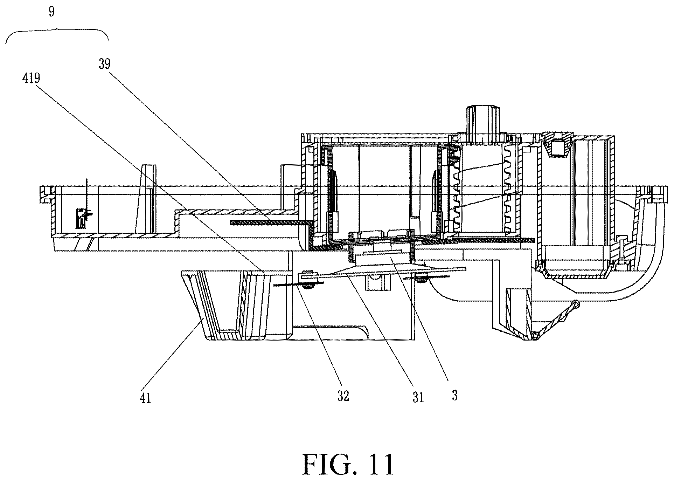

In another embodiment, on at least one level of cutting height, during movement of the movable protecting wall 414 in the vertical direction under an external force, the lower end of the movable protecting wall 414 is movable relative to the cutting mechanism 3 in the vertical direction. As shown in FIG. 11, the autonomous lawn mower 1 includes a limiting mechanism 9 configured to limit relative positions of the movable protecting member 4 and the cutting mechanism 3. The limiting structure 9 is configured to limit a degree to which the movable protecting member 4 and the cutting mechanism 3 move relatively in the vertical direction. The limiting mechanism 9 includes a cutting limiting portion 39 and a protecting member limiting portion 419 capable of abutting against and limiting each other. The cutting limiting portion 39 and the cutting mechanism 3 are relatively fixed in the vertical direction. The protecting member limiting portion 419 and the movable protecting member 41 are relatively fixed in the vertical direction. When the cutting limiting portion 39 and the movable protecting member 41 abut against each other, the cutting limiting portion 39 is located above the protecting member limiting portion 419. Specifically, the limiting mechanism 9 includes the protecting member limiting portion 419 disposed on the movable protecting member 4 and the cutting limiting portion 39 disposed on the cutting mechanism 3. The cutting limiting portion 39 is located above the protecting member limiting portion 419. During upward movement of the movable protecting wall 414 under an external force, the movable protecting wall 414 is movable relative to the cutting mechanism 3 in the vertical direction. When the movable protecting wall 414 moves upward, the protecting member limiting portion 419 follows to move upward. When moving to abut against the cutting limiting portion 39, the protecting member limiting portion 419 is blocked by the cutting limiting portion 39, the upward movement of the movable protecting member 4 is limited by the cutting mechanism 3. The movable protecting member 4 can no longer continue to move upward relative to the cutting mechanism 3, so that a range of the upward movement of the movable protecting member 4 relative to the cutting mechanism 3 can be limited, and during upward movement of the movable protecting member 4, the movable protecting wall lower end 417 remains lower than the cutting element lowest point 30. When the movable protecting member 4 is in the lowest state and the cutting mechanism 3 is adjusted to the lowest cutting height, in the vertical direction, the distance between the movable protecting wall lower end 417 and the cutting element lowest point 3 is greater than the distance between the protecting member limiting portion 419 and the cutting limiting portion 39, so that when the movable protecting member 4 moves to the highest state, the movable protecting wall lower end 417 is still lower than the cutting element lowest point 3, and in an entire movable process, the movable protecting wall lower end 417 remains lower than the cutting element lowest point 3. When the cutting mechanism 3 is adjusted upward, as the cutting mechanism 3 is adjusted upward, the distance between the protecting member protecting portion 419 and the mechanism protecting portion 39 and the distance between the movable protecting wall lower end 417 and the cutting element lowest point 30 when the movable protecting member 4 is in the lowest state increase synchronously, so that no matter how much the height of the cutting mechanism 3 is adjusted, in the vertical direction, the movable protecting wall lower end 417 remains lower than the cutting element lowest point 30. In another embodiment, another manner may be used to implement that during movement of the movable protecting member 4. The movable protecting wall lower end 417 remains lower than the cutting element lowest point 3. Examples are no longer enumerated in the present invention. In this embodiment, the foregoing implementation of a preset grass safe lift height may be adopted, to avoid that when the autonomous lawn mower 1 is placed still on a lawn, the movable protecting wall 414 is lifted by grass to the grass safe lift height and a child's arm enters the cutting mechanism 3 from below the movable protecting wall 414. Details of this embodiment are no longer described one by one.

In an implementation of this embodiment, the cutting mechanism 3 does not move relative to the ground in the vertical direction. When the upward movement of the movable protecting member 4 is limited by the cutting mechanism 3, because the cutting mechanism 3 cannot move upward, the movable protecting member 4 also can no longer move upward.

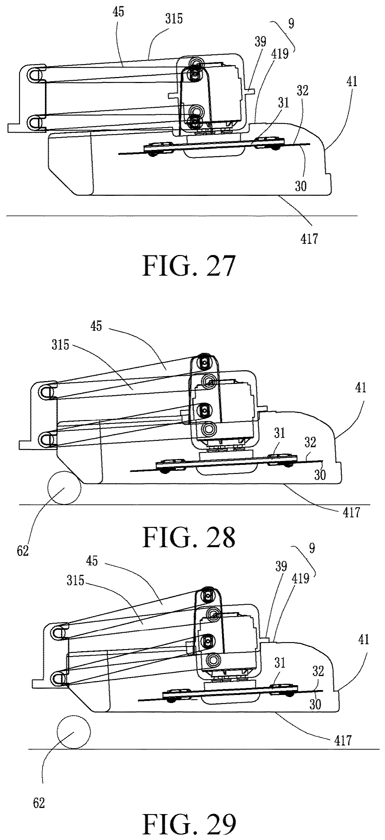

In another implementation of this embodiment, as shown in FIG. 27 to FIG. 29, the cutting mechanism 3 may be movable relative to the ground in the vertical direction. The cutting mechanism 3 and the movable protecting member 41 may move in the vertical direction in a relatively independent manner. The autonomous lawn mower 1 includes a protecting member upward guide mechanism 45 configured to connect the movable protecting member 41 and the housing 10 and a cutting upward guide mechanism 315 configured to connect the cutting mechanism 3 and the housing 10. The protecting member upward guide mechanism 45 is independent of the cutting upward guide mechanism 315, so that the cutting mechanism 3 and the movable protecting member 41 may move in the vertical direction in a relatively independent manner.

As shown in FIG. 27 and FIG. 28, in a non-height adjustment state, when the cutting mechanism is subjected to the action of an external force, the cutting mechanism may be movable relative to the ground in the vertical direction. On at least one level of cutting height, during movement of the movable protecting wall 414 in the vertical direction under an external force, the lower end of the movable protecting wall 414 is movable relative to the cutting mechanism 3 in the vertical direction. In this embodiment, for example, when the cutting mechanism is at any cutting height, the movable protecting wall 414 is movable relative to the cutting mechanism in the vertical direction. In another embodiment, the two may move relatively in only some levels. In this embodiment, the movable protecting wall 414 first moves upward separately until the movable protecting wall and the cutting mechanism 3 limit each other. Then, as shown in FIG. 28 and FIG. 29, the movable protecting wall 414 and the cutting mechanism 3 move upward together. A resistance when the movable protecting wall 414 separately moves upward is less than a resistance when the movable protecting wall 414 and the cutting mechanism 3 limit each other and move upward together. As shown in FIG. 27 and FIG. 28, as the autonomous lawn mower 1 moves forward, the movable protecting wall 414 is subjected to the action of an upward grass lift force applied by grass to the movable protecting wall. The grass lift force is greater than the resistance when the movable protecting wall 414 separately moves upward, and the movable protecting wall 414 may move upward. The grass lift force is less than the resistance when the movable protecting wall 414 and the cutting mechanism 3 limit each other and move upward together. Therefore, after the movable protecting wall 414 moves upward until the movable protecting wall and the cutting mechanism 3 limit each other, the grass lift force applied by grass to the movable protecting wall 414 cannot lift the movable protecting wall 414 and the cutting mechanism 3 upward together. In this case, the movable protecting wall 414 is kept in a state to perform a cutting task, so that during cutting, the distance between the movable protecting wall lower end 417 and the cutting element lowest point 30 is kept within a particular range, to avoid that in a case that the movable protecting wall lower end 417 is excessively close to the ground and is excessively far away from the cutting element lowest point 30, grass pressed by the movable protecting wall 417 fails to be cut. In this embodiment, the distance between the movable protecting wall lower end 417 and the cutting element lowest point 30 is ensured, so that in one aspect, the distance between the movable protecting wall lower end 417 and the ground is increased, thereby reducing a possibility of pressing grass, in another aspect, even if the movable protecting wall lower end 417 presses grass, the distance between the movable protecting wall lower end and the cutting element lowest point 30 is reduced, pressed grass can still be cut, thereby greatly improving cutting quality.

As shown in FIG. 28, when the autonomous lawn mower 1 encounters an obstacle 62 during movement, an upward obstacle lift force generated from an external force applied by the obstacle 62 to the movable protecting wall 414 is greater than a resistance when the movable protecting wall 414 and the cutting mechanism 3 limit each other and move upward together. Therefore, after the movable protecting wall 414 moves upward until the movable protecting wall and the cutting mechanism 3 limit each other, under the applied force of the obstacle 62, as shown in FIG. 29, the movable protecting wall 414 and the cutting mechanism 3 move upward together, to pass the obstacle 62.

In the foregoing embodiment, when the movable protecting wall 414 is subjected to an external force from bottom to top, the lower end of the movable protecting wall 414 moves upward relative to the bottom shell. When the autonomous lawn mower the autonomous lawn mower moves on a lawn, the movable protecting wall 414 is subjected to the buoyancy applied by grass to the movable protecting wall from bottom to top. The movable protecting wall 414 may move upward. The lower end of the movable protecting wall 414 generates an upward displacement, to reduce a movement resistance applied by dense grass to the movable protecting wall, thereby improving the passability in dense grass. In the foregoing embodiment, the movable protecting wall 414 is in the form of generally movable relative to the bottom shell in the vertical direction. In another embodiment, as shown in FIG. 19 and FIG. 20, the movable protecting wall 414 may have a compressible structure, so that when the lower end of the movable protecting wall is subjected to a force from bottom top, the lower end can move upward, thereby improving the passability in dense grass. Certainly, in another embodiment, the movable protecting member may be in another form, and examples are no longer enumerated.

In this embodiment, the foregoing implementation of a preset grass safe lift height may be combined. A grass safe lift height is preset. During upward movement of the movable protecting wall 414 under an external force, a resistance for the movable protecting wall 414 to move upward when the distance between the movable protecting wall lower end 417 and the ground is greater than the preset grass safe lift height is greater than a resistance for the movable protecting wall 414 to move upward when the distance between the movable protecting wall lower end 417 and the ground is not greater than the preset grass safe lift height. In addition, a resistance for the movable protecting wall 414 to move upward when the distance between the movable protecting wall lower end 417 and the ground is greater than the preset grass safe lift height and the movable protecting wall 414 and the cutting mechanism 3 are not yet limiting each other is greater than a resistance for the movable protecting wall 414 to move upward when the distance between the movable protecting wall lower end 417 and the ground is not greater than the preset grass safe lift height and the movable protecting wall 414 and the cutting mechanism 3 are not yet limiting each other, and is less than a resistance when the movable protecting wall 414 and the cutting mechanism 3 limit each other and move upward together.

During movement of the autonomous lawn mower 1, a lift force applied by grass to the movable protecting wall 414 is greater than a resistance for the movable protecting wall 414 to move upward when the distance between the movable protecting wall lower end 417 and the ground is greater than the preset grass safe lift height and the movable protecting wall 414 and the cutting mechanism 3 are not yet limiting each other, and is less than resistance when the movable protecting wall 414 and the cutting mechanism 3 limit each other and move upward together. Therefore, during movement, the autonomous lawn mower 1 grass may lift the movable protecting wall 414 upward until the movable protecting wall and the cutting mechanism 3 limit each other, to ensure the distance between the movable protecting wall lower end 417 and the cutting element lowest point 30 is ensured, thereby improving cutting quality.

When the autonomous lawn mower 1 is placed still on a lawn, the grass lift force applied to the autonomous lawn mower 1 by grass is greater than the resistance for the movable protecting wall 414 to move upward when the distance between the movable protecting wall lower end 417 and the ground is not greater than the preset grass safe lift height, and is less than the resistance for the movable protecting wall 414 to move upward when the distance between the movable protecting wall lower end 417 and the ground is greater than the preset grass safe lift height. Therefore, when the autonomous lawn mower 1 is placed still on a lawn, the grass lift force can only lift the movable protecting wall lower end 417 to a height from the ground being not greater than the preset grass safe lift height, but cannot lift the movable protecting wall lower end to a distance from the ground being greater than the grass safe lift height, to avoid that when the autonomous lawn mower 1 is placed still on a lawn, the movable protecting wall 414 is lifted by grass to the grass safe lift height and a child's arm enters the cutting mechanism 3 from below the movable protecting wall 414. In this embodiment, the preset grass lift height is less than M, to avoid entry of a child's arm, in an embodiment, the preset grass lift height is within a range of 15 mm to 25 mm, so that a distance between the movable protecting member 41 and the ground can prevent the entry of a child's arm, and it is avoided that the normal walking of the autonomous lawn mower on a lawn is affected because the movable protecting wall 414 is excessively close to the ground. Certainly, the preset grass lift height may be alternatively set to be less than 19 mm, to avoid the entry of a child's finger.

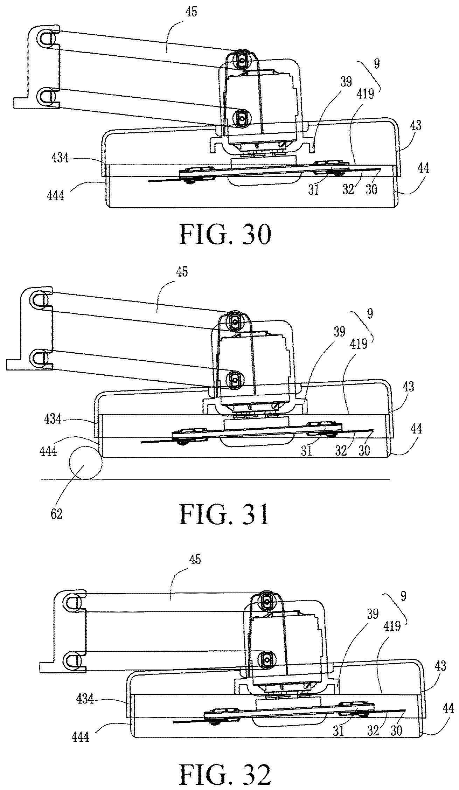

In another implementation of this embodiment, as shown in FIG. 30 to FIG. 32, the movable protecting member 41 includes an upper protecting member 43 and a lower protecting member 44. In the movable protecting member, the lower protecting member 44 may be movable relative to the upper protecting member 43 in the vertical direction, to implement that a distance between the lower end of the lower protecting member 43 and the ground changes, and at the same time implement that the lower end of the lower protecting member 43 is movable relative to the cutting mechanism 3 in the vertical direction. The upper protecting member 43 and the lower protecting member 44 respectively include an upper protecting wall 434 and a lower protecting wall 444. The upper protecting wall 434 and the lower protecting wall 444 together form the movable protecting wall 414. The lower end of the lower protecting wall 444 is the movable protecting wall lower end 417. The lowest state 411 of the movable protecting member 41 means that the lower protecting member 44 is located at the lowest position of a space in which the lower protecting member is movable in the vertical direction. The highest state 412 means that the lower protecting member 44 is located at the highest position of a space in which the lower protecting member is movable in the vertical direction. The protecting member limiting portion 419 on the movable protecting member 41 is disposed on the lower protecting member 44. The cutting mechanism 3 is provided with the cutting limiting portion 39 configured to limit with the protecting member limiting portion 419.

During the adjustment of the cutting height of the cutting mechanism 3, the lower protecting wall 444 and the cutting mechanism 3 are relatively movable in the vertical direction, to implement that the lower end of the lower protecting wall 444. That is, the distance between the movable protecting wall lower end 417 and the ground remains less than M. For example, the upper protecting wall 434 and the cutting mechanism 3 may be relatively movable in the vertical direction. The lower protecting wall 444 and the upper protecting wall 434 do not move relatively in the vertical direction, to implement that the lower protecting wall 444 and the cutting mechanism 3 are relatively movable in the vertical direction. During upward movement of the movable protecting member 41 under the external force, when the lower protecting wall 444 moves upward relative to the ground, the lower protecting wall also moves upward relative to the upper protecting wall 434. First, the lower protecting wall moves until the lower protecting wall and the cutting mechanism 3 limit each other, and then the lower protecting wall move upward together with the upper protecting wall 434 and the cutting mechanism 3.

A resistance when the lower protecting wall 444 separately moves upward is less than a resistance when the lower protecting member 44 and the cutting mechanism 3 limit each other and the lower protecting wall 444, the upper protecting wall 434, and the cutting mechanism 3 move upward together. As shown in FIG. 31, during movement of the autonomous lawn mower 1 forward, the lower protecting member 44 is subjected to the action of an upward grass lift force applied by grass to the lower protecting member. The grass lift force is greater than the resistance when the lower protecting member 44 separately moves upward, and the lower protecting wall 444 may move upward. The grass lift force is less than resistance when the lower protecting wall 444 and the cutting mechanism 3 limit each other and move upward together. Therefore, after the lower protecting wall 444 moves upward until the lower protecting wall and the cutting mechanism 3 limit each other, the grass lift force applied by grass to the lower protecting member 44 cannot lift the lower protecting wall 444 and the cutting mechanism 3 upward together. In this case, as shown in FIG. 31, the upper protecting member 44 and the lower protecting member 44 are kept in the state to perform a cutting task, so that during cutting, the distance between the movable protecting wall lower end 417 and the cutting element lowest point 30 is kept within a particular range. That is, the distance between the lower end of the lower protecting wall 444 and the cutting element lowest point 30 is kept within a particular range, to avoid that in a case that the lower end of the lower protecting wall 444 is excessively close to the ground and is excessively far away from the cutting element lowest point 30, grass pressed by the lower end of the lower protecting wall 444 fails to be cut. In this embodiment, the distance between the lower end of the lower protecting wall 444 and the cutting element lowest point 30 is ensured, in one aspect, the distance between the lower end of the lower protecting wall 444 and the ground is increased, thereby reducing a possibility of pressing grass, and in another aspect, even if the lower end of the lower protecting wall 444 presses grass, because the distance between the movable protecting wall lower end and the cutting element lowest point 30 is reduced, pressed grass can still be cut, thereby greatly improving cutting quality.

As shown in FIG. 31 and FIG. 32, during movement, when the autonomous lawn mower 1 encounters an obstacle 62, an upward obstacle lift force generated from an external force applied by the obstacle 62 to the lower protecting wall 444 is greater than a resistance when the lower protecting wall 444, the upper protecting wall 434, and the cutting mechanism 3 limit each other and move upward together. Therefore, after the lower protecting wall 444 moves upward until the lower protecting wall, the upper protecting wall 434, and the cutting mechanism 3 limit each other, under the applied force of the obstacle 62, as shown in FIG. 32, the lower protecting wall 444, the upper protecting wall 434, and the cutting mechanism 3 move upward together to pass the obstacle 62.

In this embodiment, the implementation of the preset grass safe lift height in the foregoing embodiment in which the cutting mechanism 3 and the movable protecting member 41 may move in the vertical direction in a relatively independent manner and the cutting mechanism 3 and the movable protecting member 41 are separately provided with limiting mechanisms 9 that limit each other may be combined. The grass safe lift height is preset. During upward movement of the lower protecting wall 444 under an external force, a resistance for the lower protecting wall 444 to move upward when the distance between the lower end of the lower protecting wall 444 and the ground is greater than the preset grass safe lift height is greater than a resistance for the lower protecting wall 444 to move upward when the distance between the lower protecting wall 444 and the ground is not greater than the preset grass safe lift height. In addition, a resistance for the lower protecting wall 444 to move upward when the distance between the lower end of the lower protecting wall 444 and the ground is greater than the preset grass safe lift height and the lower protecting wall 444 and the cutting mechanism 3 are not yet limiting each other, is greater than a resistance for the lower protecting wall 444 to move upward when the distance between the lower protecting wall 444 and the ground is not greater than the preset grass safe lift height and the lower protecting wall 444 and the cutting mechanism 3 are not yet limiting each other, and is less than a resistance when the lower protecting wall 444, the upper protecting wall 434, and the cutting mechanism 3 limit each other and move upward together.

During movement of the autonomous lawn mower 1, a lift force applied by grass to the lower protecting wall 444 is greater than a resistance for the lower protecting wall 444 to move upward when the distance between the lower protecting wall 444 and the ground is greater than the preset grass safe lift height and the lower protecting wall 444 and the cutting mechanism 3 are not yet limiting each other, and is less than resistance when the lower protecting wall 444 and the cutting mechanism 3 limit each other and move upward together. Therefore, during movement of the autonomous lawn mower 1, grass may lift the lower protecting wall 444 upward to enter a state in which the lower protecting wall and the cutting mechanism 3 limit each other as shown in FIG. 32, to ensure that the distance between the lower end of the lower protecting wall 444 and the cutting element lowest point 30 is ensured, thereby improving cutting quality.

When the autonomous lawn mower 1 is placed still on a lawn, the grass lift force applied to the autonomous lawn mower 1 by grass is greater than a resistance for the lower protecting wall 444 to move upward when the distance between the lower end of the lower protecting wall 444 and the ground is not greater than the preset grass safe lift height is less than a resistance for the lower protecting wall 444 to move upward when the distance between the lower end of the lower protecting wall 444 and the ground is greater than the preset grass safe lift height. Therefore, when the autonomous lawn mower 1 is placed still on a lawn, the grass lift force can only lift the lower end of the lower protecting wall 444 to a height from the ground being not greater than the preset grass safe lift height, but cannot lift the movable protecting wall lower end to a distance from the ground being greater than the grass safe lift height, to avoid that when the autonomous lawn mower 1 is placed still on a lawn, the lower end of the lower protecting wall 444 is lifted by grass to the grass safe lift height and a child's arm enters the cutting mechanism 3 from below the lower protecting wall 444. In this embodiment, the preset grass lift height is less than M, to avoid entry of a child's arm. In an embodiment, the preset grass lift height is within a range of 15 mm to 25 mm, so that a distance between the movable protecting member 41 and the ground can prevent the entry of a child's arm, and the normal walking of the autonomous lawn mower on a lawn is not affected because the movable protecting wall 414 is excessively close to the ground. Certainly, the preset grass lift height may be alternatively set to be less than 19 mm, to avoid the entry of a child's finger.

In another embodiment, the movable protecting member 4 and the cutting mechanism 3 may be automatically movable. The autonomous lawn mower 1 further includes a detection module configured to detect whether the movable protecting member 4 and the cutting mechanism 3 need to be movable and a movability control module configured to control the autonomous lawn mower 1 according to a detection result of the detection module to automatically control the movability of the movable protecting member 4 and the cutting mechanism 3. The detection module may be a vision sensor, an ultrasonic sensor, an infrared sensors or the like, and uses a visual manner, an ultrasonic manner, an infrared manner or the like to detect whether there is an obstacle in front and a size of the obstacle. When there is a passable obstacle in front, the movability control module controls the movable protecting member 4 and the cutting mechanism 3 to automatically move to avoid the obstacle, and adjusts a movement distance between the movable protecting member 4 and the cutting mechanism 3 according to the size of the obstacle. When adjusting the movement distance between the movable protecting member 4 and the cutting mechanism 3, the movable protecting member 4 may be controlled to be synchronous with the cutting mechanism 3 to move by a same distance, or the movable protecting member 4 may be controlled to be asynchronous with the cutting mechanism 3 to move by different distances. When there is no obstacle in front, the movability control module controls the movable protecting member 4 and the cutting mechanism 3 to restore an original state. When there is an obstacle in front but the obstacle is excessively large, the movability control module controls the movable protecting member 4 and the cutting mechanism 3 not to move, and controls the autonomous lawn mower 1 according to an actual case to stop or steer to avoid colliding with the obstacle. As shown in FIG. 57, because some wheels, for example, drive wheels, of the autonomous lawn mower 1 are relatively large, if the test arm 61 is placed flat on the ground, when the drive wheels 201 of the autonomous lawn mower 1 climb on the test arm 61, the autonomous lawn mower 1 tilts. In this case, if the distance between the cutting mechanism 3 of the autonomous lawn mower 1 and the ground is relatively small, the test arm 61 may encounter the cutting element 32, resulting in the risk that a child's arm is prone to injury.

In an embodiment, as shown in FIG. 58, the autonomous lawn mower further includes a bendable flexible blocking member disposed at a bottom side of the housing. In the advancing direction of the autonomous lawn mower, the blocking member 19 is located on a front side and/or a rear side of the movement module. The blocking member includes a housing end fixed on the bottom side of the housing and a free end movable relative to the housing end under the action of an external force. The housing end and the movement module are disposed at intervals, the free end is capable of abutting against the movement module under the action of an external force, to prevent the movement module from moving forward to run over a child's arm. As shown in FIG. 58. The blocking member 19 is disposed in front of the drive wheels, to prevent the drive wheels 201 to move forward to climb a child's arm. As shown in FIG. 58, when the drive wheels 201 encounter the test arm 61, the flexible blocking member 19 is located between the test arm 61 and the drive wheels 201, to stop the drive wheels 201 from climbing the test arm 61,

In another embodiment, another manner may be used to stop the drive wheels 201 from climbing a child's arm. For example, two driven wheels are disposed in the front of the autonomous lawn mower 1, and the diameter of each driven wheel is less than or equal to twice the diameter of a child's arm. The diameter of the driven wheel may be set to be less than or equal to 2M. For example, the diameter of the driven wheel may be set to be 80 mm, to make a child's arm not less than a central line of the driven wheels, to prevent the driven wheels from moving over the arm. Because the driven wheels are located in the front of the autonomous lawn mower, the driven wheels cannot move over the arm, and it is more unlikely for the drive wheels to touch the arm.

In another embodiment, the cutting deck protecting member shown in FIG. 4 to FIG. 10 may be disposed below the cutting mechanism 3, so that even if the drive wheels 201 climb on a child's arm, the child's arm can only touch the cutting deck protecting member, but cannot touch the cutting element.

In the foregoing embodiment, to prevent rainwater from accumulating on the protecting assembly 4, a plurality of vertically penetrating water leakage holes 403 may be separately provided in the movable protecting member 41 and the mechanism protecting member 42, to discharge water to the ground in time, thereby avoiding the accumulation of water and preventing water from flowing into electronic elements when a user inverts the machine.

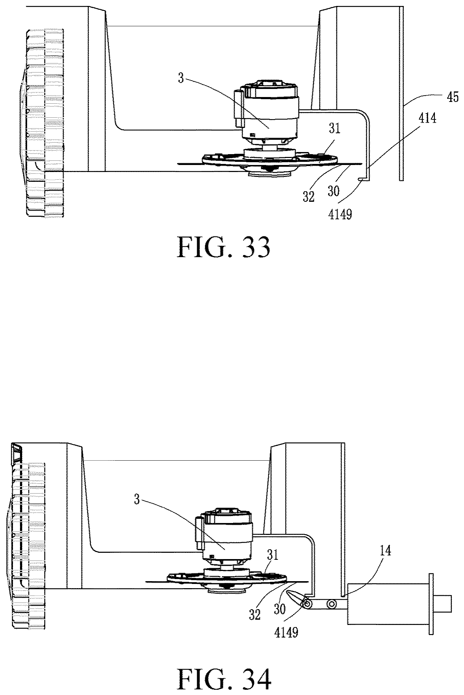

In the foregoing embodiment, the cutting mechanism 3 may be disposed near a central axis in the advancing direction of the autonomous lawn mower 1, or may be disposed on a side of the central axis, to implement cutting to edge. The movable protecting member 41 and/or the mechanism protecting member 42 in corresponding embodiments may also be disposed on a side of the central axis in the advancing direction of the autonomous lawn mower 1, so that while cutting to edge is implemented, a child's finger or arm is prevented from entering the cutting mechanism 3 to avoid accidental injury. As shown in FIG. 33, for example, the movable protecting member 41 and the cutting mechanism 3 are disposed on a side of the central axis. Because in an embodiment, the movable protecting wall lower end 417 is movable relative to the ground, as shown in FIG. 34, when a user lifts the autonomous lawn mower 1, and the user holds two sides of the autonomous lawn mower 1 with hands, fingers may apply an upward pushing force to the movable protecting member 41, to make the movable protecting wall 414 move upward. The hands of the user cannot lift the autonomous lawn mower 1 by applying forces to the movable protecting member 41, but instead can only lift the autonomous lawn mower 1 by applying forces to the outer side protecting wall 14 of the housing 10. In this case, although the movable protecting wall 417 cannot be directly held with the hands, when the outer side protecting wall 14 is held, fingers can still enter below the movable protecting member 41. Therefore, the movable protecting member 41 further includes a lower movable protecting wall 4149 disposed below the cutting element 1, to prevent the user's fingers from entering near the cutting element 32 from below the movable protecting member 41.

Because the movable protecting wall 417 is disposed between the outer side protecting wall 14 and the cutting mechanism 3, the outer side protecting wall 14 is farther than the movable protecting wall 417 from the cutting element 32. When a finger of the user enters the cutting mechanism 3 from the outer side protecting wall 14, a distance by which the finger can reach below the movable protecting member 41 is less than the length of the finger. Therefore, a width of the lower movable protecting wall 4149 in a direction in which the finger enters is less than the length of the finger. In addition, as the spacing between the outer side protecting wall 14 and the movable protecting wall 417 increases, the width of the lower movable protecting wall 4149 in a direction in which the finger enters, that is, in the horizontal direction of the autonomous lawn mower 1 perpendicular to the advancing direction of the autonomous lawn mower, may be set shorter, or even the lower movable protecting wall 4149 does not need to be disposed, so that while the safety of lifting the autonomous lawn mower 1 by the user is ensured, the passability of the autonomous lawn mower 1 is greatly improved.

As shown in FIG. 33 and FIG. 34, the movable protecting wall includes a vertical protecting wall extending in the vertical direction and a horizontal protecting wall that is located below the vertical protecting wall and extends in the horizontal direction. At least one side of the horizontal protecting wall protrudes from a corresponding side of the vertical protecting wall, so that while the movable protecting wall is subjected to the buoyancy of grass, a bearing surface of the movable protecting wall is relatively large, and the movable protecting wall may be subjected to a relatively large grass lift force, thereby improving the passability. As shown in FIG. 33, an inner side of the horizontal protecting wall may protrude from an inner side of the vertical protecting wall, or an outer side of the horizontal protecting wall protrudes from an outer side of the vertical protecting wall, or both the inner side and the outer side of the horizontal protecting wall respectively protrude from the inner side and the outer side of the vertical protecting wall. Specifically, a width of the horizontal protecting wall in the inside-outside direction is 5 mm to 50 mm.

In an embodiment of the present invention, the distance between the upper portion of the movable protecting wall 414 of the movable protecting member 41 and the ground remains unchanged, and a fixed end 4111 of the movable protecting wall is fixed relative to the housing 10, so that the distance between the lower portion of the movable protecting wall 414 and the ground changes, and it is implemented that the distance between the movable protecting wall lower end 417 and the ground is changeable, thereby improving the passability of the autonomous lawn mower 1. In addition, when the movable protecting member 41 is in the free state and is subjected to an external force from outside to inside (from front to rear), the distance between the movable protecting wall lower end 417 and the ground remains less than M, so that a child's arm is blocked by the movable protecting wall 414 from entering the housing 10 to touch the cutting mechanism 3.

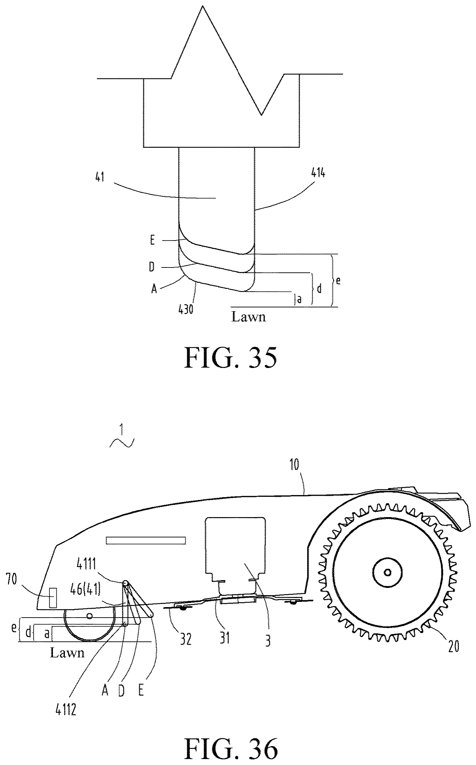

As shown in FIG. 21 to FIG. 23, the movable protecting wall 414 may rotate around an upper end of the movable protecting wall to implement changes in the distance between the movable protecting wall lower end and the ground. Alternatively, as shown in FIG. 35, the movable protecting member 41 is retractable, the upper end of the movable protecting wall 414 is fixed relative to the housing 10. The lower end of the movable protecting wall 414 may use retraction to implement changes in the distance between the movable protecting wall lower end and the ground. A specific retraction manner may be implemented by using elastic deformation, a chute or the like.

As shown in FIG. 21 to FIG. 23, the movable protecting member 41 includes a baffle 46 disposed on the housing 10. The baffle 46 is disposed in at least one of being in front of, on a side of or behind the cutting mechanism. When being disposed in front of the cutting mechanism, the baffle may be referred to as a front baffle. When being disposed behind the cutting mechanism, the baffle may be referred to as a rear baffle. When being disposed on a side of the cutting mechanism, the baffle may be referred to as a lateral baffle. When the baffle 46 is in the free state, a distance between the lower end of the baffle and the ground is less than M. The baffle 46 includes the fixed end 4111 and a movable end 4112. The fixed end 4111 is connected the housing 10. Specifically, the fixed end is fixedly connected to the housing 10. Under the action of an external force, the lower end of the movable end 4112 is movable relative to the bottom shell 101, so that the distance between the lower end of the movable end 4112 and the ground is changeable. In this embodiment, a movable end 4112 of the baffle may rotate around the fixed end 4111, so that the distance between the movable end and the ground is less than M. The baffle 46 includes a movable protecting wall 414 for protection. The movable end 4112 of the baffle 46 may also be referred to as the movable floating wall lower end 417.

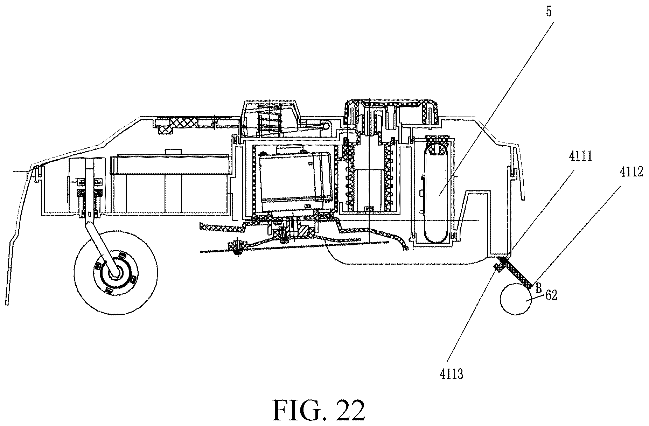

As shown in FIG. 21, in the free state, the movable end 4112 is located at an initial position A. As shown in FIG. 22, when the baffle 46 moves forward and encounters an obstacle, the baffle is subjected to the action of an external force in a direction opposite to the movement direction of the autonomous lawn mower 1, the movable end 4112 rotates to an obstacle surmounting limit position B. During rotation, the movable end 4112 of the baffle 46 may be at least switched between the initial position A and the obstacle surmounting limit position B. In the vertical direction, the distance between the obstacle surmounting limit position B and the ground is greater than the distance between the initial position A and the ground, so that when the autonomous lawn mower 1 moves forward. When encountering an obstacle, the baffle 46 of the movable protecting member 41 can rotate to the obstacle surmounting limit position B, to increase the distance between the movable protecting wall lower end 417 (the movable end 4112) and the ground to quickly pass the obstacle.

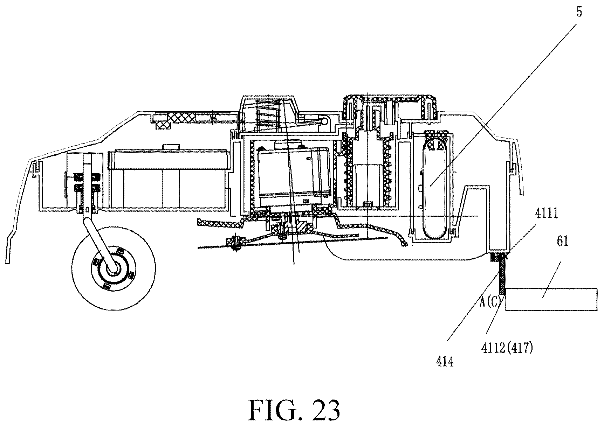

A rotation limit position C for the rotation of the baffle 46 from outside to inside is preset. At the rotation limit position, the distance between the movable end 4112 and the ground is less than M. A safe external force value is preset. For example, an external force of 5 N. When an applied force from outside to inside is applied to the movable protecting wall 414 of the baffle 46 and the applied force from outside to inside does not exceed the preset safe external force value, the movable end 4112 cannot rotate inward or rotates inward within the rotation limit position C, to prevent a child's finger from entering the baffle 46 from outside to inside. As shown in FIG. 23, in an embodiment, when the rotation limit position C is the initial position A, that is, the baffle 46 is subjected to an external force from outside to inside, and an external force value does not exceed the preset safe external force value, the baffle 46 cannot rotate inward. In another embodiment, the rotation limit position C may be a position after inward rotation from the initial position A by a particular angle, as long as it is satisfied that the distance between the rotation limit position C and the ground is less than M. That is, the baffle 46 is subjected to an external force from outside to inside, and an external force value does not exceed the preset safe external force value. The baffle 46 rotates inward and cannot reach a position at which a distance between the movable end 4112 of the baffle and the ground is greater than or equal to M, to avoid entry of a child's finger. A protecting limit position K for the rotation of the baffle 46 from outside to inside is preset. Regardless of the magnitude of an external force that is from outside to inside and is applied to the baffle 46, when the baffle 46 rotates from outside to inside, the baffle cannot exceed the protecting limit position K. In this embodiment, the protecting limit position K is the rotation limit position C. In another embodiment, the protecting limit position K may be different from the rotation limit position C. For example, a safe external force value and an external force threshold are preset. The baffle 46 is located at the rotation limit position. A resistance in the rotation from rear to front is greater than the preset safe external force value and is less than the external force threshold. When an external force less than the preset safe external force value is applied to the baffle 46, the baffle 46 may rotate to the rotation limit position C. When a force greater than the external force threshold is applied to the baffle 46, the baffle 46 may move across the rotation limit position C to reach the protecting limit position K. At the protecting limit position K, the movable end 4112 of the baffle 46 is lower than the cutting element lowest point 30 and/or the distance between the movable end 4112 of the baffle is less than M, to avoid that when the autonomous lawn mower 1 runs over a child's arm as an obstacle, the child's arm is accidentally injured by the cutting element.

The autonomous lawn mower 1 further includes a rotation limiting structure 4113 configured to limit the baffle from exceeding a rotation limit position when moving from outside to inside. A position of the baffle in a free state is different from the rotation limit position. A resistance for the baffle to rotate from outside to inside at the rotation limit position is greater than a resistance for the baffle to rotate from outside to inside in a free state. When the baffle is at the rotation limit position, a distance between the lower end of the baffle and the ground is less than M.

A safe external force value and an external force threshold are preset. The resistance for the baffle to rotate from outside to inside at the rotation limit position is greater than the preset safe external force value and is less than the external force threshold, so that when a force greater than the external force threshold is applied to the baffle, the baffle may cross the rotation limit position.

When an applied force from outside to inside is greater than the external force threshold, the baffle may cross the rotation limit position when rotating from outside to inside, but does not exceed the protecting limit position. When the baffle is located at the protecting limit position, the lower end of the baffle remains lower than the cutting element lowest point or a distance between the lower end of the front baffle and the ground is less than M, where $38\ mm \leq M \leq 40\ mm$.

The autonomous lawn mower further includes a mechanism protecting member disposed between the cutting mechanism and the baffle. The mechanism protecting member includes a mechanism protecting wall disposed between the baffle and the cutting mechanism in the horizontal direction. In the vertical direction, the lower end of the mechanism protecting wall remains lower than the cutting element lowest point.

As shown in FIG. 21 to FIG. 23, in the advancing direction of the autonomous lawn mower 1, the baffle 46 of the movable protecting member 41 is disposed behind the cutting mechanism 3. Certainly, the baffle may also be referred to as a rear baffle. The autonomous lawn mower 1 includes a rear baffle disposed behind the cutting mechanism. The rear baffle includes a fixed end 4111 and a movable end 4112. The fixed end is connected the housing. The movable end 4112 is rotatable around the fixed end, so that the distance between the movable end and the ground changes. The autonomous lawn mower further includes the rotation limiting structure 4113 configured to limit the rear baffle from exceeding a rotation limit position when moving from rear to front.

When the rear baffle is in a free state, a distance between the lower end of the rear baffle and the ground is less than M, where 38 mm ≤ M ≤ 40 mm. When the rear baffle is subjected to an external force in the free state, a resistance for the rear baffle to rotate from front to rear is less than a resistance for the rear baffle to rotate from rear to front. The resistance for the rear baffle to rotate from rear to front at the rotation limit position is greater than or equal to that a resistance for the rear baffle to rotate from rear to front in a free state. A position of the rear baffle in a free state is the same as the rotation limit position. When the rear baffle is subjected to an external force in the free state, the rear baffle can only rotate from front to rear, but cannot rotate from rear to front. A position of the rear baffle in a free state is different from the rotation limit position. The resistance for the rear baffle to rotate from rear to front at the rotation limit position when the rear baffle is at the rotation limit position is greater than the resistance for the rear baffle to rotate from rear to front in a free state. When the rear baffle is at the rotation limit position, a distance between the lower end of the rear baffle and the ground is less than M, where 38 mm ≤ M ≤ 40 mm. A safe external force value and an external force threshold are preset. The resistance for the rear baffle to rotate from rear to front at the rotation limit position is greater than a safe external force value is preset and is less than the external force threshold. When an applied force from rear to front is greater than the external force threshold, the rear baffle may cross the rotation limit position when rotating from rear to front, but does not exceed the protecting limit position. When the rear baffle is located at the protecting limit position, the lower end of the rear baffle remains lower than the cutting element lowest point or a distance between the lower end of the rear baffle and the ground is less than M, where 38 mm ≤ M ≤ 40 mm.

The autonomous lawn mower 1 further includes a mechanism protecting member 42 disposed between the cutting mechanism 3 and the rear baffle. The mechanism protecting member includes a mechanism protecting wall disposed between the rear baffle and the cutting mechanism in the horizontal direction. In the vertical direction, the lower end of the mechanism protecting wall remains lower than the cutting element lowest point.

In an embodiment, the rotation limiting structure 4113 is at least partially disposed on the housing and/or the rear baffle. For example, the rotation limiting structure 4113 is at least partially disposed on one of the housing and the rear baffle. When the rear baffle is at the rotation limit position, the rotation limiting structure 4113 at least partially abuts against the other of the housing and the rear baffle. When the two abut against each other, a distance between the lower end of the rear baffle and the ground is less than M, where 38 mm ≤ M ≤ 40 mm.

The autonomous lawn mower 1 further includes a lateral baffle disposed on a side of the cutting mechanism 3. The lateral baffle includes a lateral fixed end connected to the housing and a lateral movable end rotatable around the lateral fixed end. The autonomous lawn mower further includes a lateral rotation limiting structure configured to limit a rotational degree of rotation of the lateral movable end of the lateral baffle from outside to inside,

The autonomous lawn mower 1 further includes a front baffle disposed in front of the cutting mechanism 3. The front baffle includes a front fixed end connected to the housing and a front movable end rotatable around the front fixed end. The autonomous lawn mower further includes a front rotation limiting structure configured to limit a rotational degree of rotation of the front movable end of the lateral baffle from outside to inside. In the horizontal direction, when the rear baffle is in the free state, a range of a distance between an outermost edge of the movable end of the rear baffle and the cutting element is greater than 58 mm or is 63 mm to 75 mm.

As shown in FIG. 23, when a child's arm enters the housing 10 from rear to front, the arm is blocked by the baffle 46, the baffle 46 is subjected to a force from outside to inside. When the baffle 46 is in the free state, a resistance for the baffle to rotate from inside to outside is less than a resistance for the baffle to rotate from outside to inside. In this embodiment, in the free state, an initial position A of the movable protecting wall lower end 417 (the movable end 4112) a is a rotation limit position C for the movable protecting wall lower end to rotate from outside to inside, and is at the same time the protecting limit position K. The baffle 46 can only rotate from inside to outside, but cannot rotate from outside to inside, and the distance between the initial position A and the ground is less than M. Therefore, when a child's arm applies an external force to the movable protecting wall 414 from rear, the movable protecting wall 414 cannot rotate clockwise, to ensure that when the movable protecting member 41 is subjected to the action of an external force from outside to inside in a free state, the distance between the movable protecting wall lower end 417 and the ground remains less than M, so that a child's arm is blocked by the movable protecting wall 414 of the baffle 46 from entering the housing 10, making it impossible for the child's arm to touch the cutting mechanism 3. In another embodiment, at the protecting limit position K, the movable protecting wall lower end 417 (the movable end 4112) is the position of the cutting element lowest point 30. When a child's arm enters the housing 10 from rear to front, the arm is blocked by the baffle 46. The baffle 46 is subjected to a force from outside to inside. When the baffle rotates to the rotation limit position C, the movable end 4112 of the baffle 46 is lower than the cutting element lowest point 30, to avoid that when the autonomous lawn mower 1 runs over a child's arm as an obstacle, the child's arm is accidentally injured by the cutting element. The autonomous lawn mower 1 further includes the rotation limiting structure 4113 configured to limit the movable protecting wall 414 of the baffle 46 from exceeding a rotation limit position C when rotating from outside to inside, to limit a rotational scale of the movable protecting wall 414 of the baffle 46. When the rotation limit position C and the protecting limit position K are different positions, the autonomous lawn mower 1 includes the rotation limiting structure 4113 configured to limit the movable protecting wall 414 of the baffle 46 from exceeding a rotation limit position C when rotating from outside to inside and a protecting limiting mechanism configured to limit the movable protecting wall 414 of the baffle 46 from exceeding the protecting limit position K when rotating from outside to inside.

In this embodiment, when the baffle 46 is in the free state, the movable protecting wall 414 is in a vertical state or an approximately vertical state, so that the movable protecting wall lower end 417 (the movable end 4112) is at the lowest point in a rotation process of the movable protecting wall 414, to ensure that when the movable protecting wall 414 is subjected to an applied force from an obstacle in front, a distance between a position of the movable protecting wall after rotation and the ground remains greater than the distance between the initial position A and the ground, to ensure quick passage after encountering the obstacle.

In the foregoing embodiment, when the baffle 46 is subjected to an applied force from rear in the movement direction of the autonomous lawn mower 1, a rotation limit position C and a protecting limit position K to which the baffle rotates under the action of an external force from outside to inside are the same as the initial position A in the free state. In another embodiment, when the movable protecting member 41 is subjected to an applied force (a force from outside to inside) from rear in the movement direction of the autonomous lawn mower 1, the rotation limit position C and the protecting limit position K of the movable protecting member may be different from the initial position A, as long as when the baffle is at the rotation limit position C, a distance between the lower end of the baffle and the ground is less than M, and when the baffle is at the protecting limit position K, a distance between the lower end of the baffle and the ground is less than M, or the protecting limit position K remains lower than the cutting element lowest point 30.

In this embodiment, during rotation of the baffle 46 of the movable protecting member 41 under an external force, the movable protecting wall lower end 417 may be switched among the initial position A, the obstacle surmounting limit position B, and the protecting limit position K. In the foregoing embodiment, in the movement direction of the autonomous lawn mower 1, the rotatable movable protecting member 41 is disposed behind the cutting mechanism 3, so that a direction (from front to rear) in which the obstacle moves relative to the autonomous lawn mower 1 is opposite to a direction (from rear to front) of an external force applied to the movable protecting member from outside to inside, and the movable protecting member 41 is controlled to be rotatable in the direction in which the obstacle moves relative to the autonomous lawn mower 1 to pass the obstacle, and limit the rotation of the baffle 46 in the direction from outside to inside (from rear to front), to avoid that a child's arm passes through the baffle 46 to touch the cutting mechanism 3. In addition, the movement module 20 of the autonomous lawn mower 1 includes drive wheels disposed in the rear of the autonomous lawn mower 1 and driven wheels disposed in front of the drive wheels. In this embodiment, the baffle 46 of the movable protecting member 41 is disposed in the rear of the autonomous lawn mower 1. That is, the baffle 46 is disposed behind the cutting mechanism 3 and is located near the drive wheels in the rear, to effectively avoid that the drive wheels are lifted by an obstacle and as a result the drive wheels are suspended in air, fail to touch the ground, and cannot provide a driving force, thereby greatly improving the passability of the autonomous lawn mower 1.

In another embodiment, as shown in FIG. 36 to FIG. 38, in the advancing direction of the autonomous lawn mower 1, the foregoing baffle 46 is disposed in front of the cutting mechanism 3. When the baffle 46 is subjected to an external force from outside to inside (from front to rear) in a free state, the movement of the baffle 46 does not exceed a preset movement range. Within the preset movement range, the distance between the movable protecting wall lower end 417 and the ground remains less than M, so that a child's arm is blocked by the movable protecting wall 414 from entering the housing 10, and/or the movable protecting wall lower end 417 remains lower than the cutting element lowest point 30, making it impossible for the child's arm to touch the cutting mechanism 3.

As shown in FIG. 36, when the baffle 46 of the movable protecting member 41 is in a free state, the movable protecting wall lower end 417 (the movable end 4112) is located at an initial position A. When the autonomous lawn mower 1 moves forward, encounters an obstacle, and moves to a limit position under an applied force of the obstacle, the movable protecting wall lower end 417 (the movable end 4112) is located at an obstacle limit position B. When the movable protecting wall lower end moves to a limit position under the action of an external force from outside to inside, the movable protecting wall lower end 417 is located at the protecting limit position K. Because a direction of the force applied by the obstacle to the movable protecting wall 414 is the same as a direction of an external force from outside to inside to which the movable protecting wall 414 is subjected, the obstacle limit position B and the protecting limit position K are the same position.

The autonomous lawn mower 1 further includes a limit module (not shown) configured to limit a movement range of the baffle 46 when the baffle is subjected to an external force from outside to inside in a free state. The limit module limits that the movement range of the movable protecting member 41 does not exceed a preset movement range, so that a distance between the protecting limit position K and the ground remains less than M, and a child's arm is blocked by the movable protecting wall 414 from entering the housing 10, and/or, in the vertical direction, the protecting limit position K remains lower than the cutting element lowest point 30, making it impossible for the child's arm to touch the cutting mechanism 3. The foregoing limit module may be a mechanical structure, and directly limits a rotational angle of the movable protecting member 41, to limit a movement range of the movable protecting member. Alternatively, the rotational angle of the movable protecting member 41 may be electronically detected. When the movable protecting member 41 is subjected to an external force from outside to inside in a free state and the movement range of the movable protecting member exceeds a preset movement range, a control module 50 controls the autonomous lawn mower 1 to execute a corresponding predetermined protecting instruction. Specifically, a protecting instruction may be preset. The protecting instruction includes making the cutting mechanism 3 stop working, making the autonomous lawn mower 1 reverse, stop moving or shut down or the like.

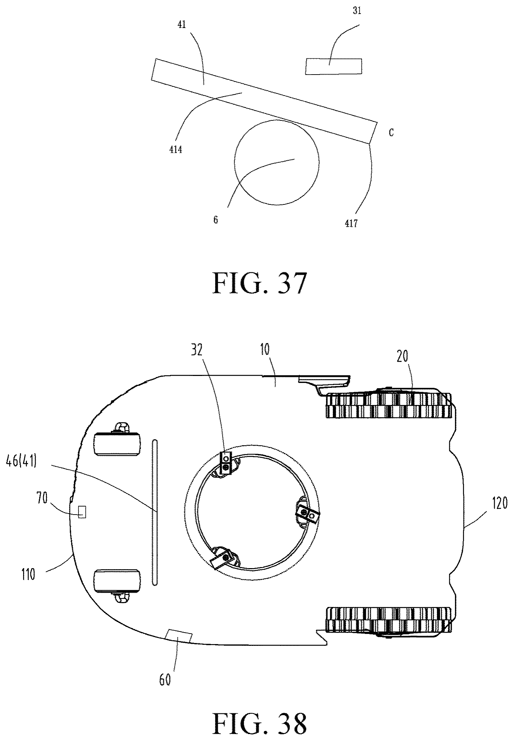

In an embodiment, as shown in FIG. 37, in the vertical direction, the movable protecting wall lower end 417 (the movable end 4112) is located below the cutting mechanism 3. In the horizontal direction, the movable end 4112 is closer than the cutting element 32 to the interior of the autonomous lawn mower 1, so that when a living body such as a child's finger or a small animal enters the cutting mechanism 3 through the movable end 4112, the living body is blocked by the movable protecting wall 414, and cannot touch the cutting element 32 from bottom to top, thereby avoiding accidental injury by the cutting element 32.

In another embodiment, as shown in FIG. 36 and FIG. 38, a detection switch 60 configured to detect a position change of the movable protecting member 41 is further mounted on the housing 10. The detection switch 60 can detect the position change of the movable protecting member 41, and send detection data to the control module 50, the control module 50 is configured to control the autonomous lawn mower 1 according to detection information of the detection switch 60 to execute a corresponding protecting instruction.

When the autonomous lawn mower automatically walks, the movable protecting member 41 is closer than the cutting mechanism 3 to the outer wall of the housing 10. In this embodiment, for example, the movable protecting member 41 is the baffle 46. Certainly, in another embodiment, the movable protecting member 41 may have another type. In this embodiment, the movable protecting member 41, that is, the baffle 46, first touches grass to be cut, a plant or an obstacle, and then the movable protecting member 41 moves in a direction away from a lawn relative to the housing 10 under the action of a contact force, making a ground clearance of the bottom of the movable protecting member 41 gradually increase. Therefore, the movable protecting member 41 can protect the cutting element 32 of the cutting mechanism 3.

The movable protecting member 41 and the housing 10 may be connected in a relatively movable manner, which may be implemented in different manners. For example, as shown in FIG. 36, the movable protecting member 41 is rotatably connected to the housing 10 by a rotating shaft, and is rotatable relative to the housing 10 toward the cutting blades. As shown in FIG. 35, the movable protecting member 41 may be slidably connected to the housing 10, so that the housing 10 can move up and down in a height direction, to move away from or toward the lawn.

In this embodiment, the detection switch 60 detects position information of the movable protecting member 41, and sends detection information to the control module 50. The control module is electrically connected to the detection switch to receive detection information, and controls the movement module and/or the cutting mechanism according to the detection information sent by the detection switch to work.

When the detection switch 60 does not detect that the movable protecting member 41 reaches a predetermined limit position, the control module 50 controls the movement module 20 to walk normally and the cutting mechanism 3 to rotate. When the detection switch 60 detects that the movable protecting member 41 reaches the predetermined limit position, the detection switch 60 is triggered, the control module 50 controls the autonomous lawn mower 1 to execute a corresponding predetermined protecting instruction. For example, the protecting instruction is making the movement module 20 and/or the cutting mechanism 3 stop working, or reducing a running speed of the movement module 20 and/or the cutting mechanism 3, thereby implementing cutting protection for the autonomous lawn mower 1.

Specifically, the inventor of the present invention finds through research that grass or plants are cleaning objects of the autonomous lawn mower 1 and the movable protecting member 41 need to pass grass or plants. Grass or plants tend to lean, and therefore a rotational angle or an upward movement distance of the movable protecting member 41 needs to be limited. Therefore, when the movable protecting member 41 reaches a predetermined limit position (defined as a limit position for grass or a plant to pass), an object that can pass the movable protecting member 41 may be considered as grass or a plant. If the rotational angle or the movement distance of the movable protecting member 41 is excessively large, it indicates that the movable protecting member 41 may touch an obstacle, and the cutting blade 32 may be damaged. Therefore, a touched object of the movable protecting member 41 may be learned by detecting the position of the movable protecting member 41.

In some embodiments, there may be one predetermined limit position, and the detection switch 60 performs detection once before the autonomous lawn mower 1 is controlled to perform the predetermined protecting instruction. There may be at least two predetermined limit positions. The detection switch 60 controls the autonomous lawn mower 1 according to different degrees of the predetermined limit positions to execute protecting instructions of different degrees. The predetermined limit positions include a first predetermined position D and a second predetermined position E.

As shown in FIG. 36, the movable protecting member 41 is disposed to be switched relative to the housing 10 between the initial position A and the first predetermined position D. The movable protecting member 41 respectively has an initial ground clearance a and a first ground clearance d at the initial position A and the first predetermined position D. The initial ground clearance a and the first ground clearance d are both less than a ground clearance of the cutting element 32. The first ground clearance d is greater than the initial ground clearance a.

For the autonomous lawn mower in this embodiment, during cutting work, the movable protecting member 41 first touches an object. When the movable protecting member 41 touches grass or a plant, the movable protecting member 41 does not move to the first predetermined position D. Therefore, the detection switch 60 is not triggered. When the movable protecting member 41 reaches the first predetermined position D under the action of a contact force, it indicates that it is highly probably that the movable protecting member 41 touches an obstacle. However, in this case, the detection switch 60 has been triggered. The control module 50 reduces the running speed of the movement module 20 and/or the cutting mechanism 3. In this case, even if the obstacle touches the cutting element 32, there is slight or even no damage to the cutting element 32, thereby implementing cutting protection. In addition, because the position of the movable protecting member 41 relative to the housing 10 is changeable, while cutting protection is implemented, a ground clearance of the housing 10 does not need to be reduced, thereby ensuring that the autonomous lawn mower has adequate passability.

For example, in FIG. 36, the movable protecting member 41 rotates relative to the housing 10. At the initial position A, the movable protecting member 41 may be perpendicular to a lawn. The rotational angle is 30 degrees when the movable protecting member 41 reaches to the first predetermined position D. That is, it is defined as a critical point that the rotational angle of the movable protecting member 41 is 30 degrees. When the rotational angle reaches 30 degrees, cutting protection is implemented. In another implementation, the movable protecting member may have a particular angle from the vertical direction at the initial position A, inclining toward the outer wall of the housing 10. The rotational angle when the movable protecting member 41 rotates to the first predetermined position D is not necessarily 30 degrees, and depends on the density and hardness of grass and plants at a working site.

In this embodiment, the cutting protection includes reducing the running speeds of the movement module 20 and/or the cutting mechanism 3, which may be alternatively or simultaneously implemented. For example, when the movable protecting member 41 moves to the first predetermined position D, the detection switch 60 is triggered, and the control module 50 may reduce a walking speed of the movement module 20 and at the same time reduce the rotational speed of the cutting mechanism 3.

The detection switch 60 may be a contact switch such as a pressure sensor or a Hall switch, and may adapt to severe working environments below the housing 10. Specifically, the detection switch 60 may be disposed below the housing 10. The movable protecting member 41 touches the detection switch 60 when rotating to the first predetermined position D, to trigger the detection switch 60, the detection switch 60 generates a trigger signal. The detection switch 60 may be a non-contact sensor such as an ultrasonic sensor.

In this embodiment, the detection switch 60 is added to detect the position change of the movable protecting member 41. After receiving the detection data from the detection switch 60, the control module 50 may control a circuit to change the magnitude of input currents of the movement module 20 and the cutting mechanism 3 to implement speed reduction and change the direction of a current to implement reverse walking of the movement module 20.

In some embodiments, the movable protecting member 41 is at the first predetermined position D. When the detection switch 60 is triggered, the control module 50 controls the movement module 20 to reduce the speed to a predetermined speed and reduce the speed to zero and walk reversely or reduce to zero; and/or controls the cutting mechanism 3 to reduce the speed to a predetermined speed greater than zero, or reduce the speed to zero. Specifically, the movement module 20 may reduce the speed and continue moving forward, may reduce the speed to zero and walk reversely, that is, reverse, or may reduce the speed to zero, that is, brake. The cutting mechanism 3 may reduce the speed and continue rotating or simply brake and stop rotating. That is, the movement module 20 and the cutting mechanism 3 both reduce the speed first. However, the degree of speed reduction may be flexibly set. Reversing may be considered as special speed reduction.

In some embodiments, as shown in FIG. 36, the movable protecting member 41 further has a second predetermined position E relative to the housing 10. The movable protecting member 41 has a second ground clearance e at the second predetermined position E. The second ground clearance is greater than the first ground clearance. That is, at the second predetermined position E, the movable protecting member 41 has a larger ground clearance, and is farther away from a lawn.

During actual working, if the movable protecting member 41 reaches the first predetermined position D, it may be warned that the movable protecting member 41 may touch an obstacle or relatively hard grass or plants. In this case, the movable protecting member 41 passes the first predetermined position D, and then, in this case, it is at least not expected to shut down the autonomous lawn mower 100.

For this, in this embodiment, the second predetermined position E is further set. When the movable protecting member 41 is at the first predetermined position D, the detection switch 60 is triggered and generates a first trigger signal. The control module 50 controls the movement module to reduce the speed to a predetermined speed greater than zero and continue moving forward. When the movable protecting member 41 is at the second predetermined position E, the detection switch 60 is triggered and generates a second trigger signal. The control module 50 controls the movement module 20 to reduce the speed to zero and walk reversely or brake the movement module 20. That is, when the detection switch 60 is triggered for the first time, the movement module reduces the speed and moves forward. When the movable protecting member 41 reaches the second predetermined position E, because the detection switch 60 is triggered for the second time, it is determined that the movable protecting member 41 touches an obstacle, and stricter cutting protection needs to be implemented, and therefore the movement module 20 directly stops still or simply reverse.

In a feasible implementation, the detection switch 60 is a contact switch disposed on the housing 10. The detection switch can be triggered when the movable protecting member 41 reaches the first predetermined position D. The detection switch 60 can be triggered again when the movable protecting member 41 reaches the second predetermined position E. That is, the detection switch 60 is triggered only when the movable protecting member 41 reaches the first predetermined position D or the second predetermined position E.

In another feasible implementation, the detection switch 60 is a sliding rheostat switch disposed on the housing 10. The movable protecting member 41 is connected to a movable part of the sliding rheostat switch. In this manner, the detection switch 60 remains triggered. However, trigger signals are different when the movable protecting member 41 reaches the first predetermined position D and the second predetermined position E. For example, feedback current signals given to the control module 50 have different values, so that the control module 50 may generate different control instructions.

In some embodiments, as shown in FIG. 38, the housing 10 has a front end 110 and a rear end 120. A direction from the rear end 120 to the front end 110 is defined as the advancing direction of the autonomous lawn mower 100. A direction from the front end 110 to the rear end 120 is defined as a reversing direction of the autonomous lawn mower 100. A direction perpendicular to the advancing direction or the reversing direction is defined as a transverse direction. The movable protecting member 41 is at least partially located between the front end 110 and the cutting mechanism 3, or is at least partially located between the rear end 120 and the cutting mechanism 3. In other words, at least a partial structure of the movable protecting member 41 is disposed on a front side or a rear side of the cutting mechanism 3, and protects the cutting mechanism 3 when the autonomous lawn mower 100 advances or reverses. At least a partial structure of the movable protecting member 41 may be disposed on a rear side of the cutting mechanism 3, and protects the cutting mechanism 3 when the autonomous lawn mower 100 reverses. Alternatively, each of the front side and the rear side of the cutting mechanism 3 is provided with the movable protecting member 41.

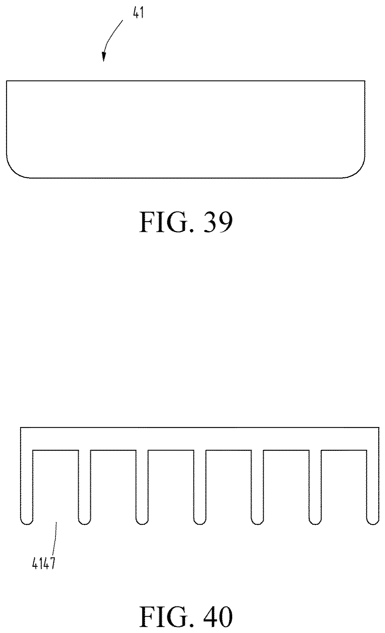

In the arrangement manner of the movable protecting member 41 shown in FIG. 38, the movable protecting member 41 is completely located between the front end 10 and the cutting mechanism 3. As shown in FIG. 39, the movable protecting member 41 may have a plate form. As shown in FIG. 40, the movable protecting member 41 may have a comb form. Specifically, the bottom of the movable protecting member 41 close to the lawn is provided with a plurality of grass inlet holes 510. A spacing of the movable grass inlets 4147 is set to 60 mm to 40 mm to allow only grass and plants to pass but can block an obstacle from passing.

In another arrangement manner of the movable protecting member 41, the movable protecting member 41 is located on a left side or a right side of the cutting blade, or the movable protecting member 41 is provided on each of the left side and right side of the cutting mechanism 3. The movable protecting member 41 at least partially extends between the front end 110 and the cutting mechanism 3, or at least partially extends between the rear end 120 and the cutting mechanism 3.

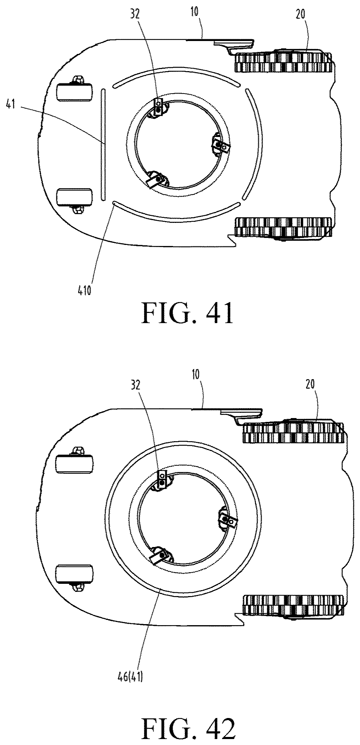

In a specific implementation structure, as shown in FIG. 41, each side of the cutting mechanism 3 is provided with the movable protecting member 41. The movable protecting member 41 is approximately arc-shaped, so that the first one of the two end portions 410 extends between the front end 110 and the cutting mechanism 3, and the second one of the two end portions 410 extends between the rear end 120 and the cutting mechanism 3. In this case, when the autonomous lawn mower 100 advances or reverses, the end portions 410 of the movable protecting member 41 can reach an obstacle before the cutting mechanism 3, thereby providing protection.

Further, the movable protecting member 41 is provided all around the cutting mechanism 3. Specifically, as shown in FIG. 41, in one manner, a plurality of movable protecting members 41 are disposed at intervals in a circumferential direction of the cutting mechanism 3. Further, as shown in FIG. 41, in another manner, the movable protecting member 41 surrounds the cutting mechanism 3. In this case, the movable protecting member 41 may be an integral one or may be formed by splicing a plurality of movable protecting members 41.

In some embodiments, as shown in FIG. 35, the movable protecting member 41 may be slidably connected to the housing 10, so that the housing 10 can move up and down in a height direction, to move away from or toward the lawn. With reference to FIG. 2 and FIG. 6, the bottom of the movable protecting member 41 away from the cutting mechanism 3 is provided with a chamfer 430. In this case, grass or a plant first touches the chamfer 430, and is more likely to lean to pass the movable protecting member 41. In this case, a movement distance required for the movable protecting member 41 is small, and a space that needs to be occupied below the housing 10 is small, thereby facilitating a compact structure. Further, a surface of the movable protecting member 41 at the chamfer 430 is a convex arc-shaped surface, making it easier for grass or plants to pass the movable protecting member 41.

In some embodiments, as shown in FIG. 36 and FIG. 37, the autonomous lawn mower 100 further includes an infrared sensor 70 configured to detect a living body. The infrared sensor 70 is disposed on a side of the movable protecting member 41 away from the cutting mechanism 3. The control module 50 is configured to receive detection data of the infrared sensor 70, thereby implementing cutting protection for the autonomous lawn mower. After detecting a living body, the infrared sensor 70 implements cutting protection for the autonomous lawn mower, to avoid an injury event.

The cutting protection has a plurality of implementation manners. For example, the cutting protection is braking the cutting mechanism 3, and/or making the movement module 20 drive the housing 10 to reversely walk; and/or making the movement module 20 drive the housing 10 to turn. After detecting a living body, the infrared sensor 70 may adopt one or more of braking the cutting mechanism 3, making the autonomous lawn mower 100 reverse or turn, and the like to implement cutting protection.

In some embodiments, the foregoing embodiment in which only one end of the movable protecting member 41 is movable may be combined with the embodiment with the mechanism protecting member 42. The autonomous lawn mower 1 further includes a mechanism protecting member 42 disposed between the baffle 46 and the cutting mechanism 3 in the horizontal direction. The mechanism protecting member 42 includes a mechanism protecting wall 424 disposed between the baffle 46 and the cutting mechanism 3 in the horizontal direction. In the vertical direction, the mechanism protecting wall lower end 47 remains lower than the cutting element lowest point. For a specific structure of the mechanism protecting member 42, reference may be made to the foregoing embodiment with the mechanism protecting member 42. Details are not described herein again.

In some embodiments, as shown in FIG. 24 and FIG. 25, in the advancing direction of the autonomous lawn mower 1, the movable protecting member 41 at least includes two sub-movable protecting members that move relatively independently. The movable protecting member 41 includes a front movable protecting member 47 at least disposed in the front of the autonomous lawn mower 1 and provided with a front movable protecting wall 474 and a rear movable protecting member 48 at least disposed in the rear of the autonomous lawn mower 1 and provided with a rear movable protecting wall 484. The front movable protecting member 47 and the rear movable protecting member 48 may be referred to as the sub-movable protecting members. The front movable protecting member 47 and the rear movable protecting member 48 are disposed independently. The front movable protecting member 47 may be not connected to the rear movable protecting member 48, so that when the front movable protecting member 47 and the rear movable protecting member 48 are subjected to the action of an external force, a front movable protecting wall lower end 477 (a lower end of the front movable protecting wall 474) and a rear movable floating wall lower end 487 (the lower end of the rear movable protecting wall 484) separately move independently relative to the ground. Because the autonomous lawn mower 1 has a complex internal structure, if the integral movable protecting member 48 is formed on the autonomous lawn mower 1, the design is very difficult since the space is insufficient in some positions. In this embodiment, the movable protecting member 41 is designed into at least two independent sub-movable protecting members. Specific positions and a specific quantity of the sub-movable protecting members 41 may be arranged according to the space on the autonomous lawn mower 1, so that the overall structure of the autonomous lawn mower 1 can be arranged in a more compact manner.

In this embodiment, when the front movable protecting member 47 is subjected to a vertically upward force, the front movable protecting member 47 is movable in the vertical direction. When the rear movable protecting member 48 is subjected to a vertically upward force, the rear movable protecting member 48 is not movable in the vertical direction. The front movable protecting member 47 may be the foregoing movable protecting member that generally moves upward under the action of an external force, or may be a movable protecting member that uses retraction or the like to implement movement of the movable end of the movable protecting member from bottom to top. The front movable protecting member 47 further includes lateral movable protecting walls 475 disposed on two sides of the autonomous lawn mower 1. The lateral movable protecting walls 475 and the front movable protecting wall 475 are connected to each other, so that when the front movable protecting member 47 is subjected to the action of an external force, the lateral movable protecting walls 475 and the front movable protecting wall 475 are synchronously movable in the vertical direction. The autonomous lawn mower 1 further includes a protecting member upward guide mechanism 45 configured to guide the front movable protecting member 47 to move relative to the housing in the vertical direction. During upward movement of the front movable protecting member 47 under an external force, the front movable protecting wall 474 and the lateral movable protecting walls 475 generally move upward. The rear movable protecting member 48 includes a baffle 46 with an end fixed to the housing. The baffle 46 includes a fixed end 4111 fixed to the housing and a movable end 4112 rotatable around the fixed end 4111 under an external force.

When the autonomous lawn mower 1 moves on a lawn, under the action of a lift force from bottom top by grass, the front movable protecting member 47 of the movable protecting member moves from bottom to top under a force, to avoid grass grinding or reduce a grass grinding height, so that a distance between the cutting element and the lower end of the front movable protecting member 474 is reduced, thereby improving cutting quality. Because the cutting mechanism 3 of the autonomous lawn mower 1 is in front of the rear movable protecting member 48 behind the cutting mechanism, when the rear movable protecting member 48 moves above a lawn, grass has been cut, and grass grinding is not caused.

The housing 10 further includes an outer side protecting wall 14 located on an outer side of the movable protecting member 41. A distance between the lower end of the outer side protecting wall 14 and the ground is less than 75 mm, to avoid that an adult's arm enters the cutting mechanism 3. In an embodiment, the distance between the lower end of the outside protecting wall 14 and the ground is 35 mm to 55 mm, so that while it is avoided that an adult's arm enters the cutting mechanism 3, a tilt angle when a child's arm enters the housing 10 in an inclined manner from below the outside protecting wall 14 is further limited, thereby reducing a risk that a child's arm touches the cutting mechanism 3 from below in an inclined manner.

In an embodiment, as shown in FIG. 60, the autonomous lawn mower 1 at least includes two protecting members, which are an inner protecting member 91 provided with an inner protecting wall 911 an outer protecting member 92 provided with an outer protecting wall 921. In the horizontal direction, the outer protecting wall 921 is located on the outer side of the cutting mechanism 3. The inner protecting wall 911 is located between the outer protecting wall 921 and the cutting mechanism 3. At any cutting height, when the outer protecting member 92 is in a free state under no external force, the ground clearance of the lower end of the outer protecting wall 921 is less than M, where 38 mm ≤ M ≤ 40 mm, to avoid that a child's finger enters the cutting mechanism 3. When the inner protecting wall 911 is subjected to the action of an external force, a lower end of the inner protecting wall 911 remains lower than the cutting element lowest point, to avoid that when a moving child's arm enters, the arm touches the cutting element 32.

The inner protecting member 91 and the outer protecting wall 92 may be separately movable protecting members or unmovable fixed members.

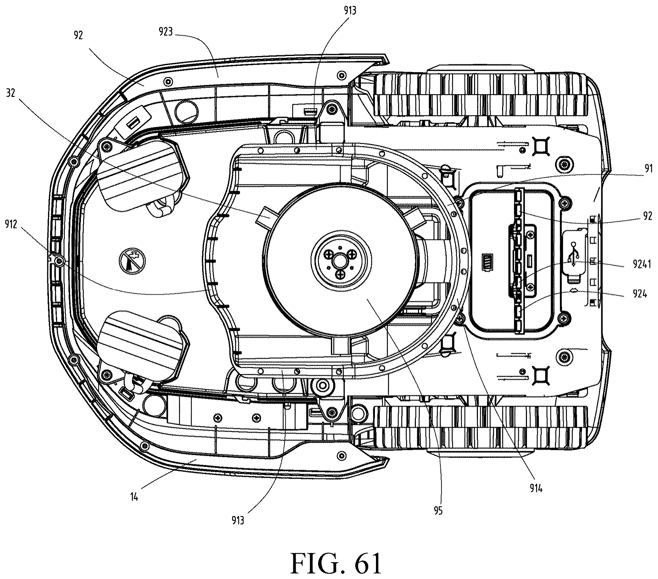

In an embodiment, as shown in FIG. 60 and FIG. 61, the inner protecting member 91 and the outer protecting member 92 may both be unmovable fixed members. The outer protecting member 91 includes a fixed protecting member fixed relative to the bottom shell 101 in the vertical direction. For example, the outer protecting wall 911 of the fixed protecting member may be a part of the housing. The ground clearance of the fixed protecting member is less than M and greater than M/2.

The inner protecting member 91 is a mechanism protecting member fixed relative to the cutting mechanism in the vertical direction. As shown in FIG. 60 and FIG. 61, the inner protecting wall 911 includes at least one of a front inner protecting wall 912 located in front of the cutting mechanism 3, two lateral inner protecting walls 913 located on two sides of the cutting mechanism or a rear inner protecting wall 914 located behind the cutting mechanism.

The inner protecting wall 911 includes a front inner protecting wall 912 located in front of the cutting mechanism, two lateral inner protecting walls 913 located on two sides of the cutting mechanism, and a rear inner protecting wall 914 located behind the cutting mechanism 3. The front inner protecting wall, the rear inner protecting wall, and the lateral inner protecting walls together define the inner protecting wall 911 that is circumferentially closed. Bottommost portions in the 360-degree circumferential direction of the inner protecting wall 913 are all lower than the cutting element lowest point. The lower end of the inner protecting wall 911 has a continuously extending smooth surface.

Certainly, in another embodiment, the bottommost portions in the 360-degree circumferential direction of the inner protecting wall may be at least partially higher than the cutting element lowest point, and partially lower than the cutting element lowest point. Lengths by which portions higher than the cutting element lowest point continuously extend toward in the circumferential direction are all less than M, so that even if a child's arm enters the cutting mechanism, the arm cannot touch the cutting element.

The cutting mechanism 3 may be fixed relative to the bottom shell 101 in the vertical direction or is relatively movable. For example, the cutting mechanism 3 and the bottom shell 101 are relatively fixed in the vertical direction. The cutting mechanism 3 and the bottom shell 101 are relatively fixed in the vertical direction. The autonomous lawn mower 1 further includes a cutting deck 31 configured to mount the cutting element 32. The cutting element 32 is disposed above the cutting deck 31. The autonomous lawn mower 1 further includes a bottom protecting member 95 disposed below the cutting mechanism 3. The bottom of the bottom protecting member 95 has a smooth surface. A cavity 951 for accommodating the cutting element 32 and the fastening member 33 is provided between the bottom protecting member 95 and the cutting mechanism 3. The cutting element 32 is partially accommodated in the cavity 951. In the foregoing embodiment, for example, the bottom protecting member 95 is assembled below the cutting mechanism 3. In another embodiment, the bottom protecting member 95 and the cutting mechanism 3 may be partially integrally formed, for example, is directly formed by partially extending from the cutting mechanism 3. Specifically, the bottom protecting member 95 in this embodiment may be the structure of the cutting deck protecting member 35 shown in FIG. 10, or certainly may have another structure.

As shown in FIG. 60, in the vertical direction, a range of a distance between the bottom protecting member 95 and the cutting element 32 is 0 mm to 30 mm. In the transverse direction, a range of a distance between the bottom protecting member 95 and the inner protecting member 91 is 10 mm to 30 mm. To avoid that in an extreme case shown in FIG. 10, a child's arm enters the cutting mechanism from the front or two sides of the autonomous lawn mower to touch the cutting element.

Specifically, the inner protecting member 91 may be a mechanism protecting member 42 fixed relative to the cutting mechanism 3 in the vertical direction in the embodiments shown in FIG. 1 to FIG. 10 or in other embodiments above. When the cutting mechanism 3 is movable relative to the bottom shell 101 in the vertical direction under an external force, under the action of an external force, the cutting mechanism 3 and the inner protecting member 91 may be movable together relative to the bottom shell in the vertical direction.

In another embodiment, the inner protecting member 91 may be the movable protecting member 41 provided with the movable protecting wall 414 in the embodiments shown in FIG. 1 to FIG. 10 or in other embodiments above. The movable protecting member 41 disposed inside the outer protecting member may also be referred to as an inner movable protecting member. The inner movable protecting member is movable in the vertical direction relative to the cutting mechanism 3 under the action of an external force. At any cutting height, when the inner movable protecting member is subjected to the action of an external force, an inner movable protecting wall lower end remains lower than the cutting element lowest point.

On at least one level of cutting height, during movement of the inner movable protecting member in the vertical direction under an external force, the inner movable protecting wall lower end is movable relative to the cutting mechanism in the vertical direction. The autonomous lawn mower 1 further includes a limiting mechanism configured to limit relative positions of the cutting mechanism and the inner movable protecting member. When the inner movable protecting member is limited by the limiting mechanism, the inner movable protecting wall lower end remains lower than the cutting element lowest point. For a specific structure of the movable protecting member 41, reference may be made to other embodiments above. Details are not described again.

Certainly, the outer protecting member 92 may be the movable protecting member 41 in the embodiments shown in FIG. 1 to FIG. 10 or in other embodiments above. The movable protecting member 41 disposed outside the inner protecting member may also be referred to as an outer movable protecting member. A movable protecting wall of the outer movable protecting member may also be referred to as an outer movable protecting wall. The outer protecting member includes the outer movable protecting member provided with the outer movable protecting wall. When the outer movable protecting member is subjected to the action of an external force, a lower end of the outer movable protecting wall is displaceable relative to the bottom shell in the vertical direction, and at any cutting height, when the outer movable protecting member is in the free state, the ground clearance of the lower end of the outer movable protecting wall is less than M.

As shown in FIG. 61, the outer protecting member 92 may be of a two-piece type. Specifically, the outer protecting member 92 includes a fixed protecting member 923 fixed relative to the bottom shell 101 in the vertical direction, and an outer movable protecting member 924 provided with the outer movable protecting wall. When the outer movable protecting member 924 is subjected to the action of an external force, an outer movable protecting wall lower end 9241 is displaceable relative to the bottom shell in the vertical direction. At any cutting height, when the outer movable protecting member is in the free state, the ground clearance of the outer movable protecting wall lower end 9241 is less than M.

The fixed protecting member 923 includes an outer side protecting wall 14 disposed on the housing. The outer side protecting wall 14 is at least disposed in front of the cutting mechanism. The outer movable protecting member 924 includes a rear baffle at least disposed behind the cutting mechanism. In the free state, the ground clearance of the outer protecting member may be 19 mm to 38 mm. A range of a minimum distance between the inner protecting member and the outer protecting member in the horizontal direction may be 2 mm to 30 mm or 2 mm to 8 mm, to avoid mutual interference between the inner protecting member and the outer protecting member during movement. The automatic working system further includes a guide wire. The autonomous lawn mower 1 further includes a guide wire detection module (not shown). The guide wire detection module includes at least one guide wire detection sensor, configured to detect a position relationship between the autonomous lawn mower and the guide wire. The position relationship between the autonomous lawn mower and the guide wire includes: the autonomous lawn mower is located on one of two sides of the guide wire, a distance between the autonomous lawn mower and the guide wire, and the like. In this embodiment, the guide wire includes a boundary wire, defining a working area of the autonomous lawn mower. In another embodiment, the guide wire may be a lead wire arranged in the working area, is lead out from a position of a docking station, and is configured to guide the autonomous lawn mower to move toward the docking station. Certainly, the guide wire may be a physical boundary formed by a fence or the like, or a physical boundary formed between a lawn and a non-lawn. Correspondingly, the guide wire detection sensor may be a camera, a capacitive sensor or the like. In another embodiment, there may be no guide wire. Correspondingly, the working area of the autonomous lawn mower is directly controlled in a manner such as a capacitive sensor or GPS positioning.

A threshold is preset. When power in the energy module is less than the threshold, the control module 50 controls the autonomous lawn mower 1 to move toward the docking station along the boundary wire, to implement that the autonomous lawn mower 1 returns to a charging station to recharge the energy module. In a process of controlling the autonomous lawn mower 1 to move toward the docking station along the boundary wire, the control module 50 controls the autonomous lawn mower 1 to change a distance between the autonomous lawn mower and the boundary wire, and controls the autonomous lawn mower 1 to move by at least a first preset distance in a movement direction parallel to the boundary wire. The foregoing steps are repeated, to implement that the control module 50 controls the autonomous lawn mower 1 to return to the charging station. In another embodiment, the autonomous lawn mower 1 may return to the charging station in another manner. In another embodiment, the autonomous lawn mower 1 may use a preset time or another parameter. When a specified time or another parameter is reached, the control module 50 controls the autonomous lawn mower 1 to return to the charging station for recharging.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The above embodiments only express several implementations of the present invention, which are described specifically and in detail, and therefore cannot be construed as a limitation to the patent scope of the present invention. It should be noted that a person of ordinary skill in the art may further make several variations and improvements without departing from the concept of the present invention, and these variations and improvements all fall within the protection scope of the present invention. Therefore, the protection scope of the patent of the present invention shall be topic to the appended claims.

Some embodiments are disclosed in the following clauses:

1. An autonomous lawn mower, comprising:

a housing, provided with a bottom shell;
a movement module, disposed below the housing, and configured to drive the autonomous lawn mower to move;
a cutting mechanism, disposed at the housing to perform a cutting task at a predetermined cutting height, and comprising a cutting element configured to perform cutting; and
a control module, configured to: autonomously control the movement module to drive the autonomous lawn mower to move, and autonomously control the cutting mechanism to perform a cutting task, wherein
the autonomous lawn mower further comprises a protecting assembly provided with a protecting wall, in a horizontal direction, the protecting wall is disposed on an outer side of the cutting mechanism, the protecting assembly at least comprises a movable protecting member, the protecting wall at least comprises a movable protecting wall that is disposed at the movable protecting member and is located on the outer side of the cutting mechanism in the horizontal direction, when the cutting mechanism is at any cutting height and the movable protecting member is in a free state under no external force, a ground clearance of a lower end of the movable protecting wall is an initial distance, the initial distance remains less than M, 38 mm $\leq$ M $\leq$ 40 mm, and the movable protecting member is movable in a vertical direction relative to the bottom shell under the action of an external force, to change the ground clearance of the lower end of the movable protecting wall.

2. The autonomous lawn mower according to clause 1, wherein when the cutting mechanism is at any cutting height, a range of the initial distance is 15 mm to 35 mm.

3. The autonomous lawn mower according to clause 1, wherein when the cutting mechanism is at any cutting height and the movable protecting member is subjected to the action of an external force, the movable protecting member is movable upward relative to the bottom shell, to increase a ground clearance of the movable protecting wall, and when the external force is removed, the movable protecting member is movable downward relative to the bottom shell, to make the ground clearance of the lower end of the movable protecting wall return to the initial distance.

4. The autonomous lawn mower according to clause 1, wherein during adjustment of a height of the cutting mechanism from the lowest level to the highest level, the cutting mechanism is movable in the vertical direction relative to the movable protecting member.

5. The autonomous lawn mower according to clause 1 or 4, wherein during adjustment of the height of the cutting mechanism, a distance between the lower end of the movable protecting wall and the ground remains unchanged.

6. The autonomous lawn mower according to clause 2, wherein during upward movement of the movable protecting wall under the action of a force, a resistance for the movable protecting wall to move upward when the distance between the lower end of the movable protecting wall and the ground is greater than a preset grass safe lift height, is greater than a resistance for the movable protecting wall to move upward when the distance between the lower end of the movable protecting wall and the ground is less than the preset grass safe lift height.

7. The autonomous lawn mower according to clause 1, wherein the movable protecting wall comprises at least one of a front movable protecting wall disposed in front of the cutting mechanism, a rear movable protecting wall disposed behind the cutting mechanism or a lateral movable protecting wall disposed on two sides of the cutting mechanism.

8. The autonomous lawn mower according to clause 1 or 7, wherein in the horizontal direction, a range of a minimum distance X between an outermost edge of the movable protecting wall and the cutting element is X $\geq$ 58 mm.

9. The autonomous lawn mower according to clause 1, wherein the movable protecting wall comprises a main movable portion, the main movable portion comprises an obstacle passage region located at an outermost edge of the main movable portion, and the obstacle passage region comprises an inclined surface inclining from outside to inside and extending downward.

10. The autonomous lawn mower according to clause 9, wherein the movable protecting wall further comprises a locking portion formed by the main movable portion extending downward, the locking portion comprises a safe locking region located at an outermost edge of the locking portion, a ground clearance of a lower end of the safe locking region is less than M, and the safe locking region is located on an outer side of an extension line of the obstacle passage region in the same radial direction as the safe locking region.

11. The autonomous lawn mower according to clause 1, wherein the movable protecting wall comprises a plurality of blocking protrusions that are disposed at the bottom of the movable protecting wall and are disposed at intervals in a circumferential direction, and when the movable protecting member is in a free state under no external force, a ground of a lower end of each blocking protrusion is greater than or equal to M/2.

12. The autonomous lawn mower according to clause 11, wherein the movable protecting wall further comprises an upper blocking portion connected above the blocking protrusion, an outermost edge of the blocking protrusion and an outer edge of the upper blocking portion do not completely overlap, and a part of the blocking protrusion that does not overlap the outermost edge of the upper blocking portion is located on an inner side of a corresponding part of the outermost edge of the upper blocking portion.

13. The autonomous lawn mower according to clause 11, wherein the blocking protrusion comprises a safe locking region located at an outermost edge of the blocking protrusion, the safe locking region comprises an inclined surface and/or a vertical surface, when the safe locking region is an inclined surface inclining from outside to inside and extending downward, an angle by which the safe locking region inclines inward from a vertical plane in which an outermost end of the safe locking region is located is less than 15 degrees.

14. The autonomous lawn mower according to clause 11, wherein a range of a height h of the blocking protrusion is 0 mm < h $\leq$ 80 mm or 3 mm $\leq$ h $\leq$ 20 mm; a range of the width M of the blocking protrusions is 0 mm < m $\leq$ 40 mm or 0 mm < m $\leq$ 20 mm; and a range of a distance S between two adjacent blocking protrusions is 0 mm < S $\leq$ 40 mm or 3 mm $\leq$ S $\leq$ 25 mm.

15. The autonomous lawn mower according to clause 11, wherein the movable protecting wall further comprises a connecting protrusion that extends in the vertical direction and connects two adjacent blocking protrusions, the connecting protrusion partially concaves inward to make the connecting protrusion and the two adjacent blocking protrusions connected by the connecting protrusion together define a structure that has an interval on an outer side and is closed on an inner side.

16. The autonomous lawn mower according to clause 1, wherein when the cutting mechanism is at any cutting height, a range of the initial distance remains less than or equal to M/2.

17. The autonomous lawn mower according to clause 1, wherein during upward movement of the movable protecting wall under an external force to the highest point of a movable range of the movable protecting wall, a lower end of the blocking wall remains lower than the lowest point of the cutting element.

18. The autonomous lawn mower according to clause 17, wherein the protecting assembly further comprises a mechanism protecting member fixed relative to the cutting mechanism in the vertical direction, the mechanism protecting member comprises a mechanism protecting wall located between the movable protecting wall and the cutting mechanism in the horizontal direction, the blocking wall further comprises the mechanism protecting wall, and a lower end of the mechanism protecting wall remains lower than the lowest point of the cutting element.

19. The autonomous lawn mower according to clause 18, wherein the housing comprises a high position housing located outside the cutting mechanism in the horizontal direction, in a direction from outside to inside and within a range of M extending in a direction perpendicular to the direction from outside to inside, a distance between the high position housing and the ground remains greater than M, and in the horizontal direction, at least a part of the mechanism protecting wall is located between the high position housing and the cutting mechanism.

20. The autonomous lawn mower according to clause 18, wherein the mechanism protecting wall comprises a front mechanism protecting wall located in front of the cutting mechanism, lateral mechanism protecting walls located on two sides of the cutting mechanism, and a rear mechanism protecting wall located behind the cutting mechanism, the front mechanism protecting wall, the rear mechanism protecting wall, and the lateral mechanism protecting walls together define the mechanism protecting wall that is circumferentially closed.

21. The autonomous lawn mower according to clause 20, wherein bottommost portions in the 360-degree circumferential direction of the mechanism protecting wall are all lower than the lowest point of the cutting element.

22. The autonomous lawn mower according to clause 18, wherein a range of a minimum distance between the movable protecting wall and the mechanism protecting wall in the horizontal direction is 2 mm to 30 mm, or 2 mm to 8 mm.

23. The autonomous lawn mower according to clause 17, wherein when the cutting mechanism is at any cutting height and the movable protecting wall moves upward under an external force to the highest point of the movable range of the movable protecting wall, the lower end of the movable protecting wall is lower than the lowest point of the cutting element.

24. The autonomous lawn mower according to clause 23, wherein on at least one level of cutting height, during movement of the movable protecting member in the vertical direction under an external force, the lower end of the movable protecting wall is movable relative to the cutting mechanism in the vertical direction.

25. The autonomous lawn mower according to clause 24, further comprising a limiting structure configured to limit a degree to which the movable protecting member and the cutting mechanism move relatively in the vertical direction.

26. The autonomous lawn mower according to clause 25, wherein the limiting mechanism comprises a cutting limiting portion and a protecting member limiting portion capable of abutting against and limiting each other, the cutting limiting portion and the cutting mechanism are relatively fixed in the vertical direction, the protecting member limiting portion and the movable protecting member are relatively fixed in the vertical direction, and when the cutting limiting portion and the protecting member abut against and limit each other, the cutting limiting portion is located above the protecting member limiting portion.

27. The autonomous lawn mower according to clause 25, wherein in a non-height adjustment state, when the cutting mechanism is subjected to the action of an external force, the cutting mechanism is movable relative to the ground in the vertical direction, and on at least one level of cutting height, during upward movement of the movable protecting member under the external force, the movable protecting member first moves upward separately until the movable protecting member and the cutting mechanism limit each other, and then moves upward together with the cutting mechanism.

28. The autonomous lawn mower according to clause 1, wherein the protecting assembly further comprises a cutting protecting member fixed relative to the cutting mechanism in the vertical direction, in the horizontal direction, the cutting protecting member is disposed in the movable protecting member, a lower end of the cutting protecting member is lower than the lowest point of the cutting element, and in a non-height adjustment state, the cutting protecting member is movable relative to the bottom shell in the vertical direction together with the cutting mechanism under the action of an external force.

29. The autonomous lawn mower according to clause 28, wherein the cutting mechanism comprises a cutting deck configured to fix the cutting element, the cutting protecting member comprises a cutting deck protecting member that is disposed below the cutting deck and is disposed around a central cavity, and a lower end of the cutting deck protecting member is lower than the lowest point of the cutting element.

30. The autonomous lawn mower according to clause 1, further comprising a bendable flexible blocking member disposed at a bottom side of the housing, wherein in an advancing direction of the self-moving device, the blocking member is located on a front side and/or a rear side of the movement module, the blocking member comprises a housing end fixed on the bottom side of the housing and a free end movable relative to the housing end under the action of an external force, the housing end and the movement module are disposed at intervals, and the free end is capable of abutting against and contacting the movement module under the action of an external force.

31. The autonomous lawn mower according to clause 1, wherein the autonomous lawn mower further comprises a cutting deck configured to mount the cutting element, and the cutting element is disposed above the cutting deck.

32. The autonomous lawn mower according to clause 1, wherein during move of the autonomous lawn mower, when the movable protecting wall is subjected to the action of a force from outside to inside, a distance between the lower end of the movable protecting wall and the ground may be greater than or equal to M, wherein 38 mm ≤ M ≤ 40 mm.

33. The autonomous lawn mower according to clause 1 or 32, wherein a distance range of movement of the lower end of the movable protecting wall in the vertical direction is 15 mm to 80 mm or 20 mm to 40 mm.

34. The autonomous lawn mower according to clause 1, wherein the movable protecting wall comprises a grass grinding end surface that is located at the lower end of the movable protecting wall and continuously extends in a circumferential direction.

35. The autonomous lawn mower according to clause 1, wherein the movable protecting wall comprises a vertical protecting wall extending in the vertical direction and a horizontal protecting wall that is located below the vertical protecting wall and extends in the horizontal direction, and at least one side of the horizontal protecting wall in a horizontal inside-outside direction protrudes from a corresponding side of the vertical protecting wall.

36. The autonomous lawn mower according to clause 1, wherein the autonomous lawn mower further comprises a protecting member upward guide mechanism configured to connect the movable protecting member and the housing, and when the movable protecting member is subjected to the action of a force from outside to inside, the protecting member upward guide mechanism allows the movable protecting wall to move upward.

37. The autonomous lawn mower according to clause 36, wherein the upward guide mechanism comprises at least one of a four-bar linkage, a two-bar linkage, a single-bar linkage or a chute.

38. The autonomous lawn mower according to clause 36, wherein the autonomous lawn mower further comprises a cutting upward guide mechanism configured to connect the cutting mechanism and the housing.

39. The autonomous lawn mower according to clause 36, wherein the movable protecting member comprises an upper protecting member and a lower protecting member, and when the lower protecting member is subjected to the action of an external force, the lower protecting member is movable relative to the upper protecting member in the vertical direction.

40. The autonomous lawn mower according to clause 1, wherein the movable protecting member is disposed on an outer side of the housing and/or disposed between the cutting mechanism and the housing and/or is connected to a local portion of the housing.

41. The autonomous lawn mower according to clause 1, wherein the movable protecting wall comprises a front movable protecting wall disposed in front of the cutting mechanism, the protecting assembly further comprises a rear movable protecting member provided with a rear movable protecting wall, the rear movable protecting wall is disposed behind the cutting mechanism, and when the rear movable protecting member is subjected to the action of an external force, a lower end of the rear movable protecting wall is relatively displaceable relative to the ground in the vertical direction.

42. The autonomous lawn mower according to clause 41, wherein under the action of an external force, the movable protecting member and the rear movable protecting member are relatively independently movable.

43. The autonomous lawn mower according to clause 40 or 41, wherein the rear movable protecting member comprises a baffle with an end fixed to the housing, and the baffle comprises a fixed end fixed to the housing and a movable end rotatable around the fixed end under an external force.

44. The autonomous lawn mower according to clause 40 or 41, wherein when the front movable protecting member is subjected to a vertically upward force, the front movable protecting member is movable in the vertical direction; and when the rear movable protecting member is subjected to a vertically upward force, the rear movable protecting member is not movable in the vertical direction.

45. The autonomous lawn mower according to clause 40 or 41, wherein the movable protecting wall further comprises lateral movable protecting walls disposed on two sides of the autonomous lawn mower, and the front movable protecting wall and the lateral movable protecting walls are connected to each other, so that the lateral movable protecting walls and the front movable protecting wall are synchronously movable in the vertical direction under the action of an external force.

## Claims

1. An autonomous lawn mower (1), comprising:

   a housing (10), provided with a bottom shell (101);
   a movement module (20), disposed below the housing (10), and configured to drive the autonomous lawn mower (1) to move;
   a cutting mechanism (3), disposed at the housing (10) to perform a cutting task at a predetermined cutting height, and comprising a cutting element (32) configured to perform cutting; and
   a control module (50), configured to: autonomously control the movement module (20) to drive the autonomous lawn mower (1) to move, and autonomously control the cutting mechanism (3) to perform a cutting task, wherein
   the autonomous lawn mower (1) further comprises a protecting assembly (4) provided with a protecting wall (40), in a horizontal direction, the protecting wall (40) is disposed on an outer side of the cutting mechanism (3), the protecting assembly (4) at least comprises a movable protecting member (41), the protecting wall (40) at least comprises a movable protecting wall (414) that is disposed at the movable protecting member (41) and is located on the outer side of the cutting mechanism (3) in the horizontal direction, when the cutting mechanism (3) is at any cutting height and the movable protecting member (41) is in a free state under no external force, a ground clearance of a lower end of the movable protecting wall (414) is an initial distance, the initial distance remains less than M, wherein M satisfies 38 mm ≤ M ≤ 40 mm, and the movable protecting member (41) is movable in a vertical direction relative to the bottom shell (101) under the action of an external force, to change the ground clearance of the lower end of the movable protecting wall (414), wherein
   the movable protecting wall (414) comprises a main movable portion (401), the main movable portion (401) comprises an obstacle passage region (4135) located at an outermost edge of the main movable portion (401), and the obstacle passage region (4135) comprises an inclined surface inclining from outside to inside and extending downward, or wherein

   the movable protecting wall (414) comprises a plurality of blocking protrusions (4021) that are disposed at the bottom of the movable protecting wall (414) and are disposed at intervals in a circumferential direction, and when the movable protecting member (41) is in a free state under no external force, a ground of a lower end of each blocking protrusion (4021) is greater than or equal to M/2.

2. The autonomous lawn mower (1) according to claim 1, wherein the movable protecting wall (414) comprises the main movable portion (401), the main movable portion (401) comprises the obstacle passage region (4135) located at the outermost edge of the main movable portion (401), and the obstacle passage region (4135) comprises the inclined surface inclining from outside to inside and extending downward, and
   wherein the movable protecting wall (414) further comprises a locking portion (402) formed by the main movable portion (401) extending downward, the locking portion (402) comprises a safe locking region (4136) located at an outermost edge of the locking portion (402), a ground clearance of a lower end of the safe locking region (4136) is less than M, and the safe locking region (4136) is located on an outer side of an extension line of the obstacle passage region (4135) in the same radial direction as the safe locking region (4136).

3. The autonomous lawn mower (1) according to claim 1, wherein the movable protecting wall (414) comprises the plurality of blocking protrusions (4021) that are disposed at the bottom of the movable protecting wall (414) and are disposed at intervals in a circumferential direction, and when the movable protecting member (41) is in a free state under no external force, a ground of a lower end of each blocking protrusion (4021) is greater than or equal to M/2, and
   wherein the movable protecting wall (414) further comprises an upper blocking portion (401,4022) connected above the blocking protrusion (4021), an outermost edge of the blocking protrusion (4021) and an outer edge of the upper blocking portion (401,4022) do not completely overlap, and a part of the blocking protrusion (4021) that does not overlap the outermost edge of the upper blocking portion (401,4022) is located on an inner side of a corresponding part of the outermost edge of the upper blocking portion (401,4022).

4. The autonomous lawn mower (1) according to claim 1, wherein the movable protecting wall (414) comprises the plurality of blocking protrusions (4021) that are disposed at the bottom of the movable protecting wall (414) and are disposed at intervals in a circumferential direction, and when the movable protecting member (41) is in a free state under no external force, a ground of a lower end of each blocking protrusion (4021) is greater than or equal to M/2, and wherein the blocking protrusion (4021) comprises a safe locking region (4136) located at an outermost edge of the blocking protrusion (4021), the safe locking region (4136) comprises an inclined surface and/or a vertical surface, when the safe locking region (4136) is an inclined surface inclining from outside to inside and extending downward, an angle by which the safe locking region (4136) inclines inward from a vertical plane in which an outermost end of the safe locking region (4136) is located is less than 15 degrees.

5. The autonomous lawn mower (1) according to claim 1, wherein the movable protecting wall (414) comprises the plurality of blocking protrusions (4021) that are disposed at the bottom of the movable protecting wall (414) and are disposed at intervals in a circumferential direction, and when the movable protecting member (41) is in a free state under no external force, a ground of a lower end of each blocking protrusion (4021) is greater than or equal to M/2, and wherein a range of a height h of the blocking protrusion (4021) is $0\,mm < h \le 80\,mm$ or $3\,mm \le h \le 20\,mm$; a range of the width M of the blocking protrusion (4021) is $0\,mm < m \le 40\,mm$ or $0\,mm < m \le 20\,mm$; and a range of a distance S between two adjacent blocking protrusions (4021) is $0\,mm < S \le 40\,mm$ or $3\,mm \le S \le 25\,mm$.

6. The autonomous lawn mower (1) according to claim 1, wherein the movable protecting wall (414) comprises a plurality of blocking protrusions (4021) that are disposed at the bottom of the movable protecting wall (414) and are disposed at intervals in a circumferential direction, and when the movable protecting member (41) is in a free state under no external force, a ground of a lower end of each blocking protrusion (4021) is greater than or equal to M/2, and wherein the movable protecting wall (414) further comprises a connecting protrusion (4023) that extends in the vertical direction and connects two adjacent blocking protrusions (4021), the connecting protrusion (4023) partially concaves inward to make the connecting protrusion (4023) and the two adjacent blocking protrusions (4021) connected by the connecting protrusion (4023) together define a structure that has an interval on an outer side and is closed on an inner side.

7. The autonomous lawn mower (1) according to claim 1, wherein the movable protecting wall (414) comprises at least one of a front movable protecting wall (4141) disposed in front of the cutting mechanism (3), a rear movable protecting wall (4143) disposed behind the cutting mechanism (3) or a lateral movable protecting wall (4142) disposed on two sides of the cutting mechanism (3).

8. The autonomous lawn mower (1) according to claim 1 or 7, wherein in the horizontal direction, a range of a minimum distance X between an outermost edge of the movable protecting wall (414) and the cutting element (32) is $X \ge 58\,mm$.

9. The autonomous lawn mower (1) according to claim 1, wherein when the cutting mechanism (3) is at any cutting height, a range of the initial distance is 15 mm to 35 mm.

10. The autonomous lawn mower (1) according to claim 9, wherein during upward movement of the movable protecting wall (414) under the action of a force, a resistance for the movable protecting wall (414) to move upward when the distance between the lower end of the movable protecting wall (414) and the ground is greater than a preset grass safe lift height is greater than a resistance for the movable protecting wall (414) to move upward when the distance between the lower end of the movable protecting wall (414) and the ground is less than the preset grass safe lift height.

11. The autonomous lawn mower (1) according to claim 1, wherein during adjustment of a height of the cutting mechanism (3) from the lowest level to the highest level, the cutting mechanism (3) is movable in the vertical direction relative to the movable protecting member (41).

12. The autonomous lawn mower (1) according to claim 1, wherein during upward movement of the movable protecting wall (414) under an external force to the highest point of a movable range of the movable protecting wall (414), a lower end of the blocking wall (40) remains lower than the lowest point of the cutting element (32).

13. The autonomous lawn mower (1) according to claim 1, wherein the protecting assembly (4) further comprises a cutting protecting member (305) fixed relative to the cutting mechanism (3) in the vertical direction, in the horizontal direction, the cutting protecting member (305) is disposed in the movable protecting member (41), a lower end of the cutting protecting member (305) is lower than the lowest point of the cutting element (32).

14. The autonomous lawn mower (1) according to claim 13, wherein in a non-height adjustment state, the cutting protecting member is movable relative to the bottom shell in the vertical direction together with the cutting mechanism under the action of an external force.

**EP 4 659 561 A2**

**15.** The autonomous lawn mower (1) according to claim 1, wherein the movable protecting member is disposed on an outer side of the housing and/or disposed between the cutting mechanism and the housing and/or is connected to a local portion of the housing.

FIG. 1

FIG. 2

FIG. 3

FIG. 4

Advancing direction

FIG. 5

Advancing direction

FIG. 6

FIG. 7

FIG. 8

FIG. 9

Advancing direction

EP 4 659 561 A2

FIG. 10

FIG. 11

FIG. 12

Reversing direction

FIG. 13

Reversing direction

FIG. 14

Reversing direction

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

FIG. 36

FIG. 37

FIG. 38

41

FIG. 39

4147

FIG. 40

FIG. 41

FIG. 42

FIG. 43

FIG. 44

FIG. 45

FIG. 46

FIG. 47

FIG. 48

FIG. 49

FIG. 50

FIG. 51

FIG. 52

FIG. 53

FIG. 54

FIG. 55

FIG. 56

FIG. 57

FIG. 58

FIG. 59

FIG. 60

FIG. 61

**EP 4 659 561 A2**

**Patent documents cited in the description**

- CN 201910523837
- CN 202010307394
- CN 201921884636